# EUROPEAN PATENT APPLICATION

(11) **EP 4 556 978 A1**
(43) Date of publication of application: **21.05.2025**
(21) Application number: 23839808.5
(22) Date of filing: 07.06.2023
(51) Int. Cl.: G02B 7/09, H02K 33/18, G03B 17/12, G03B 13/36, G03B 3/10, G03B 30/00, G02B 5/02, G02B 5/04, G03B 5/02

(54) **LENS DRIVING DEVICE, CAMERA DEVICE AND OPTICAL DEVICE**

(30) Priority: 15.07.2022 KR 20220087509; 20.09.2022 KR 20220118228; 29.09.2022 KR 20220124541
(71) Applicant: LG INNOTEK CO. LTD, Gangseo-gu Seoul 07796 (KR)
(72) Inventor: NOH, Yun Ho, Seoul 07796 (KR); PARK, Tae Bong, Seoul 07796 (KR); LEE, Jun Taek, Seoul 07796 (KR)
(74) Representative: DREISS Patentanwälte PartG mbB
(86) International application number: PCT/KR2023/007780
(87) International publication number: WO 2024/014714

(57) **Abstract**

A first embodiment of the present invention relates to a lens driving device comprising: a base; a first holder arranged in the base; a second holder arranged in the first holder; first to third magnets arranged in the base; a first coil which is arranged in the first holder and which interacts with the first magnet; a second coil which is arranged in the second holder and which interacts with the second magnet; and a third coil which is arranged in the second holder and which interacts with the third magnet.

## Description

### [Technical Field]

The present embodiment relates to a lens driving device, a camera device, and an optical device.

### [Background Art]

A camera device is a device that photographs a picture or video of a subject, and is installed in optical devices such as smartphones, drones, and vehicles.

An auto-focus function that automatically adjusts the focus according to the distance of the subject is applied to the camera device. In addition, a handshake correction function is applied to prevent a phenomenon in which the focus is shaken by the user's handshake.

The autofocus function and the shake correction function may be performed through electromagnetic interaction between the magnet and the coil.

However, in the conventional lens driving device, a magnet that does not require electrical connection is disposed in the moving unit and the coil is disposed in the fixed unit. In this case, there is a problem in that a magnet having a greater weight than a coil is disposed in the moving unit, thereby increasing current consumption.

In particular, recently, as image sensors become more pixelated, the lens diameter has increased, and the weight of the lens has also increased, which has exacerbated the problem.

In addition, in conventional lens driving devices, there is a problem in that the height of the camera device in an optical axis direction increases because the guide structure for OIS-x-axis driving and the guide structure for OIS-y-axis driving are disposed in separate layers.
(Patent Literature 1) KR 10-2015-0118005 A

### [Detailed Description of the Invention]

### [Technical Subject]

The present embodiment is intended to provide a lens driving device in which power consumption for performing an autofocus function and an image stabilization function is reduced by arranging a coil that is lightweight compared to a magnet in a moving unit.

In addition, the present invention is intended to provide a lens driving device having a minimized height in an optical axis direction by forming a guide structure for OIS-x-axis driving and a guide structure for OIS-y-axis driving as one body.

### [Technical Solution]

A lens driving device according to a first embodiment of the present invention may comprises: a base; a first holder being disposed inside the base; a second holder being disposed in the first holder; first to third magnets being disposed in the base; a first coil being disposed in the first holder and interacting with the first magnet; a second coil being disposed in the second holder and interacting with the second magnet; and a third coil being disposed in the second holder and interacting with the third magnet.

By the interaction between the first coil and the first magnet, the first holder moves in the optical axis direction, by the interaction between the second coil and the second magnet, the second holder moves in a first direction perpendicular to the optical axis direction, and by the interaction between the third coil and the third magnet, the second holder can move in a second direction perpendicular to both the optical axis direction and the first direction.

The second holder can move in the optical axis direction together with the first holder by the interaction between the first coil and the first magnet.

The base may comprise a first side portion and a second side portion being disposed opposite to each other, and a third side portion and a fourth side portion being disposed opposite to each other, and the first magnet may be disposed in the first side portion of the base, the second magnet may be disposed in the second side portion of the base, and the third magnet may be disposed in the third side portion of the base.

The second holder may comprise a first side surface and a second side surface being disposed opposite to each other, and a third side surface and a fourth side surface being disposed opposite to each other, the first coil may be disposed between the first side surface of the second holder and the first magnet, the second coil may be disposed between the second side surface of the second holder and the second magnet, and the third coil may be disposed between the third side surface of the second holder and the third magnet.

It comprises a first substrate comprising a first portion being disposed in the first holder, a second portion being disposed on the second side surface of the second holder, and a third portion being disposed on the third side surface of the second holder, wherein the first coil is disposed in the first portion of the first substrate, wherein the second coil is disposed in the second portion of the first substrate, and wherein the third coil may be disposed in the third portion of the first substrate.

The first substrate comprises a fourth portion being disposed between the fourth side surface of the second holder and the first holder, and the fourth portion of the first substrate may comprise a terminal.

The lens driving device comprises a second substrate being disposed on the base, the second substrate comprising a body portion being disposed on the base and an extended portion being extended from the body portion, wherein the extended portion comprises a first terminal being coupled to the terminal of the first substrate, wherein the body portion comprises a second terminal being electrically connected to the first terminal, and wherein at least a portion of the extended portion can move together with the first holder.

The lens driving device may comprise a first ball being disposed between the base and the first holder.

The lens driving device comprises a yoke being disposed in the first portion of the first substrate and generating an attractive force with the first magnet.

The lens driving device may comprise a second ball being disposed between the first holder and the second holder.

The lens driving device comprises a first elastic member being disposed on an upper surface of the second holder; a second elastic member being disposed on a lower surface of the first holder; and a third elastic member connecting the first elastic member and the second elastic member, wherein the first holder comprises a body portion and a pressing portion being coupled to the upper surface of the body portion, wherein the second elastic member is disposed on the lower surface of the body portion, and wherein the second ball can be disposed between the pressing portion of the first holder and the second holder.

The second ball can guide the second holder to move in a first direction and a second direction perpendicular to the optical axis direction with respect to the first holder.

The lens driving device may comprise: a first sensor being disposed in the first portion of the first substrate and detecting the first magnet; a second sensor being disposed in the second portion of the first substrate and detecting the second magnet; and a third sensor being disposed in the third portion of the first substrate and detecting the third magnet.

A camera device according to a first embodiment of the present invention may comprise a printed circuit board; an image sensor being disposed on the printed circuit board; a lens driving device being disposed on the printed circuit board; and a lens being coupled to the lens driving device.

An optical device according to a first embodiment of the present invention may comprise: a main body; a camera device being disposed in the main body; and a display being disposed in the main body and outputting at least one of an image and a video photographed by the camera device.

A lens driving device according to a second embodiment of the present invention may comprise: a fixed unit; a first moving unit being disposed inside the fixed unit; a second moving unit being disposed inside the first moving unit; a first driving unit that moves the first moving unit in an optical axis direction; a second driving unit that moves the second moving unit in a first direction perpendicular to the optical axis direction; a third driving unit that moves the second moving unit in a second direction perpendicular to the optical axis direction and the first direction; a first ball being disposed between the first moving unit and the second moving unit so as to be overlapped with the first moving unit and the second moving unit in the optical axis direction; a wire being disposed parallel to the optical axis direction; a first elastic member connecting a first region of the wire and the first moving unit; and a second elastic member connecting a second region of the wire and the second moving unit.

The second region of the above wire can be disposed higher than the first region.

The first moving unit comprises a top plate disposed higher than the second moving unit, and the first ball may be disposed between the upper plate of the first moving unit and the second moving unit.

The first elastic member comprises an outer portion being coupled with the first moving unit, the second elastic member comprises an inner portion being coupled with the second moving unit, and in the optical axis direction, the distance between the first region and the second region of the wire may be longer than a distance between the outer portion of the first elastic member and the inner portion of the second elastic member.

The first elastic member comprises: an outer portion being coupled with the first moving unit; a coupling portion being coupled with the wire; and a connecting portion connecting the outer portion and the coupling portion, wherein the coupling portion of the first elastic member can be disposed lower than the outer portion of the first elastic member.

The second elastic member comprises: an inner portion being coupled with the second moving unit; a coupling portion being coupled with the wire; and a connecting portion connecting the inner portion and the coupling portion, wherein the coupling portion of the second elastic member can be disposed higher than the inner portion of the second elastic member.

When viewed from above, the first ball can be disposed inside a space being formed by the inner portion, the coupling portion, and the connecting portion of the second elastic member.

The second moving unit comprises a first protrusion and a second protrusion being formed on an upper surface of the second moving unit; the inner portion of the second elastic member comprises a first region being coupled with the first protrusion and a second region being coupled with the second protrusion; the wire comprises a first wire being disposed at a first corner region of the fixed unit; the coupling portion of the second elastic member comprises a first coupling portion being coupled with the first wire; and the connecting portion of the second elastic member may comprise a first connecting portion connecting the first region of the inner portion and the first coupling portion, and a second connecting portion connecting the second region of the inner portion and the first coupling portion.

The coupling portion of the first elastic member comprises a first coupling portion coupled with the first wire; and the connecting portion of the first elastic member comprises a first connecting portion and a second connecting portion connecting the outer portion of the first elastic member and the first coupling portion of the first elastic member; and when viewed from below, the first and second connecting portions of the first elastic member may be symmetrical with respect to an imaginary straight line connecting an optical axis and the first corner region of the fixed unit.

The wires comprises first to fourth wires respectively disposed in first to fourth corner regions of the fixed unit; the first elastic member comprises first to fourth elastic units corresponding to the first to fourth wires; the first to fourth elastic units are spaced apart from one another; and the second elastic member can be formed integrally.

The first driving unit comprises a first coil disposed in the first moving unit and a first magnet disposed in the fixed unit, and the second driving unit may comprise a second coil disposed in the second moving unit and a second magnet disposed in the fixed unit.

The third driving unit may comprise a third coil being disposed in the second moving unit and a third magnet being disposed the fixed unit.

It comprises: a first substrate comprising a first portion being disposed in the first moving unit; a second portion being disposed on the first side surface of the second moving unit; and a third portion being disposed on the second side surface of the second moving unit, wherein the first coil is disposed in the first portion of the first substrate, the second coil is disposed in the second portion of the first substrate, and the third coil may be disposed in the third portion of the first substrate.

It comprises a body portion being disposed on the fixed unit and a second substrate comprising an extended portion being extended from the body portion, wherein the extended portion comprises a terminal being coupled to a terminal of the first substrate, and wherein at least a portion of the extended portion can move together with the first moving unit.

A camera device according to a second embodiment of the present invention may comprise: a printed circuit board; an image sensor being disposed on the printed circuit board; the lens driving device being disposed on the printed circuit board; and a lens being coupled to the lens driving device.

An optical device according to a second embodiment of the present invention may comprise: a main body; the camera device being disposed in the main body; and a display being disposed in the main body and outputting at least one of an image and a video photographed by the camera device.

A lens driving device according to a third embodiment of the present invention comprises: a fixed unit; a first moving unit being disposed inside the fixed unit; a second moving unit being disposed inside the first moving unit; a first driving unit that moves the first moving unit in an optical axis direction; a second driving unit that moves the second moving unit in a first direction perpendicular to the optical axis direction; a third driving unit that moves the second moving unit in a second direction perpendicular to the optical axis direction and the first direction; a ball being disposed between the fixed unit and the first moving unit; and an elastic member that connects the first moving unit and the second moving unit, wherein the first driving unit may comprise a first coil being disposed in the first moving unit and a first magnet being disposed in the fixed unit.

The above ball may not be overlapped with the second moving unit in the optical axis direction.

The elastic member may comprise a first elastic member being coupled with the first moving unit, a second elastic member being coupled with the second moving unit, and a wire connecting the first elastic member and the second elastic member.

The first elastic member may comprise an outer portion being coupled with the first moving unit, a coupling portion being coupled with the wire, and a connecting portion connecting the outer portion and the coupling portion.

The outer portion of the first elastic member and the coupling portion of the first elastic member can be disposed at the same height.

The second elastic member may comprise an inner portion being coupled with the second moving unit, a coupling portion being coupled with the wire, and a connecting portion connecting the inner portion and the coupling portion of the second elastic member.

The inner portion of the second elastic member and the coupling portion of the first elastic member can be disposed at the same height.

The second driving unit may comprise a second coil being disposed in the second moving unit and a second magnet being disposed in the fixed unit.

The third driving unit may comprise a third coil being disposed in the second moving unit and a third magnet being disposed in the fixed unit.

It comprises: a first substrate comprising a first portion being disposed on the first moving unit; a second portion being disposed on a first side surface of the second moving unit; and a third portion being disposed on a second side surface of the second moving unit, wherein the first coil is disposed on the first portion of the first substrate, the second coil is disposed on the second portion of the first substrate, and the third coil may be disposed on the third portion of the first substrate.

It comprises a second substrate comprising a body portion being disposed on the fixed unit and an extended portion being extended from the body portion, wherein the extended portion comprises a terminal being coupled to a terminal of the first substrate, and wherein at least a portion of the extended portion may move together with the first moving unit.

The ball guides the first moving unit to move in the optical axis direction against the fixed unit, and the elastic member can guide the second moving unit to move in the first direction and the second direction against the first moving unit.

It may comprise a yoke being disposed between the first coil and the first moving unit and having an attractive force with the first magnet.

A camera device according to a third embodiment of the present invention may comprise: a printed circuit board; an image sensor being disposed on the printed circuit board; the lens driving device being disposed on the printed circuit board; and a lens being coupled to the lens driving device.

An optical device according to a third embodiment of the present invention may comprise: a main body; a camera device being disposed in the main body; and a display being disposed in the main body and outputting at least one of an image and a video photographed by the camera device.

### [Advantageous Effects]

Through the present embodiment, since a coil that is lighter in weight than the magnet is disposed in the moving unit, the current consumption for performing the auto focus function and the shake correction function can be reduced.

In addition, since the guide structure for OIS-x-axis driving and the guide structure for OIS-y-axis driving are formed integrally, the height of the lens driving device in an optical axis direction can be minimized.

Accordingly, the height at which the camera device is protruded from the smartphone can be minimized.

In addition, the OIS guide structure of a second embodiment of the present invention can maintain the OIS guide ball in a close state without a separate preload member.

### [Brief Description of Drawings]

FIG. 1 is a conceptual diagram of a lens driving device according to a first embodiment of the present invention.
FIG. 2 is a perspective view of a lens driving device according to a first embodiment of the present invention.
FIG. 3 is a cross-sectional view taken along line A-A of FIG. 2.
FIG. 4 is a cross-sectional view taken along line B-B of FIG. 2.
FIG. 5 is an exploded perspective view of a lens driving device according to a first embodiment of the present invention.
FIG. 6 is a perspective view of a lens driving device according to a first embodiment of the present invention with a cover removed.
FIG. 7 is an enlarged view illustrating an enlarged portion of FIG. 6.
FIG. 8 is a perspective view of a lens driving device in a state of FIG. 6 viewed from a different direction from FIG. 6.
FIG. 9 is a perspective view of a lens driving device according to a first embodiment of the present invention with a fixed unit and some components omitted.
FIG. 10 is a bottom perspective view of a moving unit of a lens driving device according to a first embodiment of the present invention.
FIG. 11 is a bottom perspective view of a moving unit and related components of a lens driving device according to a first embodiment of the present invention with a cover removed.
FIG. 12 is a perspective view illustrating a base and a second substrate of a lens driving device according to a first embodiment of the present invention.
FIG. 13 is a perspective view illustrating a moving unit and a second substrate of a lens driving device according to a first embodiment of the present invention.
FIG. 14 is a bottom perspective view of a lens driving device of FIG. 13 from a different direction than FIG. 13.
FIG. 15 is a bottom perspective view of a lens driving device of FIG. 14 with a cover and a second substrate removed.
FIG. 16 is a bottom perspective view of a lens driving device of FIG. 15 with a first holder removed.
FIG. 17 is a bottom perspective view of a lens driving device of FIG. 16.
FIG. 18 is a plan view of a lens driving device according to a first embodiment of the present invention with a cover and a pressing portion of a first holder removed.
FIG. 19 is a perspective view illustrating a second moving unit and a substrate and related configuration of a lens driving device according to a first embodiment of the present invention.
FIG. 20 is a bottom view and a partially enlarged view of a lens driving device in a state of FIG. 19.
FIG. 21 is a perspective view of a first holder and a second substrate and related component of a lens driving device according to a first embodiment of the present invention.
FIG. 22 is a bottom perspective view illustrating a driving unit, substrate, elastic member, and the like of a lens driving device according to a first embodiment of the present invention.
FIG. 23 is a plan view illustrating a driving unit, substrate, and elastic member of a lens driving device according to a first embodiment of the present invention.
FIG. 24 is a perspective view illustrating a first substrate and a coil of a lens driving device according to a first embodiment of the present invention.
FIG. 25 is a perspective view illustrating a second substrate of a lens driving device according to a first embodiment of the present invention.
FIG. 26 is a cross-sectional perspective view of a lens driving device according to a first embodiment of the present invention with a pressing portion of a first holder removed.
FIG. 27 is a cross-sectional perspective view of FIG. 26 with a pressing portion of a first holder, and the like added.

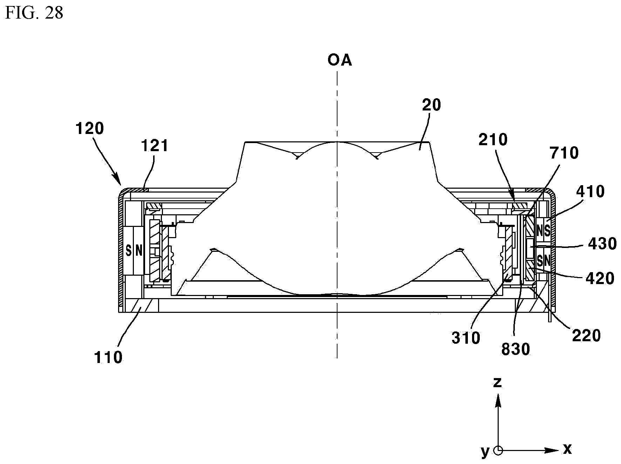

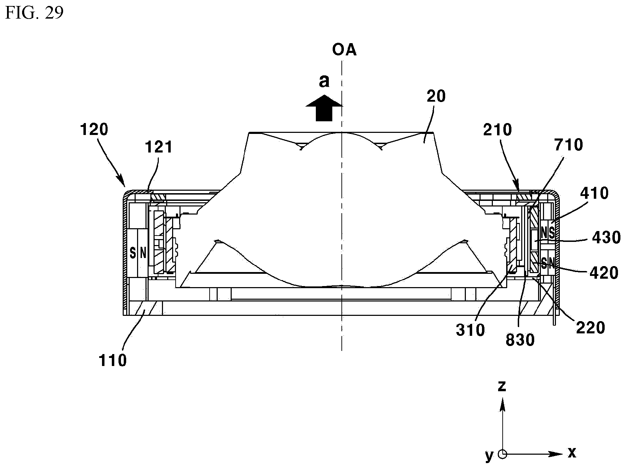

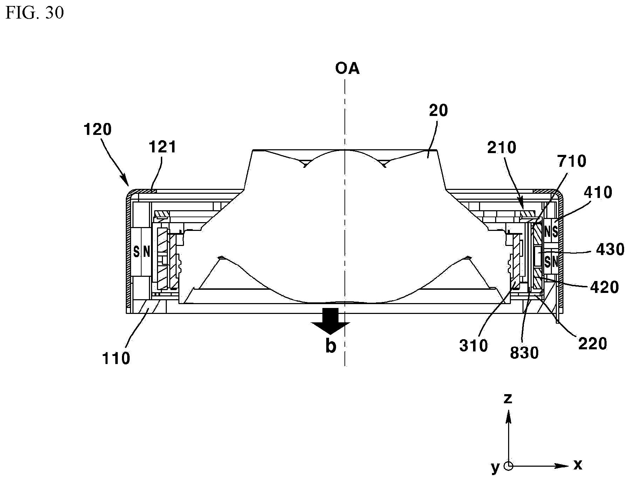

FIGS. 28 to 30 are diagrams for explaining an auto focus driving of a lens driving device according to a first embodiment of the present invention. FIG. 28 is a cross-sectional view illustrating an appearance of a moving unit in an initial state where no current is applied to a first coil. FIG. 29 is a cross-sectional view illustrating an appearance where a moving unit moves upward in an optical axis direction when a forward current is applied to a first coil. FIG. 30 is a cross-sectional view illustrating an appearance where a moving unit moves downward in an optical axis direction when a reverse current is applied to a first coil.

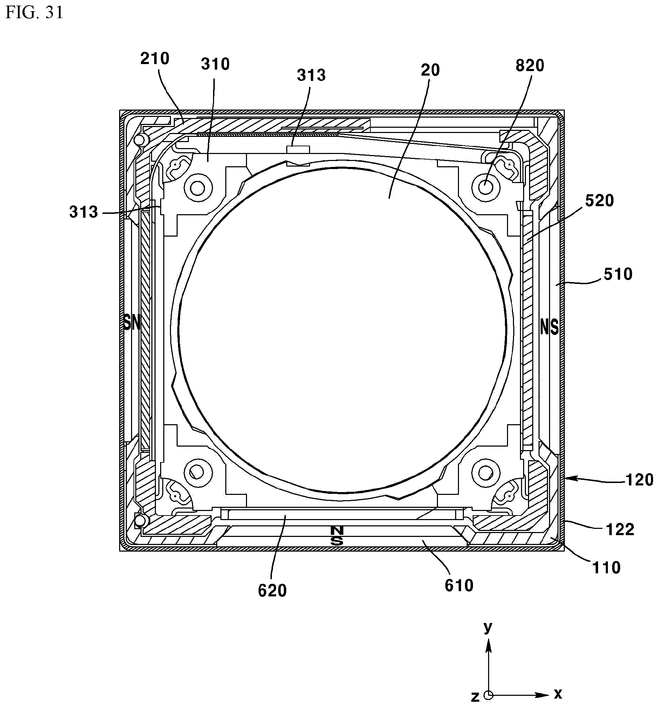

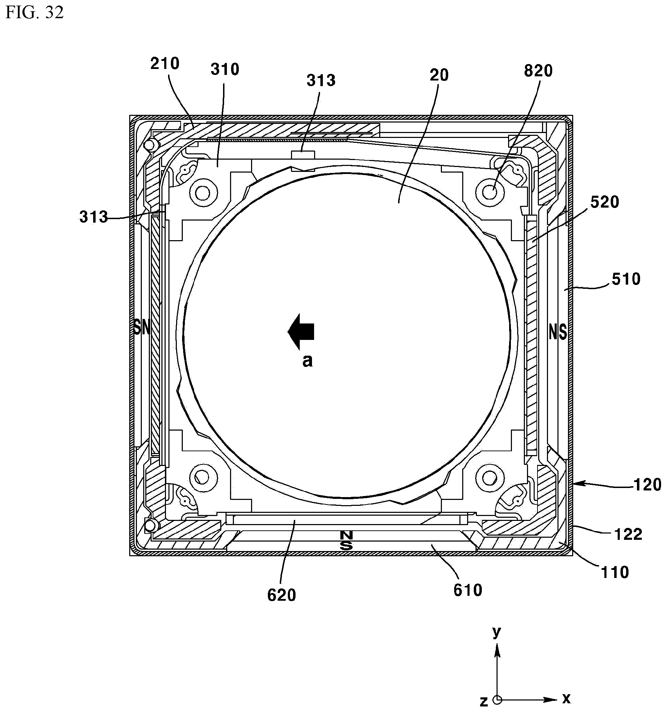

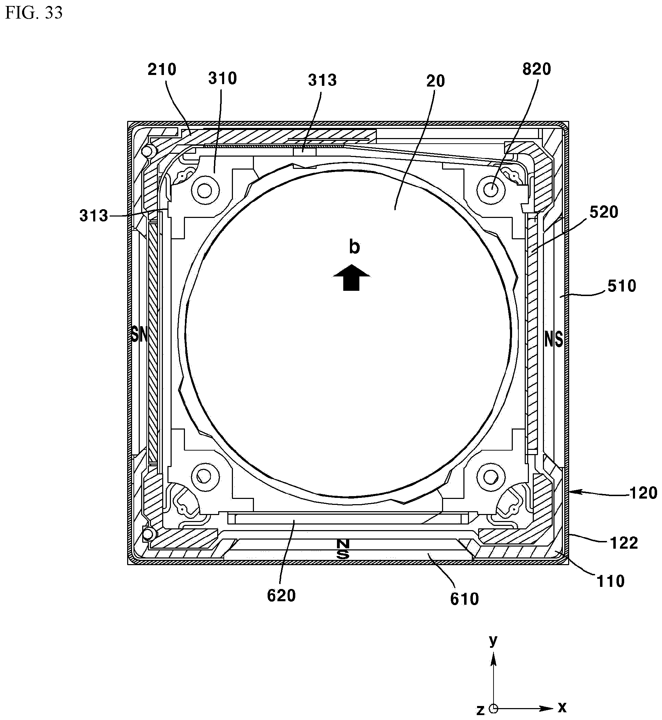

FIGS. 31 to 33 are drawings for explaining a shake correction driving of a lens driving device according to a first embodiment of the present invention. FIG. 31 is a cross-sectional view illustrating an appearance of a moving unit in an initial state where no current is applied to a second coil and a third coil. FIG. 32 is a cross-sectional view illustrating an appearance where a second moving unit moves in an x-axis direction perpendicular to an optical axis when current is applied to a second coil. FIG. 33 is a cross-sectional view illustrating an appearance where a second moving unit moves in a y-axis direction perpendicular to both an optical axis and a x-axis when current is applied to a third coil.
FIG. 34 is an exploded perspective view of a camera device according to a first embodiment of the present invention.
FIG. 35 is a perspective view of an optical device according to a first embodiment of the present invention.
FIG. 36 is a perspective view of an optical device according to a modified embodiment.
FIG. 37 is a conceptual diagram of a lens driving device according to a second embodiment of the present invention.
FIG. 38 is a perspective view of a lens driving device according to a second embodiment of the present invention.
FIG. 39 is a cross-sectional view taken along line A-A of FIG. 38.
FIG. 40 is a cross-sectional view taken along line B-B of FIG. 38.
FIG. 41 is a cross-sectional view taken along line C-C of FIG. 38.
FIG. 42 is a cross-sectional view taken from above, cut perpendicular to the optical axis, of a lens driving device according to a second embodiment of the present invention.
FIG. 43 is an exploded perspective view of a lens driving device according to a second embodiment of the present invention.
FIG. 44 is a perspective view of a lens driving device according to a second embodiment of the present invention with the cover removed.
FIG. 45 is an enlarged view illustrating a portion of FIG. 44.
FIG. 46a is a perspective view of FIG. 44 viewed from another direction.
FIG. 46b is a perspective view illustrating a state in which the metal member of the AF moving unit is omitted in FIG. 46.
FIG. 47 is a perspective view illustrating a fixed unit and related components of a lens driving device according to a second embodiment of the present invention.
FIG. 48 is a perspective view illustrating a moving unit and related components of a lens driving device according to a second embodiment of the present invention.
FIG. 49 is a front view of FIG. 48 as seen from the front.
FIG. 50 is a cross-sectional perspective view illustrating an AF guide ball and related component of a lens driving device according to a second embodiment of the present invention.
FIG. 51 is a perspective view of FIG. 48 from a different direction.
FIG. 52 is a perspective view of FIG. 51 with a cover removed.
FIG. 53 is a bottom view of an AF moving unit and related components of a lens driving device according to a second embodiment of the present invention as viewed from below.
FIG. 54 is a bottom perspective view of FIG. 53 as viewed from a different direction.
FIG. 55 is an enlarged view illustrating a portion of FIG. 54 in an enlarged manner.
FIG. 56 is a perspective view illustrating an OIS moving unit and related components of a lens driving device according to a second embodiment of the present invention.
FIG. 57a is an enlarged view illustrating a portion of FIG. 56 in an enlarged manner.
FIG. 57b is a cross-sectional view as viewed from A-A of FIG. 57a.
FIG. 58a is a cross-sectional view illustrating a pressurizing structure of an OIS guide ball of a lens driving device according to a second embodiment of the present invention.
FIG. 58b is a cross-sectional view illustrating a coupling structure of an elastic member and a wire of a lens driving device according to a second embodiment of the present invention.
FIG. 59 is a bottom perspective view of FIG. 56 viewed from a different direction.
FIG. 60 is a perspective view illustrating an inner substrate and an outer substrate of a lens driving device according to a second embodiment of the present invention.
FIG. 61 is a perspective view illustrating an elastic member and a wire of a lens driving device according to a second embodiment of the present invention.

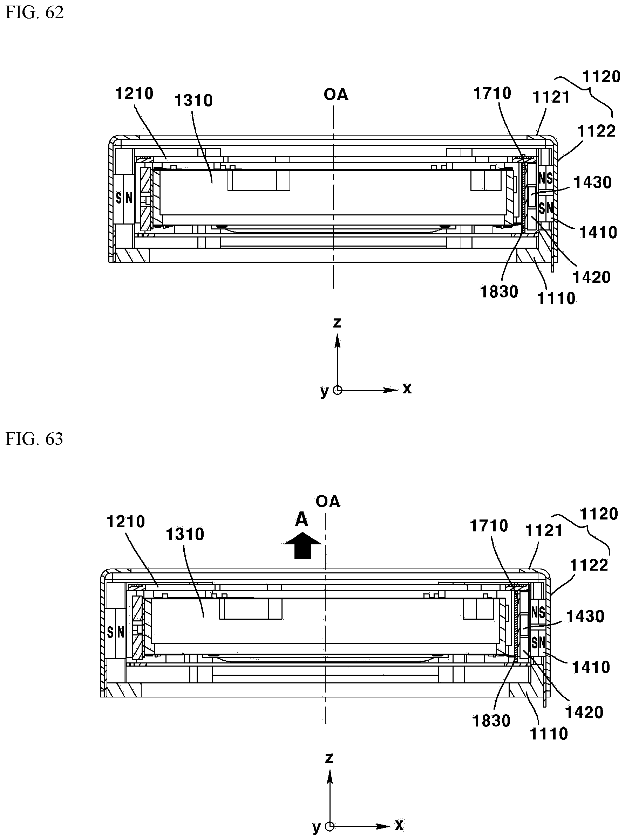

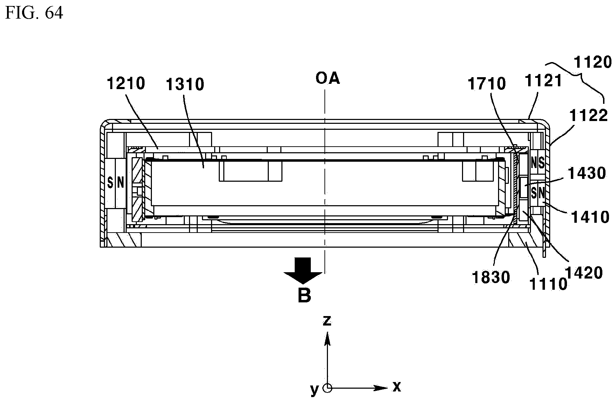

FIGS. 62 to 64 are diagrams for explaining an auto focus driving of a lens driving device according to a second embodiment of the present invention. FIG. 62 is a cross-sectional view illustrating an appearance of a moving unit in an initial state in which no current is applied to an AF coil. FIG. 63 is a cross-sectional view illustrating an appearance in which a moving unit moves upward in an optical axis direction when a forward current is applied to an AF coil. FIG. 64 is a cross-sectional view illustrating an appearance in which a moving unit moves downward in an optical axis direction when a reverse current is applied to an AF coil.

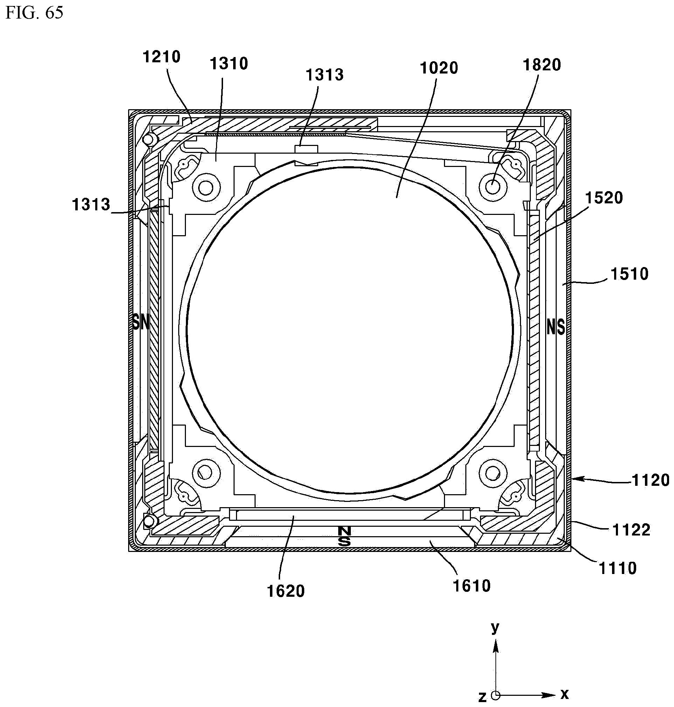

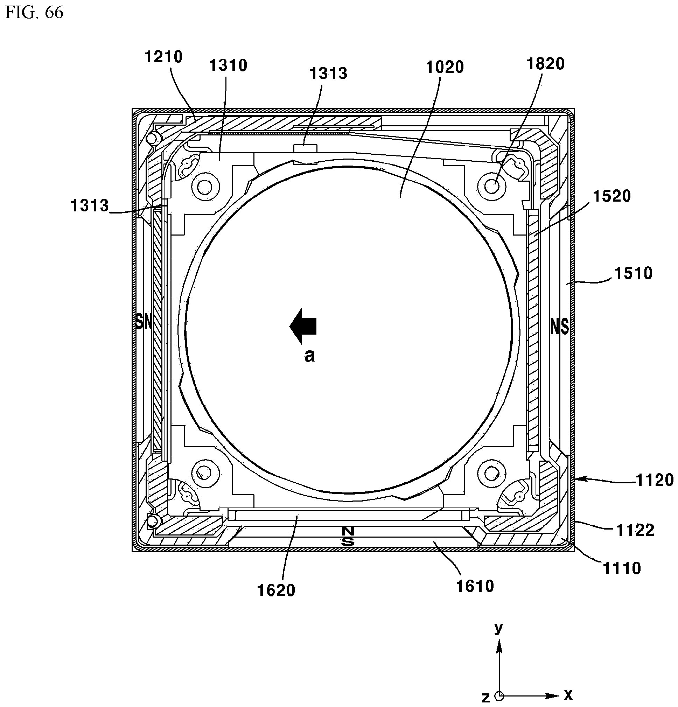

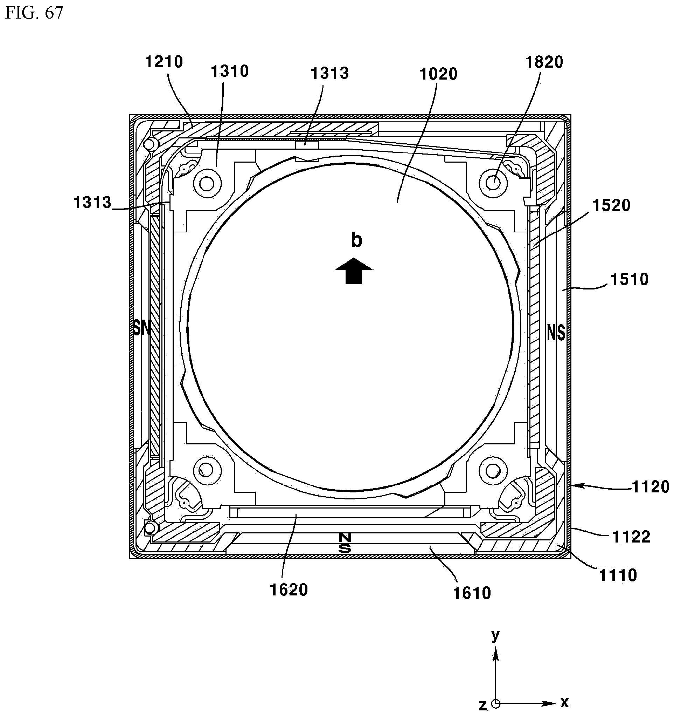

FIGS. 65 to 67 are drawings for explaining a hand shake correction driving of a lens driving device according to a second embodiment of the present invention. FIG. 65 is a cross-sectional view illustrating an appearance of a moving unit in an initial state in which no current is applied to an OIS-x coil and an OIS-y coil. FIG. 66 is a cross-sectional view illustrating an OIS moving unit moving in an x-axis direction perpendicular to an optical axis when a current is applied to an OIS-x coil. FIG. 67 is a cross-sectional view illustrating an OIS moving unit moving in a y-axis direction perpendicular to both an optical axis and an x-axis when a current is applied to an OIS-y coil.
FIG. 68 is an exploded perspective view of a camera device according to a second embodiment of the present invention.
FIG. 69 is a perspective view of an optical device according to a second embodiment of the present invention.
FIG. 70 is a perspective view of an optical device according to a modified embodiment.
FIG. 71 is a conceptual diagram of a lens driving device according to a third embodiment of the present invention.
FIG. 72 is a perspective view of a lens driving device according to a third embodiment of the present invention.
FIG. 73 is a cross-sectional view taken along line A-A of FIG. 72.
FIG. 74 is a cross-sectional view taken along line B-B of FIG. 72.
FIG. 75 is a cross-sectional view taken along line C-C of FIG. 72.
FIG. 76 is an enlarged view of a portion of FIG. 75.
FIG. 77 is a cross-sectional view taken along line perpendicular to an optical axis of a lens driving device according to a third embodiment of the present invention as viewed from above.
FIG. 78 is an exploded perspective view of a lens driving device according to a third embodiment of the present invention.
FIG. 79 is a perspective view of a lens driving device according to a third embodiment of the present invention with a cover removed.
FIG. 80 is an enlarged view of a portion of FIG. 79.
FIG. 81 is a perspective view of FIG. 80 viewed from a different direction.
FIG. 82 is a perspective view illustrating a fixed unit and related configuration of a lens driving device according to a third embodiment of the present invention.
FIG. 83 is a perspective view illustrating a moving unit and related component of a lens driving device according to a third embodiment of the present invention.
FIG. 84 is a front view of FIG. 83 viewed from front.
FIG. 85 is a cross-sectional perspective view illustrating an AF guide ball and related component of a lens driving device according to a third embodiment of the present invention.
FIG. 86 is a perspective view of FIG. 83 viewed from a different direction.
FIG. 87 is a perspective view of FIG. 86 with the cover removed.
FIG. 88 is a bottom view of an AF moving unit and related component of a lens driving device according to a third embodiment of the present invention viewed from below.
FIG. 89 is a bottom perspective view of FIG. 88 viewed from a different direction.
FIG. 90 is a perspective view illustrating an OIS moving unit and related component of a lens driving device according to a third embodiment of the present invention.
FIG. 91 is a cross-sectional view illustrating an arrangement structure of an elastic member of a lens driving device according to a third embodiment of a present invention.
FIG. 92 is a bottom perspective view of FIG. 90 seen from a different direction.
FIG. 93 is a perspective view illustrating an inner substrate and an outer substrate of a lens driving device according to a third embodiment of the present invention.
FIG. 94 is a perspective view illustrating an elastic member and a wire of a lens driving device according to a third embodiment of the present invention.

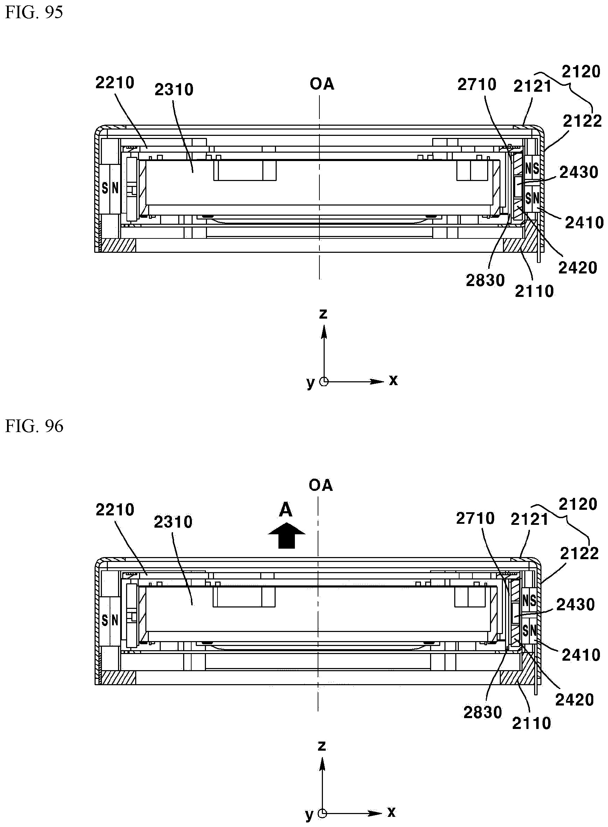

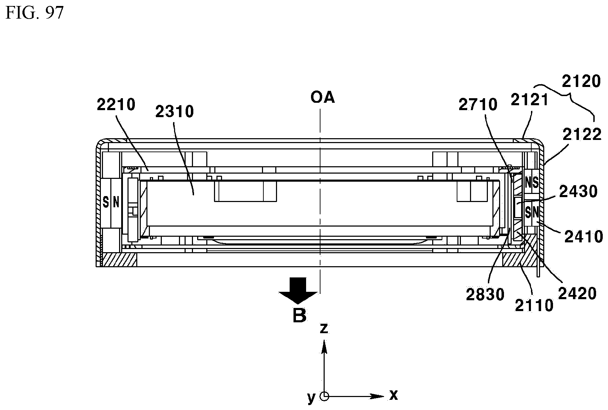

FIGS. 95 to 97 are drawings for explaining an auto focus driving of a lens driving device according to a third embodiment of the present invention. FIG. 95 is a cross-sectional view illustrating an appearance of a moving unit in an initial state where no current is applied to an AF coil. FIG. 96 is a cross-sectional view illustrating an appearance where a moving unit moves upward in an optical axis direction when a positive current is applied to an AF coil. FIG. 97 is a cross-sectional view illustrating a moving unit moving downward in an optical axis direction when reverse current is applied to an AF coil.

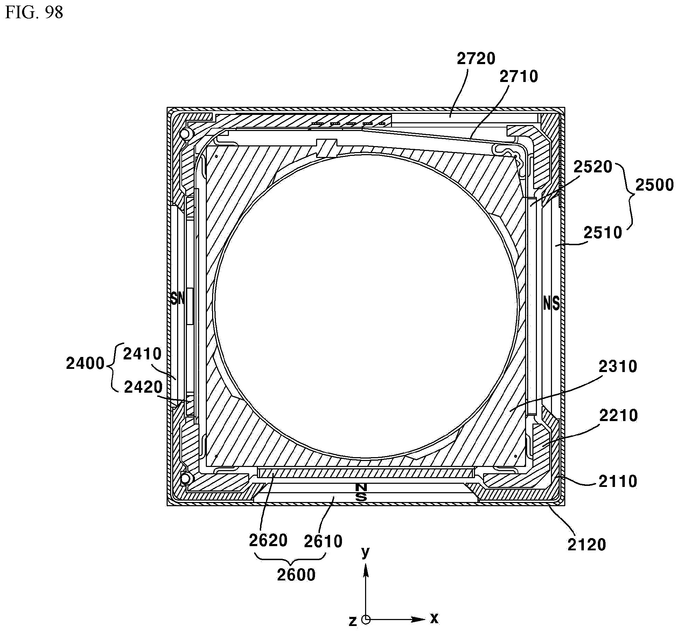

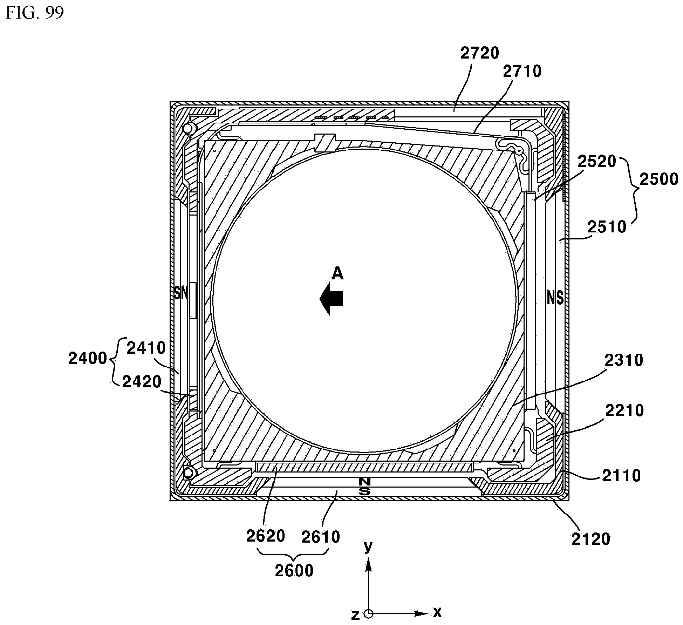

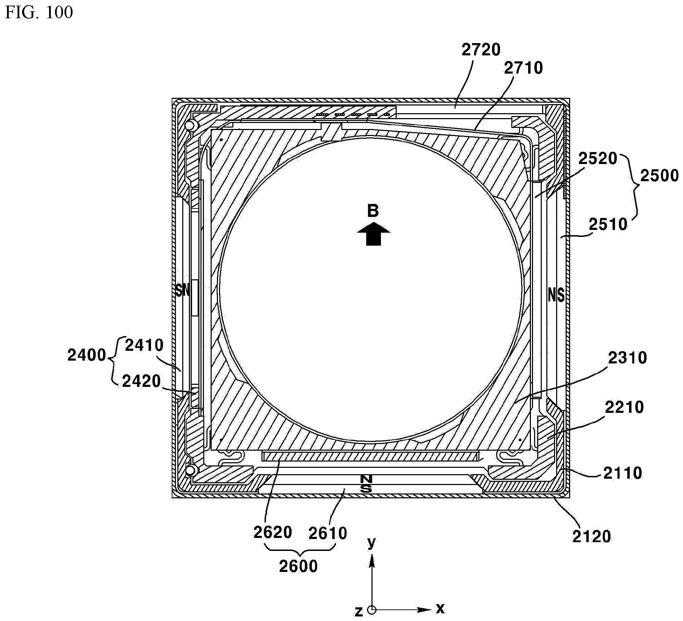

FIGS. 98 to 100 are drawings for explaining a shake correction drive of a lens driving device according to a third embodiment of the present invention. FIG. 98 is a cross-sectional view illustrating a moving unit in an initial state when no current is applied to an OIS-x coil and an OIS-y coil. FIG. 99 is a cross-sectional view illustrating an OIS moving unit moving in an x-axis direction perpendicular to an optical axis when current is applied to an OIS-x coil. FIG. 100 is a cross-sectional view illustrating an OIS moving unit moving in a y-axis direction perpendicular to both an optical axis and an x-axis when current is applied to an OIS-y coil.
FIG. 101 is an exploded perspective view of a camera device according to a third embodiment of the present invention.
FIG. 102 is a perspective view of an optical device according to a third embodiment of the present invention.
FIG. 103 is a perspective view of an optical device according to a modified embodiment.

### [BEST MODE]

Hereinafter, preferred embodiments of the present invention will be described in detail with reference to the accompanying drawings.

However, the technical idea of the present invention is not limited to some embodiments to be described, but may be implemented in various forms, and inside the scope of the technical idea of the present invention, one or more of the constituent elements may be selectively combined or substituted between embodiments.

In addition, the terms (comprising technical and scientific terms) used in the embodiments of the present invention, unless explicitly defined and described, can be interpreted as a meaning that can be generally understood by a person skilled in the art, and commonly used terms such as terms defined in the dictionary may be interpreted in consideration of the meaning of the context of the related technology.

In addition, terms used in the present specification are for describing embodiments and are not intended to limit the present invention.

In the present specification, the singular form may comprise the plural form unless specifically stated in the phrase, and when described as "at least one (or more than one) of A and B and C", it may comprise one or more of all combinations that can be combined with A, B, and C.

In addition, in describing the components of the embodiment of the present invention, terms such as first, second, A, B, (a), and (b) may be used. These terms are merely intended to distinguish the components from other components, and the terms do not limit the nature, order or sequence of the components.

And, when a component is described as being 'connected', 'coupled' or 'interconnected' to another component, the component is not only directly connected, coupled or interconnected to the other component, but may also comprise cases of being 'connected', 'coupled', or 'interconnected' due that another component between that other components.

In addition, when described as being formed or disposed in "on (above)" or "under (below)" of each component, "on (above)" or "under (below)" means that it comprises not only the case where the two components are directly in contact with, but also the case where one or more other components are formed or disposed between the two components. In addition, when expressed as "on (above)" or "under (below)", the meaning of not only an upward direction but also a downward direction with respect to one component may be comprised.

The 'optical axis (refer to **OA** in FIG. 28) direction' used hereinafter is defined as the optical axis direction of the lens and/or image sensor being coupled to the lens driving device.

The 'vertical direction' used hereinafter may be a direction parallel to or the same direction as the optical axis. The vertical direction may correspond to a 'z-axis direction'. The 'horizontal direction' used hereinafter may be a direction perpendicular to the vertical direction. That is, the horizontal direction may be a direction perpendicular to the optical axis. Therefore, the horizontal direction may comprise an 'x-axis direction' and a 'y-axis direction'.

The 'auto focus (AF) function' used hereinafter is defined as a function that automatically focuses on a subject by adjusting the distance from the image sensor by moving the lens in the optical axis direction according to the distance of the subject so that a clear image of the subject can be obtained on the image sensor. In addition, 'closed-loop auto focus (CLAF) control' is defined as detecting the distance between the image sensor and the lens and controlling the position of the lens through feedback in real time in order to improve the accuracy of focus adjustment.

The 'optical image stabilization (OIS) function' used hereinafter is defined as a function that moves or tilts the lens in a direction perpendicular to the optical axis to offset hand shake in order to prevent an image or video from shaking due to the user's hand shake. In addition, 'closed-loop auto focus (CLAF) control' is defined as detecting the position of the lens with respect to the image sensor and controlling the feedback of the lens position in real time in order to improve the accuracy of hand shake correction.

Hereinafter, one of the "AF moving unit **1200"** and the "OIS moving unit **1300"** is referred to as a "first moving unit" and the other may be referred to as a "second moving unit".

Hereinafter, one among the "AF driving unit **1400",** the "OIS-x driving unit **1500",** and the "OIS-y driving unit **1600"** is referred to as a "first driving unit", the other is referred to as a "second driving unit", and yet the other may be referred to as a "third driving unit".

Hereinafter, one among the "AF magnet **1410",** the "OIS-x magnet **1510",** and the "OIS-y magnet **1610"** may be referred to as a "first magnet", the other is referred to as a "second magnet", and yet the other may be referred to as a "third magnet".

Hereinafter, one among the "AF coil **1420",** the "OIS-x coil **1520",** and the "OIS-y coil **1620"** is referred to as a "first coil", the other is referred to as a "second coil", and yet the other may be referred to as a "third coil".

Hereinafter, one among the "AF sensor **1430",** the "OIS-x sensor **1530",** and the "OIS-y sensor **1630"** is referred to as a "first sensor", the other is referred to as a "second sensor", and yet the other may be referred to as a "third sensor".

Hereinafter, one of the "inner substrate **1710"** and the "outer substrate **1720"** is referred to as a "first substrate" and the other may be referred to as a "second substrate".

Hereinafter, one of the "AF guide ball **1810"** and the "OIS guide ball **1820"** is referred to as a "first ball" and the other may be referred to as a "second ball".

Hereinafter, either the "lower elastic member **1910"** or the "upper elastic member **1920"** is referred to as a "first elastic member" and the other may be referred to as a "second elastic member".

Hereinafter, one of the "AF moving unit **2200"** and the "OIS moving unit **2300"** is referred to as a "first moving unit" and the other may be referred to as a "second moving unit".

Hereinafter, one among the "AF driving unit **2400",** "OIS-x driving unit **2500"** and "OIS-y driving unit **2600"** is referred to as a "first driving unit", the other is referred to as a "second driving unit" and yet the other may be referred to as a "third driving unit".

Hereinafter, one among the "AF magnet **2410",** the "OIS-x magnet **2510",** and the "OIS-y magnet **2610"** is referred to as a "first magnet", the other is referred to as a "second magnet", and yet the other may be referred to as a "third magnet".

Hereinafter, one among the "AF coil **2420",** the "OIS-x coil **2520",** and the "OIS-y coil **2620"** is referred to as a "first coil", the other is referred to as a "second coil", and yet the other may be referred to as a "third coil".

Hereinafter, one among the "AF sensor **2430",** the "OIS-x sensor **2530",** and the "OIS-y sensor 2630" is referred to as a "first sensor", the other is referred to as a "second sensor", and yet the other may be referred to as a "third sensor".

Hereinafter, one of the "inner substrate **2710"** and the "outer substrate **2720"** is referred to as a "first substrate" and the other may be referred to as a "second substrate".

Hereinafter, either the "lower elastic member **2910"** or the "upper elastic member **2920"** is referred to as a "first elastic member" and the other may be referred to as a "second elastic member".

Hereinafter, the component of a lens driving device according to a first embodiment of the present invention will be described with reference to the drawings.

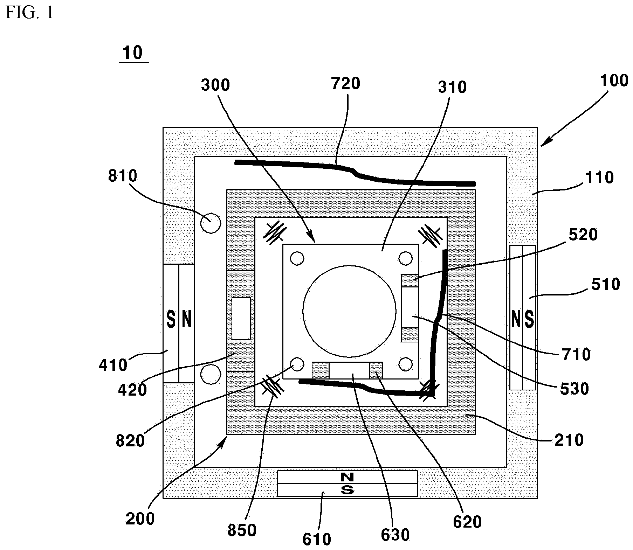

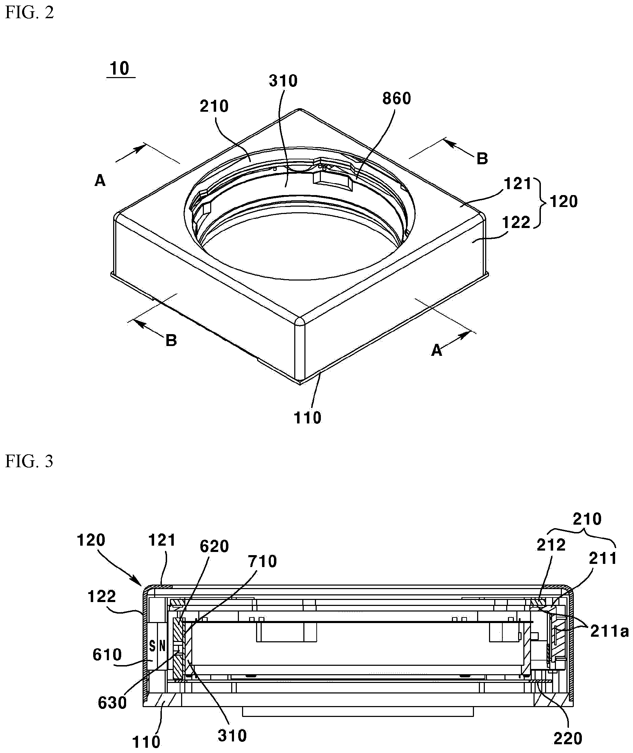

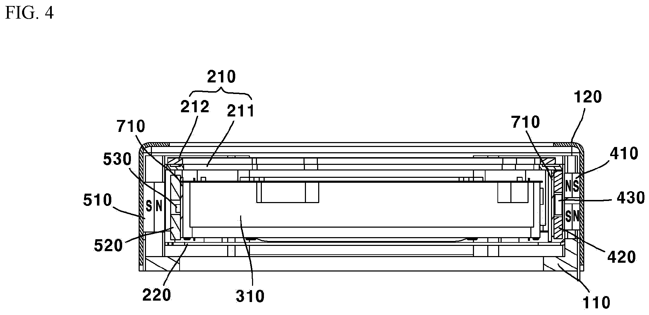

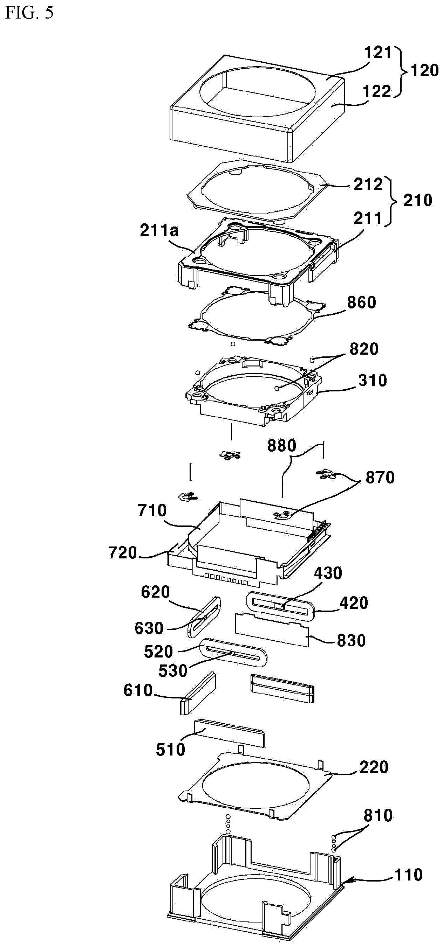

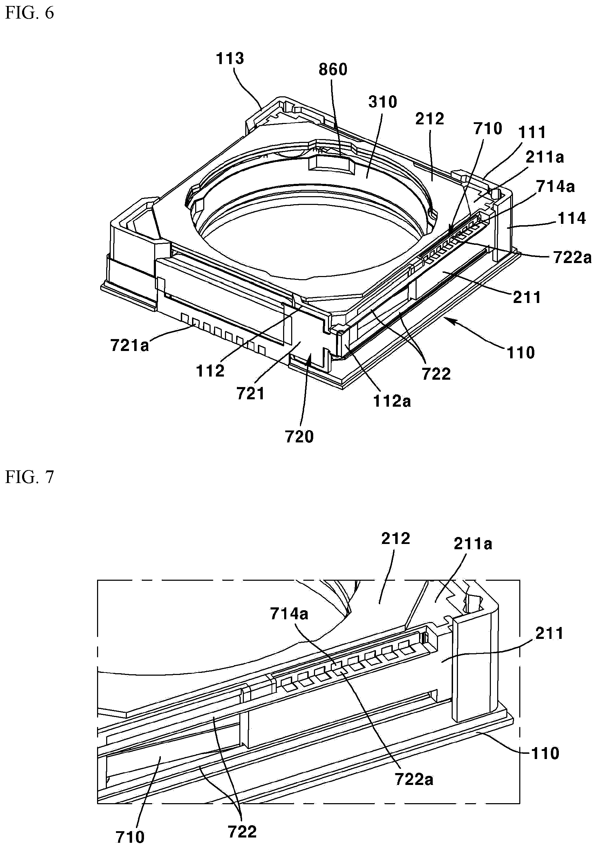

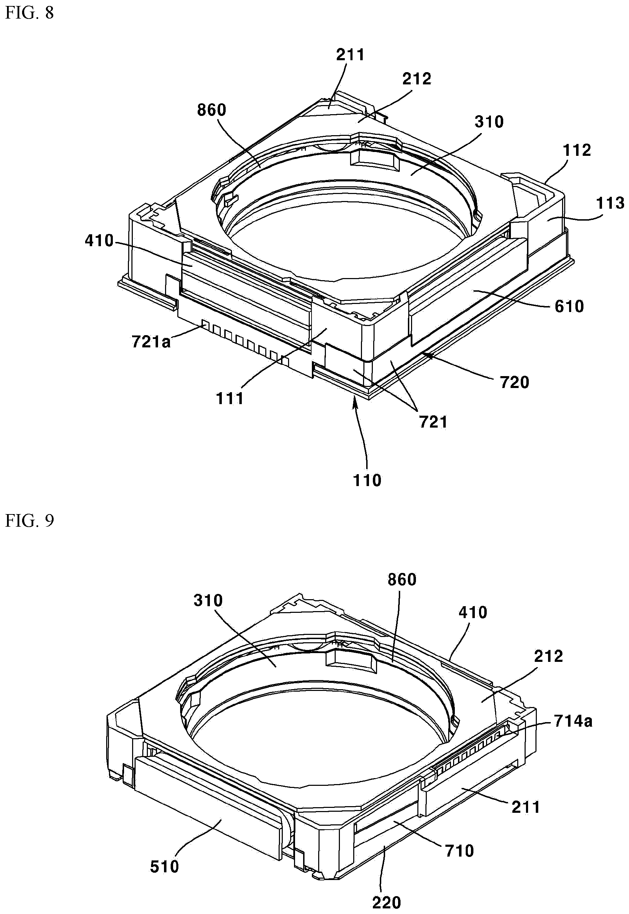

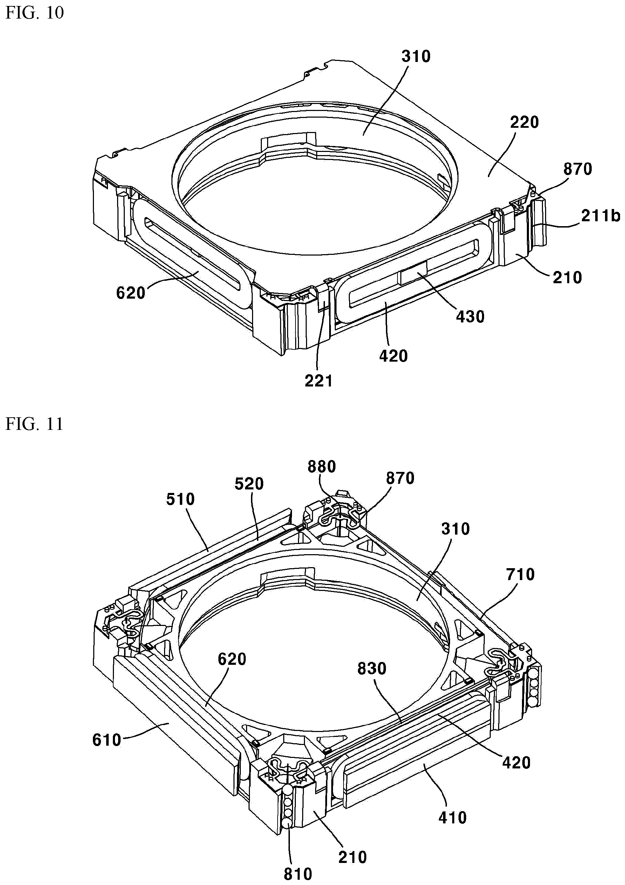

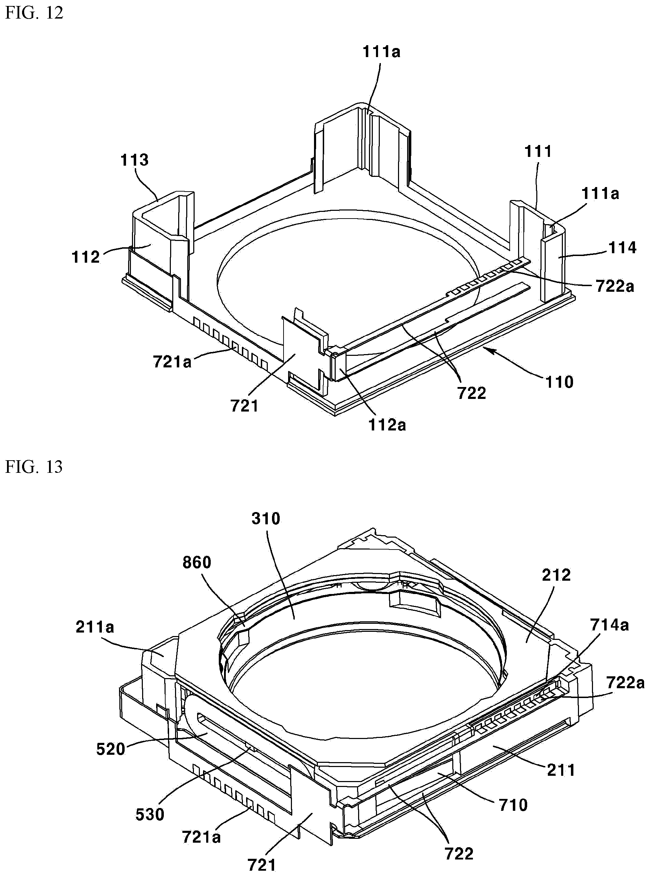

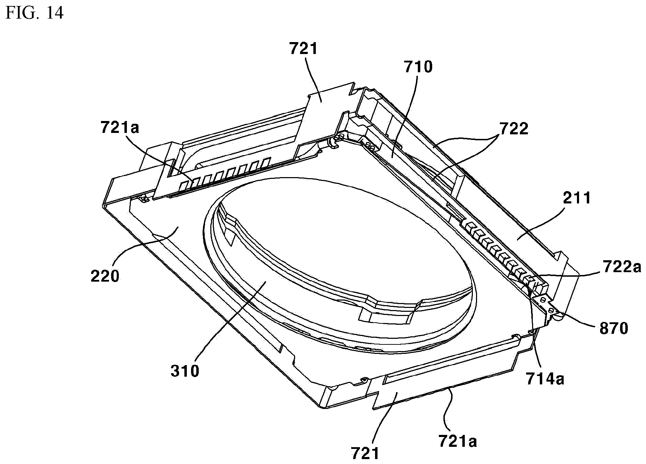

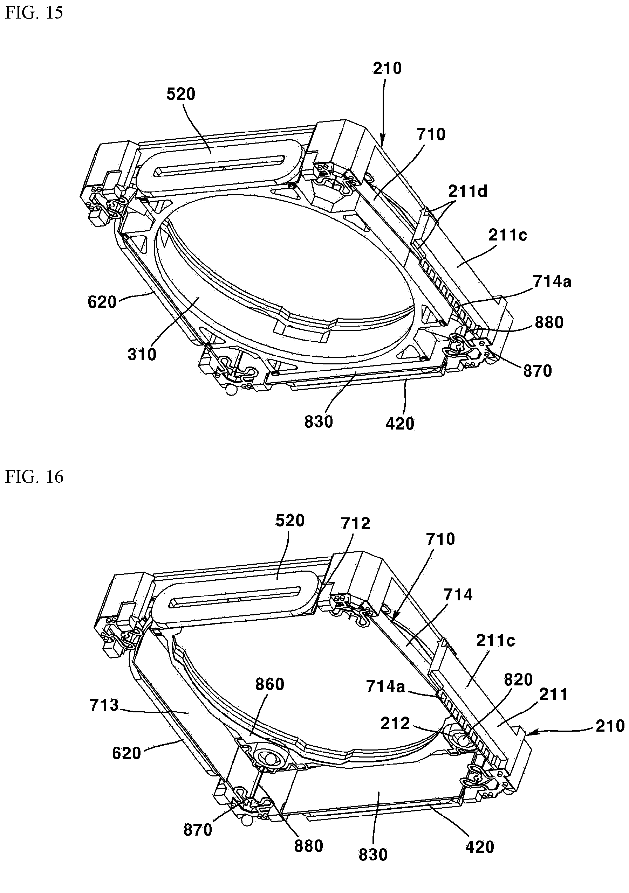

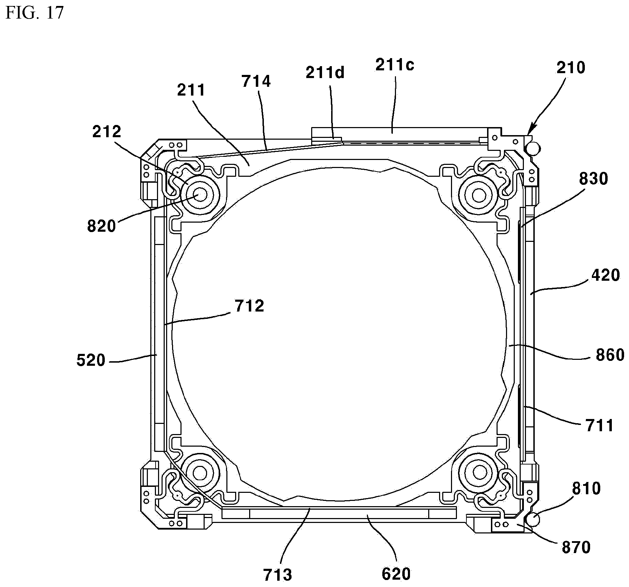

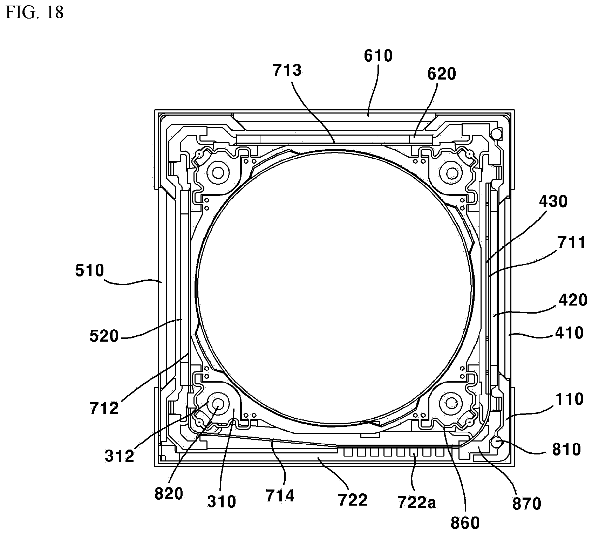

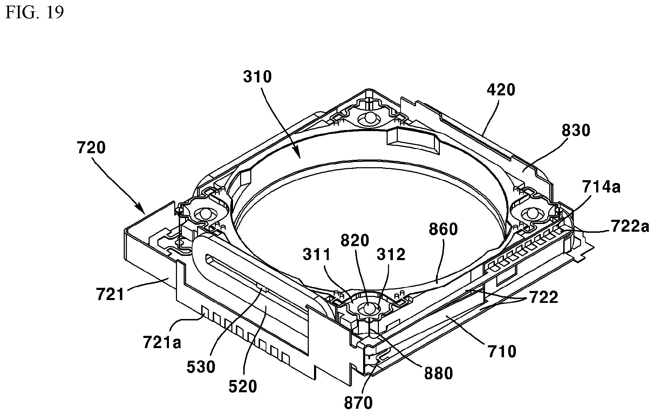

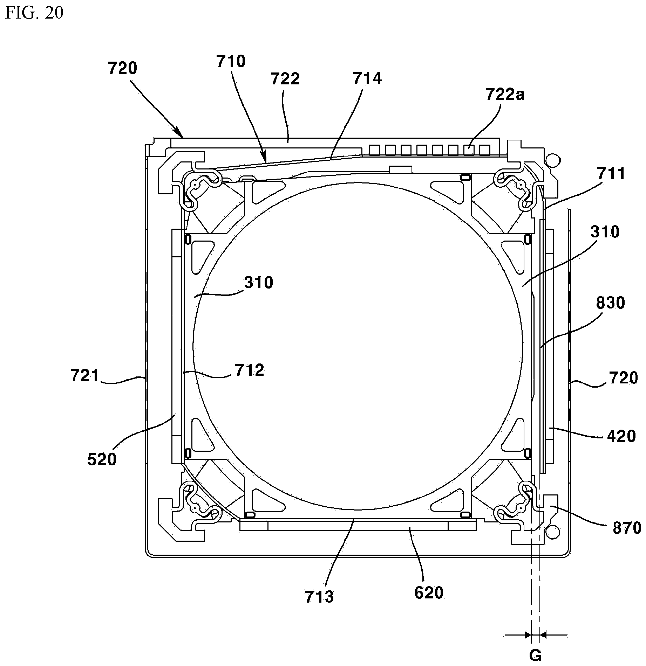

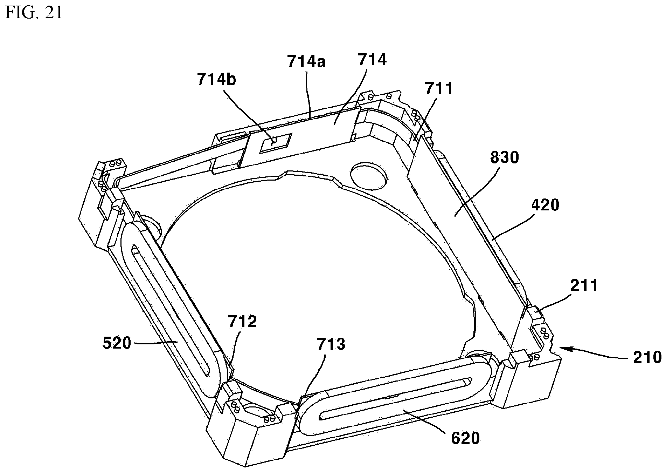

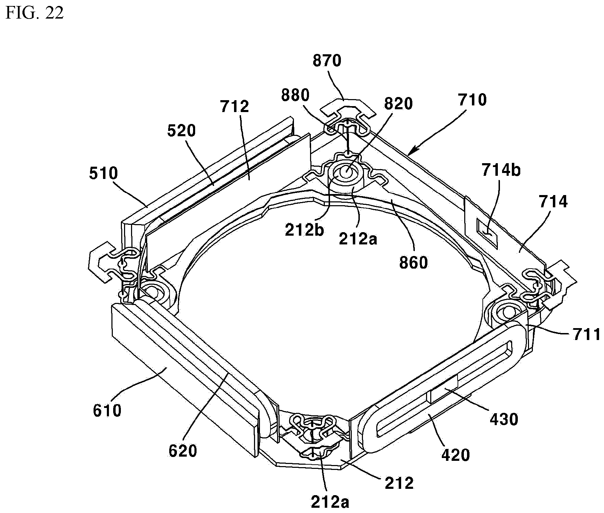

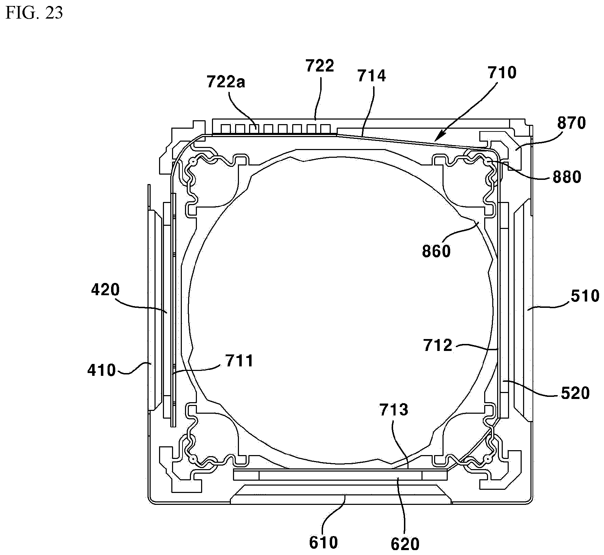

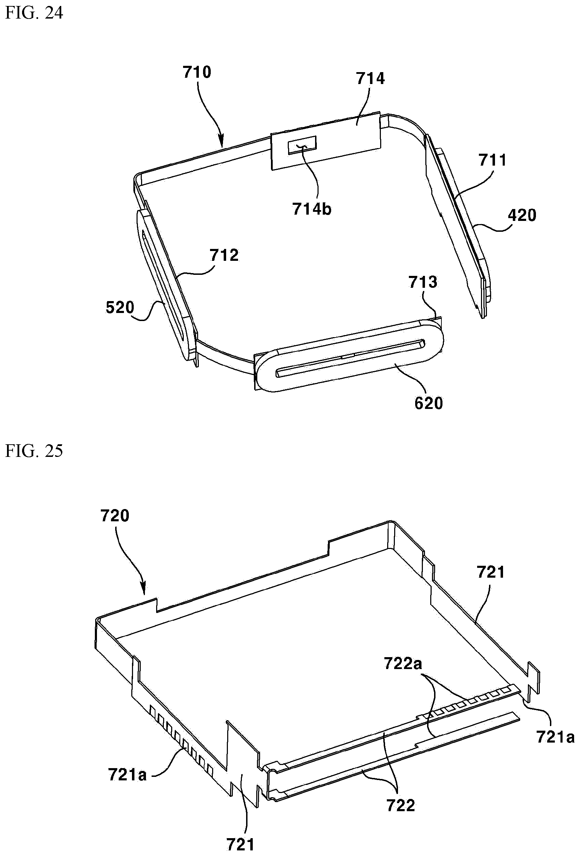

FIG. 1 is a conceptual diagram of a lens driving device according to a first embodiment of the present invention; FIG. 2 is a perspective view of a lens driving device according to a first embodiment of the present invention; FIG. 3 is a cross-sectional view taken along line A-A of FIG. 2; FIG. 4 is a cross-sectional view taken along line B-B of FIG. 2; FIG. 5 is an exploded perspective view of a lens driving device according to a first embodiment of the present invention; FIG. 6 is a perspective view of a lens driving device according to a first embodiment of the present invention with a cover removed; FIG. 7 is an enlarged view illustrating an enlarged portion of FIG. 6; FIG. 8 is a perspective view of a lens driving device in a state of FIG. 6 viewed from a different direction from FIG. 6; FIG. 9 is a perspective view of a lens driving device according to a first embodiment of the present invention with a fixed unit and some components omitted; FIG. 11 is a bottom perspective view of a moving unit and related components of a lens driving device according to a first embodiment of the present invention with a cover removed; FIG. 12 is a perspective view illustrating a base and a second substrate of a lens driving device according to a first embodiment of the present invention; FIG. 13 is a perspective view illustrating a moving unit and a second substrate of a lens driving device according to a first embodiment of the present invention; FIG. 14 is a bottom perspective view of a lens driving device of FIG. 13 from a different direction than FIG. 13; FIG. 15 is a bottom perspective view of a lens driving device of FIG. 14 with a cover and a second substrate removed; FIG. 16 is a bottom perspective view of a lens driving device of FIG. 15 with a first holder removed; FIG. 17 is a bottom perspective view of a lens driving device of FIG. 16; FIG. 18 is a plan view of a lens driving device according to a first embodiment of the present invention with a cover and a pressing portion of a first holder removed; FIG. 19 is a perspective view illustrating a second moving unit and a substrate and related configuration of a lens driving device according to a first embodiment of the present invention; FIG. 20 is a bottom view and a partially enlarged view of a lens driving device in a state of FIG. 19; FIG. 21 is a perspective view of a first holder and a second substrate and related component of a lens driving device according to a first embodiment of the present invention; FIG. 22 is a bottom perspective view illustrating a driving unit, substrate, elastic member, and the like of a lens driving device according to a first embodiment of the present invention; FIG. 23 is a plan view illustrating a driving unit, substrate, and elastic member of a lens driving device according to a first embodiment of the present invention; FIG. 24 is a perspective view illustrating a first substrate and a coil of a lens driving device according to a first embodiment of the present invention;

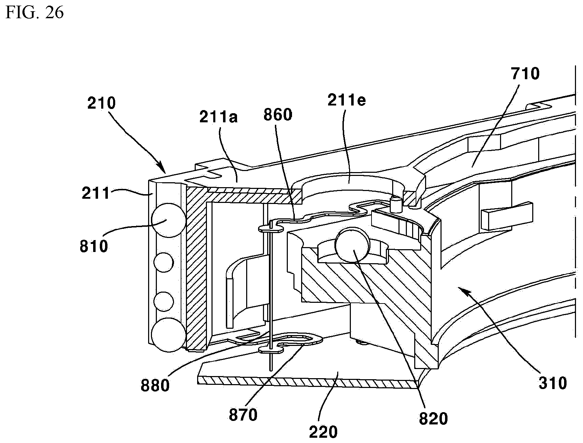

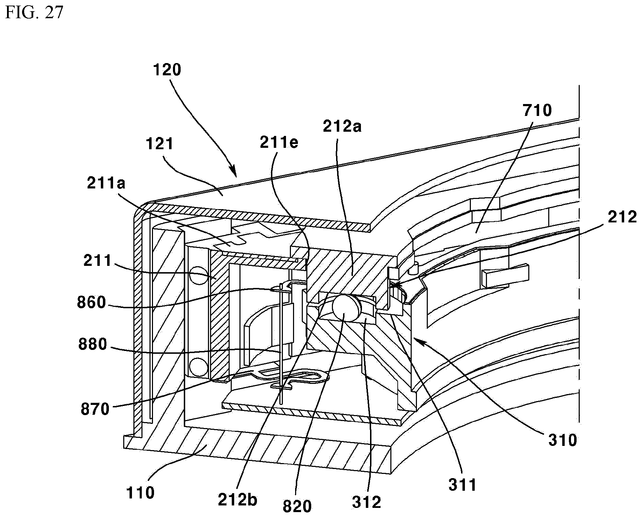

FIG. 25 is a perspective view illustrating a second substrate of a lens driving device according to a first embodiment of the present invention; FIG. 26 is a cross-sectional perspective view of a lens driving device according to a first embodiment of the present invention with a pressing portion of a first holder removed; and FIG. 27 is a cross-sectional perspective view of FIG. 26 with a pressing portion of a first holder, and the like added.

The lens driving device **10** may be a voice coil motor (VCM). The lens driving device **10** may be a lens driving motor. The lens driving device **10** may be a lens driving actuator. The lens driving device **10** may comprise an AF module. The lens driving device **10** may comprise an OIS module.

The lens driving device **10** may comprise a fixed unit **100.** The fixed unit **100** may be a portion that is relatively fixed when the moving unit moves. The moving unit may move against the fixed unit **100.**

The lens driving device **10** may comprise a base **110.** The fixed unit **100** may comprise a base **110.** The base **110** may be disposed below the first holder **210.** The base **110** may be disposed below the second holder **310.** The base **110** may be coupled with the cover **120.** The first holder **210** and the second holder **310** may be disposed on the base **110.** The first holder **210** and the second holder **310** may be disposed on a lower plate of the base **110.** The first holder **210** and the second holder **310** may be disposed inside the base **110.** The first holder **210** and the second holder **310** may be disposed inside a side plate of the base **110.**

In a first embodiment of the present invention, all of the first to third magnets **410, 510,** and **610** can be disposed on the base **110.** All of the first to third magnets **410, 510,** and **610** can be disposed on the fixed unit **100.** That is, all of the first to third magnets **410, 510,** and **610** can be maintained in a fixed state during the auto focus operation. In addition, all of the first to third magnets **410, 510,** and **610** can be maintained in a fixed state during the shake correction operation. During the auto focus operation, the first magnet **410** is fixed and the first coil **420** can move. During the shake correction operation, the second and third magnets **510** and **610** are fixed and the second and third coils **520** and **620** can move.

The base **110** may comprise a lower plate. The base **110** may comprise a side plate. The side plate may be a 'side portion'. The side plate of the base **110** may be extended from an upper surface of the lower plate.

The side plate of the base **110** may comprise a plurality of side plates. The side plate of the base **110** may comprise four side plates. However, one or more of the four side plates of the base **110** may be omitted. The side plate of the base **110** may comprise first to fourth side plates **111, 112, 113** and **114.** The base **110** may comprise a first side plate **111** and a second side plate **112** which are disposed opposite each other, and a third side plate **113** and a fourth side plate **114** which are disposed opposite each other.

The side portion of the base **110** may comprise a plurality of side portions. The side portion of the base **110** may comprise four side portions. However, at least one among the four side portions of the base **110** may be omitted. The side portion of the base **110** may comprise first to fourth side portions. The base **110** may comprise a first side portion and a second side portion being disposed opposite to each other, and a third side portion and a fourth side portion being disposed opposite to each other.

The first magnet **410** may be disposed on a first side plate of the base **110.** The second magnet **510** may be disposed on a second side plate of the base **110.** The third magnet **610** may be disposed on a third side plate of the base **110.**

The first side plate **111** of the base **110** may comprise a groove **111a.** The groove **111a** may be a 'first ball accommodating groove'. The first ball **810** may be disposed in the groove **111a.** The groove **111a** may be in direct contact with the first ball **810.** The groove **111a** may be disposed in the optical axis direction. The groove **111a** may comprise a plurality of grooves. The groove **111a** may comprise two grooves. The two grooves may be disposed parallel to each other. The groove **111a** may comprise a first groove being in contact with the first ball **810** at two points, and a second groove being in contact with the first ball **810** at one point. In a modified embodiment, both the first groove and the second groove may be in contact with the first ball **810** at two points.

The second side plate **112** of the base **110** may comprise a protruded portion **112a.** The protruded portion **112a** may be protruded outward. The leg portion **722** of the second substrate **720** may be disposed above and below the protruded portion **112a.** A groove may be formed in the protruded portion **112a** so as not to interfere with the leg portion **722** of the second substrate **720** when it moves.

The base **110** may comprise a step **115.** The step **115** may be formed at a lower portion of an outer surface of the base **110.** The step **115** may be protruded from an outer surface of the base **110.** A side plate **122** of the cover **120** may be disposed on the step **115** of the base **110.**

The lens driving device **10** may comprise a cover **120.** The fixed unit **100** may comprise a cover **120.** The cover **120** may be disposed on a base **110.** The cover **120** may be coupled to the base **110.** The cover **120** may be fixed to the base **110.** The cover **120** may accommodate a first holder **210** therein. The cover **120** may accommodate a second holder **310** therein. The cover **120** may be a shield member. The cover **120** may be a shield can.

The cover **120** may comprise an upper plate **141.** The upper plate **141** may be disposed on a moving unit. The upward movement of the moving unit may be limited by the moving unit by being in contact with the upper plate **141.** The upper plate **141** may comprise a hole through which light passes

The cover **120** may comprise a side plate **142.** The side plate **142** may be extended from the upper plate **141.** The side plate **142** may be disposed on the base **110.** The side plate **142** may be disposed in a step portion being protruded from a lower portion of an outer surface of the base **110.** The side plate **142** may comprise a plurality of side plates. The side plate **142** may comprise four side plates. The side plate **142** may comprise a first side plate and a second side plate being disposed opposite to each other, and a third side plate and a fourth side plate being disposed opposite to each other.

The lens driving device **10** may comprise a moving unit. The moving unit may be disposed in the fixed unit **100.** The moving unit may be disposed inside the fixed unit **100.** The moving unit may be disposed on the fixed unit **100.** The moving unit may be movably disposed in the fixed unit **100.** The moving unit may be moved with respect to the fixed unit **100** by the driving unit. The moving unit may be moved during AF driving. The moving unit may be moved during OIS driving. A lens may be coupled to the moving unit.

The lens driving device **10** may comprise a first moving unit **200.** The first moving unit **200** may be an 'AF moving unit'. The first moving unit **200** may be disposed in the fixed unit **100.** The first moving unit **200** may be disposed inside the fixed unit **100.** The first moving unit **200** may be disposed on the fixed unit **100.** The first moving unit **200** may be disposed between the fixed unit **100** and the second moving unit **300.** The first moving unit **200** may be movably disposed in the fixed unit **100.** The first moving unit **200** may be moved in an optical axis direction against the fixed unit **100** by the first driving unit. The first moving unit **200** may be moved during AF driving.

The lens driving device **10** may comprise a first holder **210.** The first moving unit **200** may comprise a first holder **210.** The first holder **210** may be an 'AF holder'. The first holder **210** may be an 'AF carrier'. The first holder **210** may be disposed inside the base **110.** The first holder **210** may be disposed on the base **110.** The first holder **210** may be disposed inside the cover **120.** The first holder **210** may be disposed between the base **110** and the second holder **310.** The first holder **210** may be disposed so as to be movable in an optical axis direction.

The lens driving device **10** may comprise a body portion **211.** The first holder **210** may comprise a body portion **211.** The body portion **211** may be formed separately from the pressing portion **212.** A second elastic member **870** may be coupled to the body portion **211.**

The first holder **210** may comprise a metal member **211a.** The body portion **211** may comprise a metal member **211a.** The metal member **211a** may be insert-molded into the body portion **211.** At least a portion of the metal member **211a** may be disposed on an upper surface of the body portion **211.** The metal member **211a** may be disposed to reinforce the strength of the body portion **211.**

The first holder **210** may comprise a groove **211b.** The body portion **211** may comprise a groove **211b.** The groove **211b** may be a 'first ball accommodating groove'. A first ball **810** may be disposed in the groove **211b.** The groove **211b** may be in direct contact with the first ball **810.** The groove **211b** may be disposed in an optical axis direction. The groove **211b** may comprise a plurality of grooves. The groove **211b** may comprise two grooves. The two grooves may be disposed parallel to each other. The groove **211b** may comprise a first groove being in contact with the first ball **810** at two points, and a second groove being in contact with the first ball 810 at one point. In a modified embodiment, both the first groove and the second groove can be in contact with the first ball 810 at two points.

The first holder **210** may comprise a protruded portion **211c.** The body portion **211** may comprise a protruded portion **211c.** The protruded portion **211c** may be formed on an outer surface of the first holder **210.** The protruded portion **211c** may be protruded outwardly from the first holder **210.** Leg portions **722** may be disposed on an upper surface and a lower surface of the protruded portion **211c.**

The first holder **210** may comprise a protrusion **211d.** The body portion **211** may comprise the protrusion **211d.** The protrusion **211d** may be formed in the protruded portion **211c.** The protrusion **211d** may be formed to be protruded on the protruded portion **211c.** The protrusion **211c** may be formed on at least one of an upper surface and a lower surface of the protruded portion **211c.** The protrusion **211c** may be formed to catch the leg portion **722.** Through this, the protrusion **211c** may prevent the leg portion **722** from being separated from the original position.

The first holder **210** may comprise a hole **211e.** The body portion **211** may comprise a hole **211e.** The hole **211e** may be formed in an upper plate of the body portion **211.** A pressing portion **212** may be inserted into the hole **211e.** A protrusion **212a** of the pressing portion **212** may be inserted into the hole **211e.**

The lens driving device **10** may comprise a pressing portion **212.** The first holder **210** may comprise a pressing portion **212.** The pressing portion **212** may be coupled to an upper surface of the body portion **211.** The pressing portion **212** may be coupled to the body portion **211.** The pressing portion **212** may be inserted into and coupled to the body portion **211** from the upper side. The pressing portion **212** may press the second ball **820.** The pressing portion **212** may be in direct contact with the second ball **820.**

The first holder **210** may comprise a protrusion **212a.** The pressing portion **212** may comprise a protrusion **212a.** The protrusion **212a** may be coupled to a hole **211e** of the body portion **211.** The protrusion **212a** may comprise a plurality of protrusions. The protrusion **212a** may comprise four protrusions.

The first holder **210** may comprise a groove **212b.** The pressing portion **212** may comprise a groove **212b.** The groove **212b** may be a 'second ball accommodating groove'. The groove **212b** may be formed in the protrusion **212a.** The groove **212b** may be formed on a lower surface of the protrusion **212a.** The groove **212b** may be concavely formed on a lower surface of the protrusion **212a.** A second ball **820** may be disposed in the groove **212b.** The groove **212b** may be in direct contact with the second ball **820.**

The lens driving device **10** may comprise a cover **220.** The first moving unit **200** may comprise a cover **220.** The cover **220** may be coupled with the first holder **210.** The cover **220** may be coupled to a lower surface of the first holder **210.** The cover **220** may be coupled to the first holder **210** from the lower side. The cover **220** may comprise a hook **221.** The hook **221** of the cover **220** may be coupled to the first holder **210.** The hook **211** of the cover **220** is protruded upward and may be coupled to a side surface of the first holder **210.**

The lens driving device **10** may comprise a second moving unit **300.** The second moving unit **300** may be an 'OIS moving unit'. The second moving unit **300** may be disposed in the fixed unit **100.** The second moving unit **300** may be disposed in the fixed unit **100.** The second moving unit **300** may be disposed on the fixed unit **100.** The second moving unit **300** may be disposed inside the first moving unit **200.** The second moving unit **300** may be movably disposed. The second moving unit **300** may move in a direction perpendicular to the optical axis against the fixed unit **100** and the first moving unit **200** by the second driving unit. The second moving unit **300** may move during OIS driving.

The lens driving device **10** may comprise a second holder **310.** The second moving unit **300** may comprise a second holder **310.** The second holder **310** may be an 'OIS holder'. The second holder **310** may be an 'OIS carrier'. The second holder **310** may be disposed inside the first holder **210.** The second holder **310** may be disposed inside the base **110.** The second holder **310** may be disposed on the base **110.** The second holder **310** may be disposed inside the cover **120.** The second holder **310** may be disposed so as to be movable in a direction perpendicular to the optical axis.

The second holder **310** may comprise an outer surface. The second holder **310** may comprise a plurality of side surfaces. The second holder **310** may comprise a first side surface and a second side surface being disposed opposite to each other, and a third side surface and a fourth side surface being disposed opposite to each other. The first coil **420** may be disposed between a first side surface of the second holder **310** and the first magnet **410.** The second coil **520** may be disposed between a second side surface of the second holder **310** and the second magnet **510.** The third coil **620** may be disposed between a third side surface of the second holder **310** and the third magnet **610.**

The second holder **310** may comprise a first groove **311.** The first groove **311** may be a 'first elastic member interference prevention groove'. The first groove **311** may be formed on an upper surface of the second holder **310.** The first groove **311** may be formed concavely on an upper surface of the second holder **310.** The first groove **311** may be disposed at a position corresponding to the first elastic member **860** to prevent interference between the second holder **310** and the first elastic member **860.**

The second holder **310** may comprise a second groove **312.** The second groove **312** may be a 'second ball accommodating groove'. A second ball **820** may be disposed in the second groove **312.** The second groove **312** may be in direct contact with the second ball **820.** The second groove **312** may be disposed in a direction perpendicular to the optical axis. The second groove **312** may be recessed in a direction of the optical axis. The second groove **312** may comprise a plurality of grooves. The second groove **312** may comprise four grooves. The second groove **312** may be in contact with the second ball **820** at one point. Or, the second groove **312** may be in contact with the second ball **820** at two points. The number of points where the second holder **310** and the second ball **820** come into contact may vary due to movement of the second ball **820.** The second groove **312** may be formed in the first groove **311.** The second groove **312** may be additionally recessed from the first groove **311.**

The second holder **310** may comprise a lateral stopper **313.** The lateral stopper **313** may limit a lateral stroke of the second holder **310.** That is, when the second holder **310** moves to the maximum, the lateral stopper **313** of the second holder **310** may be in contact with at least one of the first holder **210** and the base **110.** The lateral stopper **313** may be formed on an outer surface of the second holder **310.** The lateral stopper **313** may be protruded outwardly from a side surface of the second holder **310.**

The lens driving device **10** may comprise a driving unit. The driving unit may move a moving unit against the fixed unit **100.** The driving unit may comprise an AF driving unit. The driving unit may comprise an OIS driving unit. The driving unit may comprise a coil and a magnet.

The lens driving device **10** may comprise a first driving unit. The first driving unit may be an 'AF driving unit'. The first driving unit may move the first holder **210** in an optical axis direction. The first driving unit may move the first holder **210** in an optical axis direction through electromagnetic force. The first driving unit may comprise a coil and a magnet.

In a first embodiment of the present invention, the first holder **210** and the second holder **310** can move in an optical axis direction by the interaction between the first coil **420** and the first magnet **410.** The first coil **420,** the first holder **210,** and the second holder **310** can move in the optical axis direction as one unit.

The lens driving device **10** may comprise a first magnet **410.** The first driving unit may comprise a first magnet **410.** The first magnet **410** may be an 'AF magnet'. The first magnet **410** may be disposed in the base **110.** The first magnet **410** may be disposed in the cover **120.** The first magnet **410** may be disposed in the side plate **122** of the cover **120.** The first magnet **410** may be disposed on an outer surface of the base **110.** The first magnet **410** may be disposed on an inner side surface of the base **110.** The first magnet **410** may be fixed to the base **110.** The first magnet **410** may be coupled to the base **110.** The first magnet **410** can be attached to the base **110** by an adhesive. The first magnet **410** can be disposed inside the cover **120.** The first magnet **410** can interact with the first coil **420.** The first magnet **410** can electromagnetically interact with the first coil **420.** The first magnet **410** can be disposed at a position corresponding to the first coil **420.** The first magnet **410** can face the first coil **420.** The first magnet **410** and the first coil **420** may face each other. The first magnet **410** can be overlapped with the first coil **420** in a direction perpendicular to the optical axis.

The first magnet **410** may be a four-pole magnet. The first magnet **410** may comprise a four-pole magnetizing magnet. The first magnet **410** may comprise a first magnet portion comprising an N pole and an S pole, and a second magnet portion comprising an N pole and an S pole. The first magnet portion and the second magnet portion may be disposed in a vertical direction. The first magnet portion and the second magnet portion may be disposed spaced apart from each other in a vertical direction, and a neutral portion may be disposed between the first magnet portion and the second magnet portion.

The lens driving device **10** may comprise a first coil **420.** The first driving unit may comprise a first coil **420.** The first coil **420** may be an 'AF coil'. The first coil **420** may interact with the first magnet **410.** The first coil **420** may move in an optical axis direction. The first coil **420** may move in an optical axis direction through interaction with the first magnet **410.** The first coil **420** may face the first magnet **410.** The first coil **420** and the first magnet **410** may face each other. The first coil **420** may be disposed at a position corresponding to the first magnet **410.** The first coil **420** may be overlapped with the first magnet **410** in a direction perpendicular to the optical axis. The first coil **420** may be disposed in the first substrate **710.** The first coil **420** may be disposed in the first portion **711** of the first substrate **740.** The first coil **420** may be disposed in the first holder **210.** The first coil **420** may be disposed in the first moving unit **200.**

The lens driving device **10** may comprise a first sensor **430.** The first driving unit may comprise a first sensor **430.** The first sensor **430** may be an 'AF sensor'. The first sensor **430** may be a Hall sensor. The first sensor **430** may be disposed in a substrate **740.** The first sensor **430** may be disposed in a first portion **711** of the substrate **740.** The first sensor **430** may detect a first magnet **410.** The first sensor **430** may detect movement of the first magnet **410.** The movement amount or position of the first magnet **410** detected by the first sensor **430** may be used for feedback of auto focus driving.

The first sensor **430** may be a driver IC. The driver IC may comprise a sensing unit. The sensing unit may comprise a Hall element (Hall IC). The driver IC may be electrically connected to the first coil **420.** The driver IC may supply current to the first coil **420.**

The first sensor **430** may be disposed inside the first coil **420.** The first sensor **430** may be overlapped with a neutral portion of the first magnet **410** in a direction perpendicular to the optical axis. In a modified embodiment, the first sensor **430** may be disposed at an outside of the first coil **420.**

The lens driving device **10** may comprise a second driving unit. The second driving unit may be an 'OIS-x driving unit'. The second driving unit may move the second holder **310** in a first direction perpendicular to the optical axis. The second driving unit may move the second holder **310** in a first direction perpendicular to the optical axis through electromagnetic force. At this time, the first direction may be an x-axis direction. The second driving unit may comprise a coil and a magnet.

In a first embodiment of the present invention, the second holder **310** can move in a first direction perpendicular to the optical axis direction by the interaction between the second coil **520** and the second magnet **510.** At this time, the first direction may be an x-axis direction. The second coil **520** and the second holder **310** can move in an x-axis direction as one unit.

The lens driving device **10** may comprise a second magnet **510.** The second driving unit may comprise a second magnet **510.** The second magnet **510** may be an 'OIS-x magnet'. The second magnet **510** may be disposed in the base **110.** The second magnet **510** may be disposed on an outer surface of the base **110.** The second magnet **510** may be disposed on an inner surface of the base **110.** The second magnet **510** may be fixed to the base **110.** The second magnet **510** may be coupled to the base **110.** The second magnet **510** may be attached to the base **110** with an adhesive. The second magnet **510** may be disposed inside the cover **120.** The second magnet **510** can interact with the second coil **520.** The second magnet **510** can electromagnetically interact with the second coil **520.** The second magnet **510** can be disposed at a position corresponding to the second coil **520.** The second magnet **510** can face the second coil **520.** The second magnet **510** and the second coil **520** can be faced each other. The second magnet **510** can be overlapped with the second coil **520** in a direction perpendicular to the optical axis.

The second magnet **610** may be a two-pole magnet. The second magnet **510** may comprise a two-pole magnetizing magnet. The second magnet **510** may comprise an N pole and an S pole.

The lens driving device **10** may comprise a second coil **520.** The second driving unit may comprise a second coil **520.** The second coil **520** may be an 'OIS-x coil'. The second coil **520** may interact with a second magnet **510.** The second coil **520** may move in an x-axis direction perpendicular to the optical axis. The second coil **520** may move in an x-axis direction through interaction with the second magnet **510.** The second coil **520** may face the second magnet **510.** The second coil **520** and the second magnet **510** may be faced to each other. The second coil **520** may be disposed at a position corresponding to the second magnet **510.** The second coil **520** may be overlapped with the second magnet **510** in a direction perpendicular to the optical axis. The second coil **520** may be disposed in the first substrate **710.** The second coil **520** may be disposed in the second portion **712** of the first substrate **710.** The second coil **520** may be disposed in the second holder **310.** The second coil **520** may be disposed in the second moving unit **300.**

The lens driving device **10** may comprise a second sensor **530.** The second driving unit may comprise a second sensor **530.** The second sensor **530** may be an 'OIS-x sensor'. The second sensor **530** may be disposed in the first substrate **710.** The second sensor **530** may be disposed in the second portion **712** of the first substrate **710.** The second sensor **530** may comprise a Hall sensor. The second sensor **530** may detect a second magnet **510.** The second sensor **530** may detect a magnetic force of the second magnet **510.** The second sensor **530** may be disposed inside a second coil **520.** The second sensor **530** may be overlapped with the second coil **520** in an optical axis direction. The second sensor **530** may face the second magnet **510.** The second sensor **530** may be disposed at a position corresponding to the second magnet **510.** The second sensor **530** may detect movement of the second magnet **510.** The amount of movement or position of the second magnet **510** detected by the second sensor **530** may be used for feedback of the shake compensation driving in an x-axis direction.

The lens driving device **10** may comprise a third driving unit. The third driving unit may be an 'OIS-y driving unit'. The third driving unit may move the second holder **310** in a second direction perpendicular to both the optical axis and the first direction. The third driving unit may move the second holder **310** in a second direction perpendicular to both the optical axis and the first direction through electromagnetic force. At this time, the second direction may be a y-axis direction. The third driving unit may comprise a coil and a magnet.

In a first embodiment of the present invention, the second holder **310** can move in a second direction perpendicular to both the optical axis direction and the first direction by the interaction between the third coil **620** and the third magnet **610.** At this time, the second direction can be a y-axis direction. The third coil **620** and the second holder **310** can move in a y-axis direction as one.

The lens driving device **10** may comprise a third magnet **610.** The third driving unit may comprise a third magnet **610.** The third magnet **610** may be an 'OIS-y magnet'. The third magnet **610** may be disposed in the base **110.** The third magnet **610** may be disposed on an outer surface of the base **110.** The third magnet **610** may be disposed on an inner surface of the base **110.** The third magnet **610** may be fixed to the base **110.** The third magnet **610** may be coupled to the base **110.** The third magnet **610** may be attached to the base **110** with an adhesive. The third magnet **610** may be disposed inside the cover **120.** The third magnet **610** can interact with the third coil **620.** The third magnet **610** can electromagnetically interact with the third coil **620.** The third magnet **610** can be disposed at a position corresponding to the third coil **620.** The third magnet **610** can face the third coil **620.** The third magnet **610** and the third coil **620** can face each other. The third magnet **610** can be overlapped with the third coil **620** in a direction perpendicular to the optical axis.

The third magnet **610** may be a two-pole magnet. The third magnet **610** may comprise a two-pole magnetizing magnet. The third magnet **610** may comprise an N pole and an S pole.

The lens driving device **10** may comprise a third coil **620.** The third driving unit may comprise a third coil **620.** The third coil **620** may be an 'OIS-y coil'. The third coil **620** may interact with the third magnet **610.** The third coil **620** may be disposed at an opposite side to the first coil **420** with respect to the optical axis. The third coil **620** may move in a y-axis direction perpendicular to both the optical axis and the x-axis. The third coil **620** may move in a y-axis direction through interaction with the third magnet **610.** The third coil **620** may face the third magnet **610.** The third coil **620** and the third magnet **610** may face each other. The third coil **620** may be disposed at a position corresponding to the third magnet **610.** The third coil **620** may be overlapped with the third magnet **610** in a direction perpendicular to the optical axis. The third coil **620** may be disposed in the first substrate **710.** The third coil **620** may be disposed in the third portion **713** of the first substrate **710.** The third coil **620** may be disposed in the second holder **310.** The third coil **620** may be disposed in the second moving unit **300.**

The lens driving device **10** may comprise a third sensor **630.** The third driving unit may comprise a third sensor **630.** The third sensor **630** may be an 'OIS-y sensor'. The third sensor **630** may be disposed in the first substrate **710.** The third sensor **630** may be disposed in a third portion **713** of the first substrate **710.** The third sensor **630** may comprise a Hall sensor. The third sensor **630** may detect the third magnet **610.** The third sensor **630** may detect a magnetic force of the third magnet **610.** The third sensor **630** may be disposed in the third coil **620.** The third sensor **630** may be overlapped with the third coil **620** in an optical axis direction. The third sensor **630** may face the third magnet **610.** The third sensor **630** may be disposed at a position corresponding to the third magnet **610.** The third sensor **630** may detect the movement of the third magnet **610.** The amount of movement or position of the third magnet **610** detected by the third sensor **630** may be used for feedback of the shake compensation driving in a y-axis direction.

The lens driving device **10** may comprise a substrate. The substrate may comprise a flexible substrate. The substrate may be electrically connected to a coil. The substrate may be electrically connected to a sensor.

The lens driving device **10** may comprise a first substrate **710.** The first substrate **710** may be electrically connected to coils **420, 520,** and **620.** The first substrate **710** may be electrically connected to sensors **430, 530,** and **630.** The first substrate **710** may connect the first holder **210** and the second holder **310.** The first substrate **710** may elastically connect the first holder **210** and the second holder **310.** The first substrate **710** may support the second holder **310** to be movable against the first holder **210.** The first substrate **710** may guide the second holder **310** to move in a direction perpendicular to the optical axis against the first holder **210.** The first substrate **710** may comprise a flexible substrate. The first substrate **710** may comprise a flexible printed circuit board (FPCB). The first substrate **710** may comprise an elastic portion. The first substrate **710** may comprise an elastic member.

The first substrate **710** may comprise a first portion **711.** The first portion **711** may be disposed in the first holder **210.** The first coil **420** may be disposed in the first portion **711** of the first substrate **710.** The first sensor **430** may be disposed in the first portion **711** of the first substrate **710.** The yoke **830** may be disposed in the first portion **711** of the first substrate **710.**

The first substrate **710** may comprise a second portion **712.** The second portion **712** may be disposed in the second holder **310.** The second portion **712** may be disposed on a second side surface of the second holder **310.** The second coil **520** may be disposed in the second portion **712** of the first substrate **710.** The second sensor **530** may be disposed in the second portion **712** of the first substrate **710.**

The first substrate **710** may comprise a third portion **713.** The third portion **713** may be disposed in the second holder **310.** The third portion **713** may be disposed on a third side surface of the third holder **310.** The third coil **620** may be disposed in the third portion **713** of the first substrate **710.** The third sensor **630** may be disposed in the third portion **713** of the first substrate **710.**

The first substrate **710** may comprise a fourth portion **714.** The fourth portion **714** may be disposed between the second holder **310** and the first holder **210.** The fourth portion **714** may be disposed between the fourth side surface of the second holder **310** and the first holder **210.**

The first substrate **710** may comprise a terminal **714a.** The fourth portion **714** of the first substrate **710** may comprise a terminal **714a.** The terminal **714a** may be electrically connected to coils **420, 520,** and **620.** The terminal **714a** may be electrically connected to sensors **430, 530,** and **630.**

The first substrate **710** may comprise a hole **714b.** The fourth portion **714** of the first substrate **710** may comprise a hole **714b.** The hole **714b** may be formed to penetrate the fourth portion **714** of the first substrate **710.** The hole **714b** may be disposed at a position corresponding to the lateral stopper **313** of the second holder **310.** Due to the hole **714b,** the first substrate **710** may not interfere with the lateral stopper **313** of the second holder **310.**

The lens driving device **10** may comprise a second substrate **720.** The second substrate **720** may be disposed in the base **110.** The second substrate **720** may be electrically connected to coils **420, 520,** and **620.** The second substrate **720** may be electrically connected to sensors **430, 530,** and **630.** The second substrate **720** may connect the first holder **210** and the base **110.** The second substrate **720** may elastically connect the first holder **210** and the base **110.** The second substrate **720** may support the first holder **210** to be movable against the base **110.** The second substrate **720** can guide the first holder **210** to move in an optical axis direction against the base **110.** The second substrate **720** can comprise a flexible substrate. The second substrate **720** can comprise a flexible printed circuit board (FPCB). The second substrate **720** can comprise an elastic portion. The second substrate **720** can comprise an elastic member.

The second substrate **720** may comprise a body portion **721.** The body portion **721** may be disposed in the base **110.** The body portion **721** may be formed to surround a side surface of the base **110.** The body portion **721** may be disposed on three side surfaces of the base **110.** The body portion **721** may comprise two terminal portions. The two terminal portions may be disposed on opposite sides with respect to the optical axis. The terminal portion may comprise a first terminal **721a.**

The second substrate **720** may comprise a first terminal **721a.** The body portion **720** of the second substrate **720** may comprise a first terminal **721a.** The first terminal **721a** may be coupled to the terminal **714a** of the first substrate **710.** The first terminal **721a** may be coupled to the terminal **714a** of the first substrate **710** through a solder. The first terminal **721a** may be coupled to the terminal **714a** of the first substrate **710** through a conductive member. The first terminal **721a** may be connected to the terminal **714a** of the first substrate **710.** The first terminal **721a** may be electrically connected to the terminal **714a** of the first substrate **710.**

The second substrate **720** may comprise a leg portion **722.** The leg portion **722** may be an 'extended portion'. The leg portion **722** may be extended from the body portion **721.** At least a portion of the leg portion **722** may move together with the first holder **210.** The extended portion may be extended from the body portion **721.** At least a portion of the extended portion may move together with the first holder **210.** The leg portion **722** may comprise a plurality of leg portions. The leg portion **722** may comprise a first leg portion and a second leg portion. The second leg portion may be disposed below the first leg portion.

The second substrate **720** may comprise a second terminal **722a.** The leg portion **722** of the second substrate **720** may comprise a second terminal **722a.** The second terminal **722a** may be electrically connected to the first terminal **721a.** The second terminal **722a** may be disposed at a lower end of the base **110.** The second terminal **722a** can be coupled to a printed circuit board **50.** The second terminal **722a** can be coupled to a terminal of the printed circuit board **50** through a solder. The second terminal **722a** can be coupled to a terminal of the printed circuit board **50** through a conductive member. The second terminal **722a** can be connected to a terminal of the printed circuit board **50.** The second terminal **722a** can be electrically connected to a terminal of the printed circuit board **50.**

The lens driving device **10** may comprise a guide member. The guide member may comprise a ball. The guide member may comprise a pin. The guide member may comprise a cylindrical member. The guide member may guide movement of the moving unit against the fixed unit **100** in a specific direction.

The lens driving device **10** may comprise a first ball **810.** The first ball **810** may be an 'AF guide ball'. The first ball **810** may guide movement of the first holder **210** against the base **110** in an optical axis direction. The first ball **810** may be disposed between the base **110** and the first holder **210.** The first ball **810** may be disposed between the base **110** and the first holder **210** in a first direction. The first ball **810** may be disposed in a groove **111a** of the base **110.** The first ball **810** may be disposed in a first groove **211b** of the first holder **210.** The first ball **810** may comprise a first-first ball that contacts the base **110** and the first holder **210** at four points, and a first-second ball that contacts the base **110** and the first holder **210** at three points. The first ball **810** may have a spherical shape. The first ball **810** may be formed of metal. Grease may be applied to the surface of the first ball **810.**

The first ball **810** may comprise a plurality of balls. The first ball **810** may comprise eight balls. Four first balls **810** may be disposed on one side of the first magnet **410** and the remaining four first balls **810** may be disposed on the other side of the first magnet **410.**

The lens driving device **10** may comprise a second ball **820.** The second ball **820** may be an 'OIS guide ball'. The second ball **820** may guide movement of the second holder **310** against the first holder **210** in a direction perpendicular to the optical axis. The second ball **820** may be disposed between the first holder **210** and the second holder **310.** The second ball **820** may be disposed between the first holder **210** and the second holder **310** in an optical axis direction.

The second ball **820** can be disposed between the pressing portion **212** of the first holder **210** and the second holder **310.** The second ball **820** can be pressed between the first holder **210** and the second holder **310** by the pressing force of the elastic member **850.** The pressing portion **212** can press the second ball **820** downward during the process of being coupled to the body portion **211.** The pressing portion **212** can press the second ball **820** toward the second holder **310** during the process of being coupled to the body portion **211.** At this time, the second holder **310** can press the second ball **820** toward the pressing portion **212** by the restoring force of the elastic member **850.** Accordingly, the second ball **820** can be pressed between the pressing portion **212** and the second holder **310.**

The second ball **820** can guide the second holder **310** to move in a first direction and a second direction perpendicular to the optical axis direction with respect to the first holder **210.** That is, the second ball **820** can guide the second holder **310** to move in an x-axis direction and a y-axis direction. In other words, the second ball **820** can guide movement in both the x-axis direction and the y-axis direction. For reference, in a first embodiment of the present invention in which the ball guiding the x-axis direction and the ball guiding the y-axis direction are provided integrally, the size of the lens driving device **10** can be minimized when compared to a comparative example in which a ball guiding the x-axis direction and a ball guiding the y-axis direction are provided separately. In particular, the height of the lens driving device **10** in an optical axis direction can be reduced. Through this, the height protruding from the smartphone, that is, the shoulder height can be minimized. The second ball **820** can comprise a plurality of balls. The second ball **820** may comprise four balls.

The lens driving device **10** may comprise a yoke **830.** The yoke **830** may be disposed in the first portion **711** of the first substrate **710.** An attractive force may be generated between the yoke **830** and the first magnet **410.** The yoke **830** may be disposed at a position corresponding to the first magnet **410.** The yoke **830** may be formed of metal. The first ball **810** may be pressed between the base **110** and the first holder **210** by the attractive force between the yoke **830** and the first magnet **410.** That is, the contact state of the first ball **810** with the base **110** and the first holder **210** may be maintained by the attractive force between the yoke **830** and the first magnet **410.**

The lens driving device **10** may comprise an elastic member **850.** The elastic member **850** may be formed to pressurize the second ball **820.** The elastic member **850** may be formed to guide both the OIS-x-axis driving and the OIS-y-axis driving only with the second ball **820.** The elastic member **850** may comprise a leaf spring. The elastic member **850** may comprise a wire. The elastic member **850** may have elasticity. The elastic member **850** may be formed of metal.

The lens driving device **10** may comprise a first elastic member **860.** The first elastic member **860** may be an 'upper elastic member'. The first elastic member **860** may be a leaf spring. The first elastic member **860** may have elasticity. The first elastic member **860** may be disposed on an upper surface of the second holder **310.** The first elastic member **860** may be disposed in the second holder **310.** The first elastic member **860** may be disposed on an upper portion of the second holder **310.** The first elastic member **860** may be disposed above the second holder **310.** The first elastic member **860** may be disposed perpendicular to the optical axis.

The lens driving device **10** may comprise a second elastic member **870.** The second elastic member **870** may be a 'lower elastic member'. The second elastic member **870** may be a leaf spring. The second elastic member **870** may have elasticity. The second elastic member **870** may be disposed on a lower surface of the first holder **210.** The second elastic member **870** may be disposed in the first holder **210.** The second elastic member **870** may be disposed on a lower portion of the first holder **210.** The second elastic member **870** may be disposed below the first holder **210.** The second elastic member **870** may be disposed on a lower surface of the body portion **721.** The second elastic member **870** can be coupled to a lower surface of the body portion **721.** The second elastic member **870** can be disposed perpendicular to the optical axis.

The lens driving device **10** may comprise a third elastic member **880.** The third elastic member **880** may be a 'side portion elastic member'. The third elastic member **880** may be a wire. The third elastic member **880** may be a wire spring. The third elastic member **880** may be a suspension wire. The third elastic member **880** may have elasticity. The third elastic member **880** may connect the first elastic member **860** and the second elastic member **870.** The third elastic member **880** may elastically connect the first elastic member **860** and the second elastic member **870.** The third elastic member **880** may be disposed parallel to an optical axis.

Hereinafter, the auto focus (AF) driving of a lens driving device according to a first embodiment of the present invention will be described with reference to the drawings.

FIGS. 28 to 30 are diagrams for explaining an auto focus driving of a lens driving device according to a first embodiment of the present invention. FIG. 28 is a cross-sectional view illustrating an appearance of a moving unit in an initial state where no current is applied to a first coil. FIG. 29 is a cross-sectional view illustrating an appearance where a moving unit moves upward in an optical axis direction when a forward current is applied to a first coil. FIG. 30 is a cross-sectional view illustrating an appearance where a moving unit moves downward in an optical axis direction when a reverse current is applied to a first coil.

The moving unit may be disposed at a position spaced apart from both the upper plate **121** and the base **110** of the cover **120** in an initial position where no current is applied to the first coil **420.** At this time, the moving unit may be the first moving unit **200.** In addition, the moving unit may comprise the first and second moving units **200** and **300.**

When a forward current is applied to the first coil **420,** the first coil **420** can move upward in an optical axis direction due to the electromagnetic interaction between the first coil **420** and the first magnet **410** (see a of FIG. 29). At this time, the first holder **210** can move upward in an optical axis direction together with the first coil **420.** Furthermore, the second holder **310** and the lens can move upward in an optical axis direction together with the first holder **210.** Accordingly, the distance between the lens and the image sensor can be changed, and the focus of the image being formed on an image sensor through the lens can be adjusted.

When a reverse current is applied to the first coil **420,** the first coil **420** can move downward in an optical axis direction due to the electromagnetic interaction between the first coil **420** and the first magnet **410** (see b of FIG. 30). At this time, the first holder **210** can move downward in an optical axis direction together with the first coil **420.** Furthermore, the second holder **310** and the lens can move downward in an optical axis direction together with the first holder **210.** Accordingly, the distance between the lens and the image sensor can be changed, and the focus of the image being formed on the image sensor through the lens can be adjusted.

Meanwhile, during the movement process of the first coil **420,** the first sensor **430** moves together with the first coil **420** and detects the strength of the magnetic field of the first magnet **410** to detect the amount of movement or position of the lens in an optical axis direction. The amount of movement or position of the lens in an optical axis direction detected by the first sensor **430** can be used for auto focus feedback control.

Hereinafter, the optical image stabilization (OIS) operation of a lens driving device according to a first embodiment of the present invention will be described with reference to the drawings.

FIGS. 31 to 33 are drawings for explaining a shake correction driving of a lens driving device according to a first embodiment of the present invention. FIG. 31 is a cross-sectional view illustrating an appearance of a moving unit in an initial state where no current is applied to a second coil and a third coil. FIG. 32 is a cross-sectional view illustrating an appearance where a second moving unit moves in an x-axis direction perpendicular to an optical axis when current is applied to a second coil. FIG. 33 is a cross-sectional view illustrating an appearance where a second moving unit moves in a y-axis direction perpendicular to both an optical axis and a x-axis when current is applied to a third coil.

As illustrated in FIG. 31, the moving unit may be disposed in an initial position where no current is applied to the second coil **520** and the third coil **620.** At this time, the moving unit may be the second moving unit **300.**

When a current is applied to the second coil **520,** the second coil **520** can move in an x-axis direction perpendicular to the optical axis due to the electromagnetic interaction between the second coil **520** and the second magnet **510** (see a in FIG. 32a). At this time, the second holder **310** can move in an x-axis direction together with the second coil **520.** Furthermore, the lens can move in an x-axis direction together with the second holder **310.** In more detail, when a forward current is applied to the second coil **520,** the second coil **520,** the second holder **310,** and the lens can move in one direction along an x-axis. In addition, when a reverse current is applied to the second coil **520,** the second coil **520,** the second holder **310,** and the lens can move in the other direction along an x-axis.

When a current is applied to the third coil **620,** the third coil **620** can move in a y-axis direction perpendicular to the optical axis due to the electromagnetic interaction between the third coil **620** and the third magnet **610** (see **b** in FIG. 33b). At this time, the second holder **310** can move in a y-axis direction together with the third coil **620.** Furthermore, the lens can move in a y-axis direction together with the second holder **310.** In more detail, when a forward current is applied to the third coil **620,** the third coil **620,** the second holder **310,** and the lens can move in one direction in a y-axis. In addition, when a reverse current is applied to the third coil **620,** the third coil **620,** the second holder **310,** and the lens can move in the other direction in a y-axis.

Meanwhile, the second sensor **530** can detect the amount of movement or position of the second coil **520** by detecting the strength of the magnetic field of the second magnet **510.** The amount of movement or position detected by the second sensor **530** can be used for shake correction feedback control in an x-axis direction. The third sensor **630** can detect the amount of movement or position of the third coil **620** by detecting the strength of the magnetic field of the third magnet **610.** The amount of movement or position detected by the third sensor **630** can be used for shake correction feedback control in a y-axis direction.

Hereinafter, a camera device according to a first embodiment of the present invention will be described with reference to the drawings.

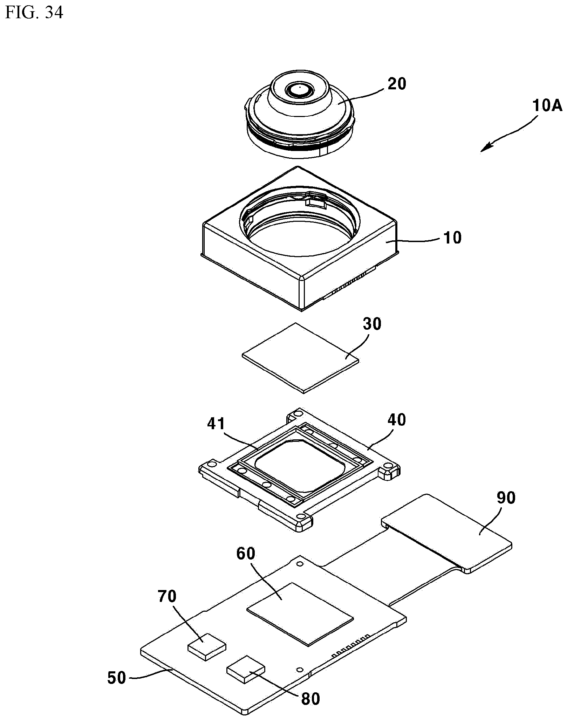

FIG. 34 is an exploded perspective view of a camera device according to a first embodiment of the present invention.

The camera device **10A** may comprise a camera module.

The camera device **10A** may comprise a lens module **20.** The lens module **20** may comprise at least one lens. The lens may be disposed at a position corresponding to the image sensor **60.** The lens module **20** may comprise a lens and a barrel. The lens module **20** may be coupled to the holder **210** of the lens driving device **10.** The lens module **20** may be coupled to the holder **210** by screw coupling and/or an adhesive. The lens module **20** may be moved integrally with the holder **210.**

The camera device **10A** may comprise a filter **30.** The filter **30** may serve to block the light of a specific frequency band passing through the lens module **20** from being incident on the image sensor **60.** The filter **30** may be disposed parallel to an x-y plane. The filter **30** may be disposed between the lens module **20** and the image sensor **60.** The filter **30** may be disposed in the sensor base **40.** In a modified embodiment, the filter **30** may be disposed in the base **110.** The filter **30** may comprise an infrared filter. The infrared filter may block light of an infrared region from being incident on the image sensor **60.**

The camera device **10A** may comprise a sensor base **40.** The sensor base **40** may be disposed between the lens driving device **10** and the printed circuit board **50.** The sensor base **40** may comprise a protruded portion **41** in which a filter **30** is disposed. An opening may be formed in a portion of the sensor base **40** in which the filter **30** is disposed so that light passing through the filter **30** may be incident on the image sensor **60.** The adhesive member may couple or attach the base **310** of the lens driving device **10** to the sensor base **40.** The adhesive member may additionally serve to prevent foreign substances from entering the interior of the lens driving device **10.** The adhesive member may comprise at least one among an epoxy, a thermosetting adhesive, and an ultraviolet-curable adhesive.

The camera device **10A** may comprise a printed circuit board (PCB) **50.** The printed circuit board **50** may be a substrate or a circuit board. A lens driving device **10** may be disposed on the printed circuit board **50.** A sensor base **40** may be disposed between the printed circuit board **50** and the lens driving device **10.** The printed circuit board 50 may be electrically connected to the lens driving device **10.** An image sensor **60** may be disposed on the printed circuit board **50.** Various circuits, elements, control units, and the like may be provided on the printed circuit board **50** to convert an image being formed on the image sensor **60** into an electrical signal and transmit it to an external device.

The camera device **10A** may comprise an image sensor **60.** The image sensor **60** may be a configuration in which a light passing through a lens and a filter **30** is incident thereon to form an image. The image sensor **60** may be mounted on a printed circuit board **50.** The image sensor **60** may be electrically connected to the printed circuit board **50.** For example, the image sensor **60** may be coupled to the printed circuit board **50** by surface mounting technology (SMT). As another example, the image sensor **60** may be coupled to the printed circuit board **50** by flip chip technology. The image sensor **60** may be disposed such that its optical axis is aligned with that of the lens. That is, the optical axis of the image sensor **60** and the optical axis of the lens may be aligned. The image sensor **60** can convert light irradiated to the effective image area of the image sensor **60** into an electrical signal. The image sensor **60** can be any one among a charge coupled device (CCD), a metal oxide semiconductor (MOS), a CPD, and a CID.

The camera device **10A** may comprise a motion sensor **70.** The motion sensor **70** may be mounted on a printed circuit board **50.** The motion sensor **70** may be electrically connected to the control unit **80** through a circuit pattern being provided on the printed circuit board **50.** The motion sensor **70** may output rotational velocity information due to the movement of the camera device **10A.** The motion sensor **70** may comprise a two-axis or three-axis gyro sensor or an angular velocity sensor.

The camera device **10A** may comprise a control unit **80.** The control unit **80** may be disposed on a printed circuit board **50.** The control unit **80** may be electrically connected to a coil **330** of a lens driving device **10.** The control unit **80** may individually control the direction, intensity, amplitude, and the like of the current supplied to the coil **330.** The control unit **80** may control the lens driving device **10** to perform an auto focus function and/or a shake correction function. Furthermore, the control unit **80** may perform auto focus feedback control and/or shake correction feedback control for the lens driving device **10.**

The camera device **10A** may comprise a connector **90.** The connector **90** may be electrically connected to the printed circuit board **50.** The connector **90** may comprise a port for electrically connecting to an external device.

Hereinafter, an optical device according to a first embodiment of the present invention will be described with reference to the drawings.

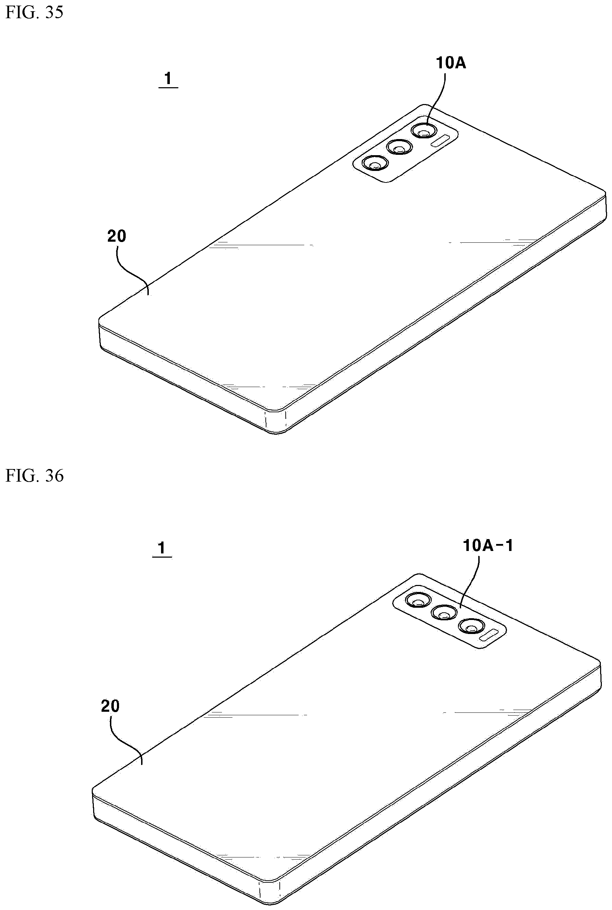

FIG. 35 is a perspective view of an optical device according to a first embodiment of the present invention; and FIG. 36 is a perspective view of an optical device according to a modified embodiment.

The optical device 1 may comprise at least one among a mobile phone, a cellular phone, a portable terminal, a mobile terminal, a smart phone, a smart pad, a portable smart device, a digital camera, a laptop computer, a digital broadcasting terminal, a personal digital assistant (PDA), a portable multimedia player (PMP), and a navigation device. The optical device 1 may comprise any device for photographing videos or pictures.

The optical device 1 may comprise a main body **20.** The optical device **1** may comprise a camera device **10A.** The camera device **10A** may be disposed in the main body **20.** The camera device **10A** may capture a subject. The optical device **1** may comprise a display. The display may be disposed in the main body **20.** The display may output one or more of an image and a video captured by the camera device **10A.** The display may be disposed on a first surface of the main body **20.** The camera device **10A** may be disposed on one or more of the first surface of the main body **20** and the second surface opposite to the first surface. As illustrated in FIG. 22, in the camera device **10A,** a triple camera may be disposed in a vertical direction. As illustrated in FIG. 23, in the camera device **10A-1,** a triple camera may be disposed in a horizontal direction.

Hereinafter, the configuration of a lens driving device according to a second embodiment of the present invention is described with reference to the drawings.

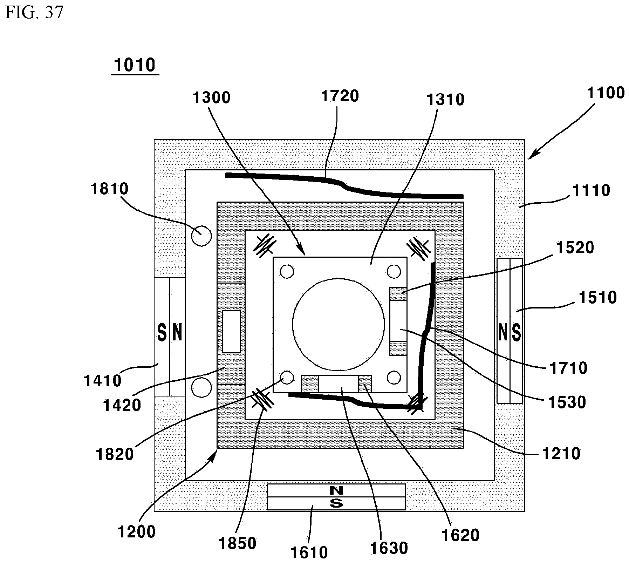

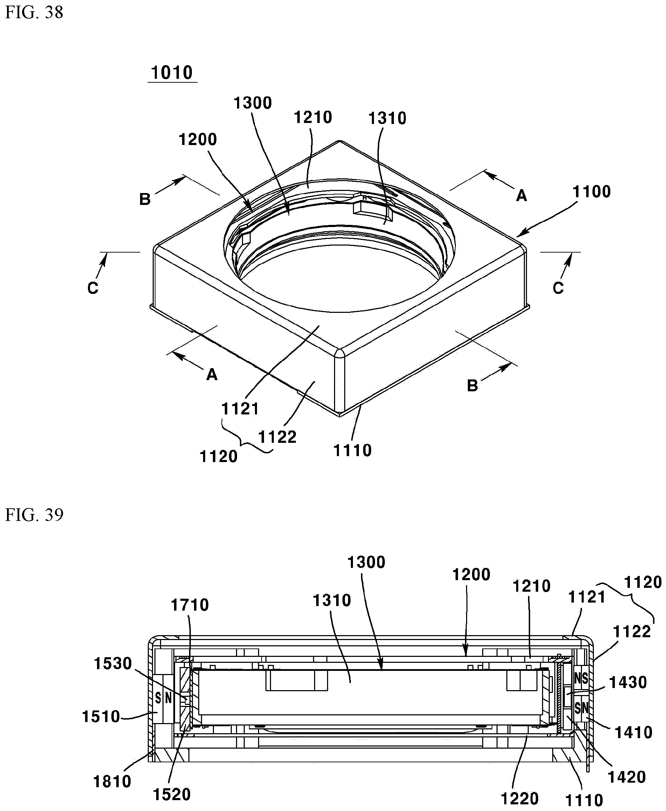

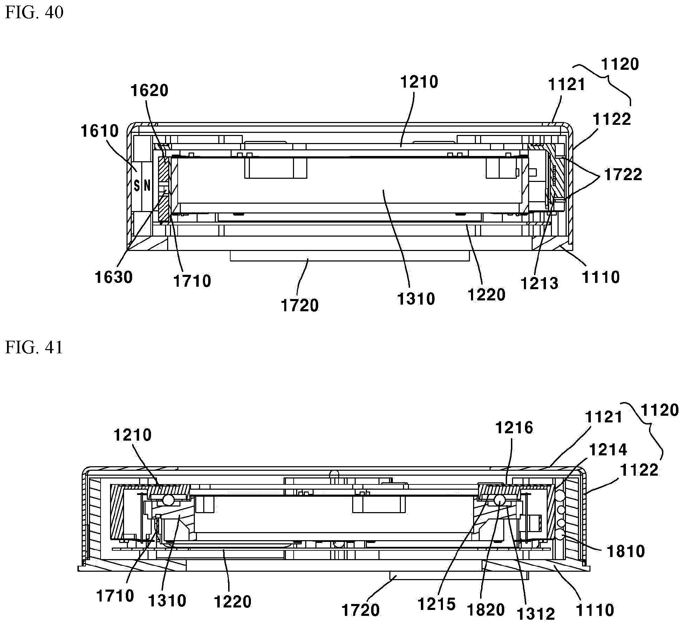

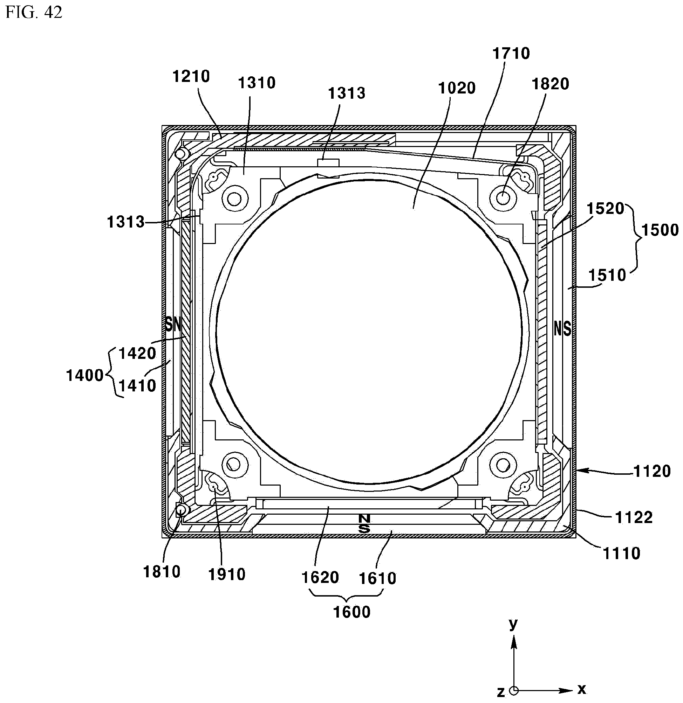

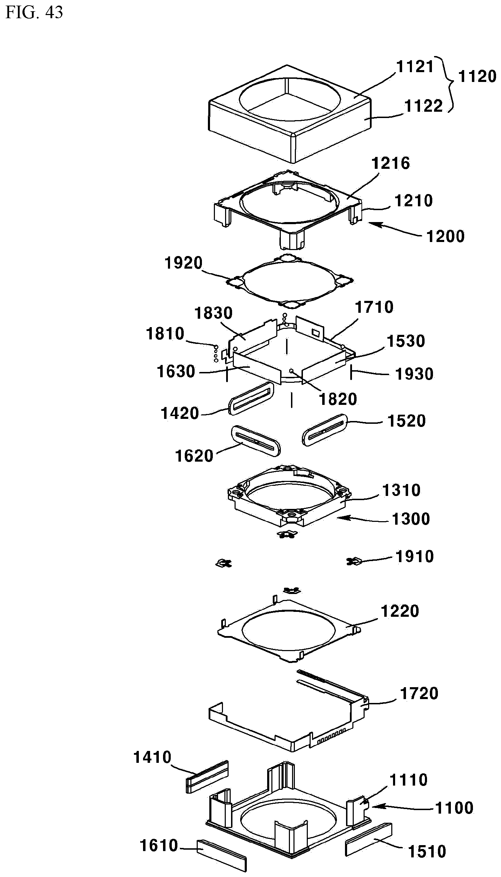

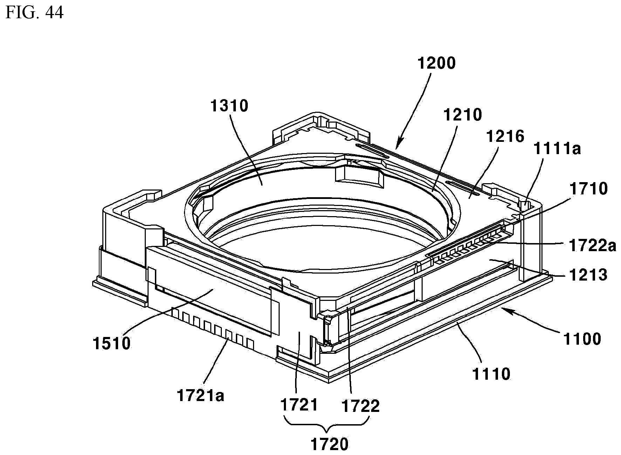

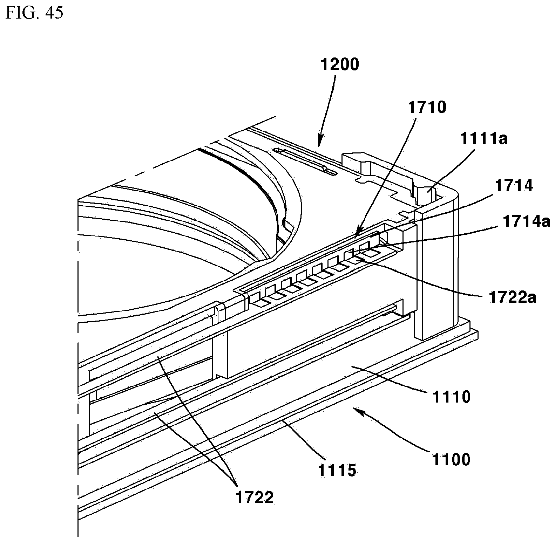

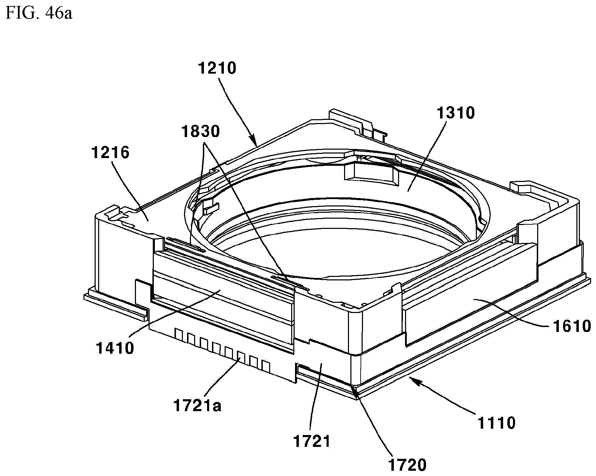

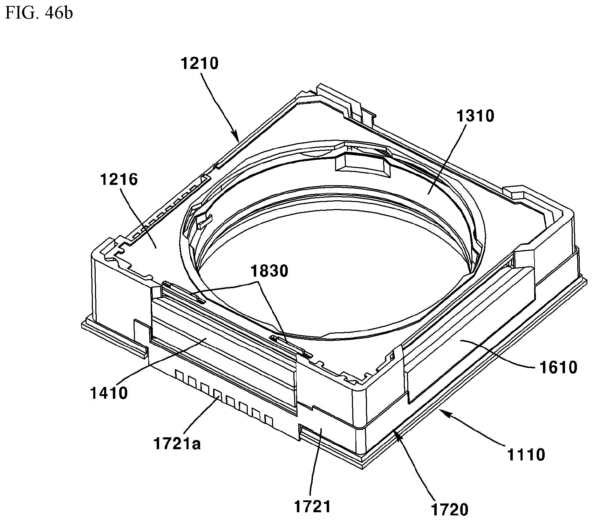

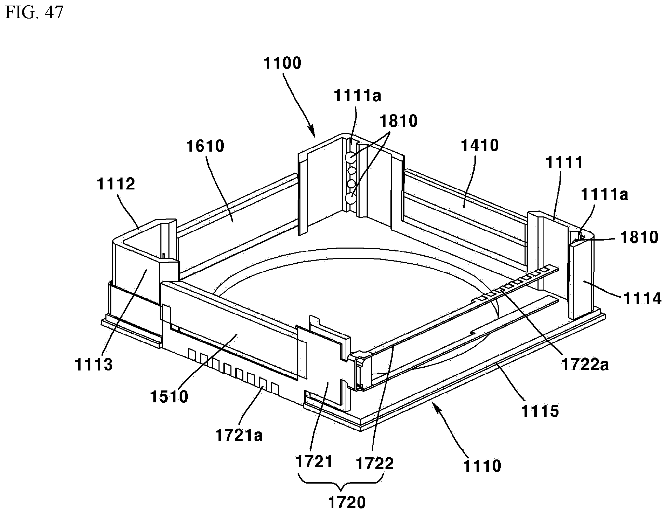

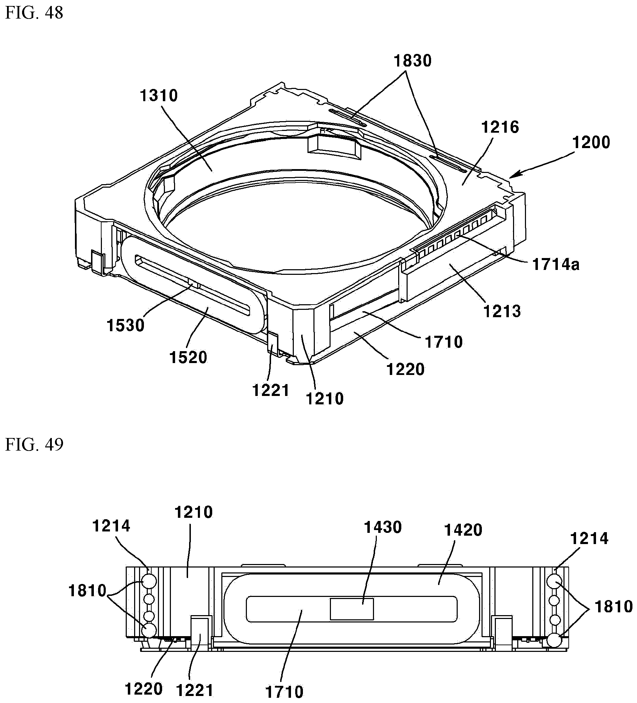

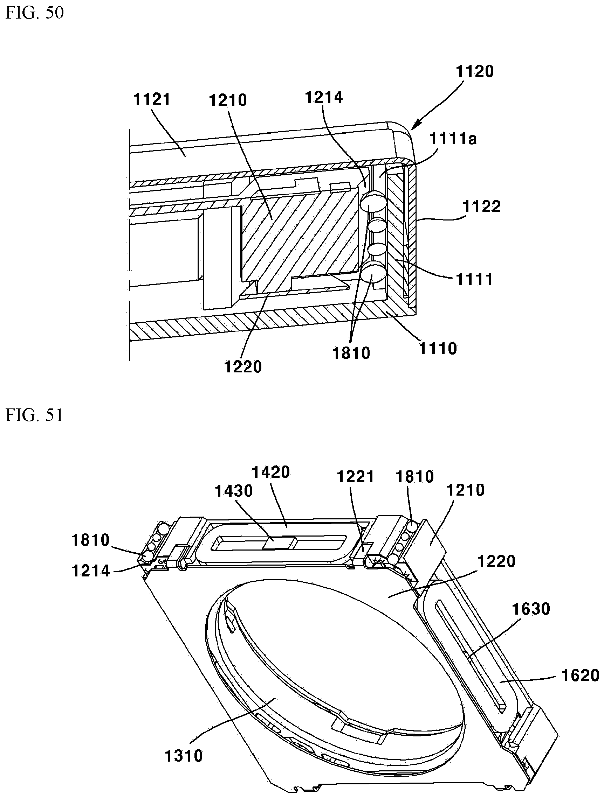

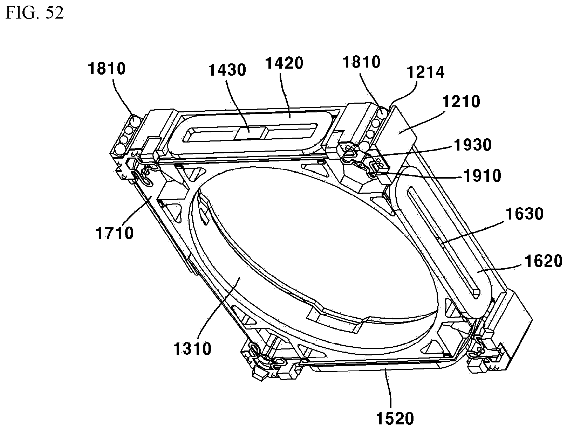

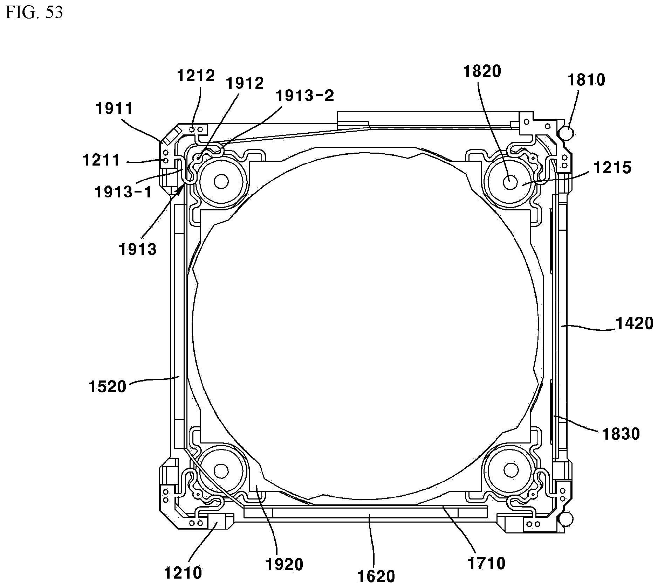

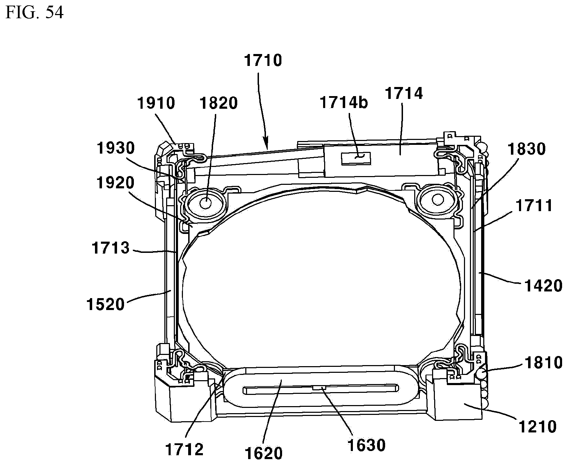

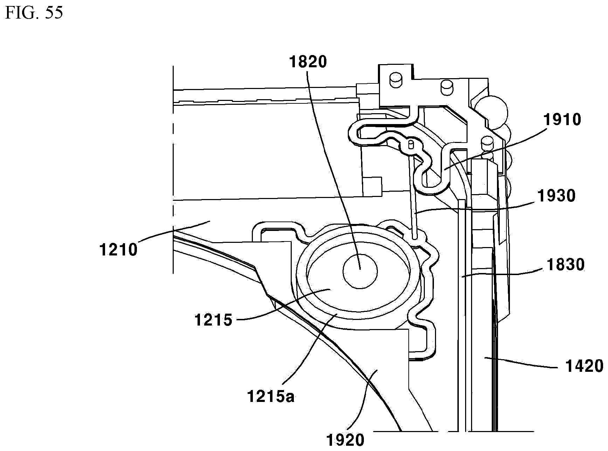

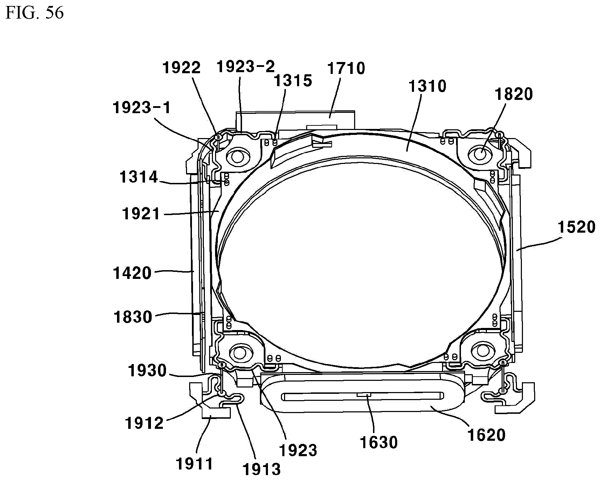

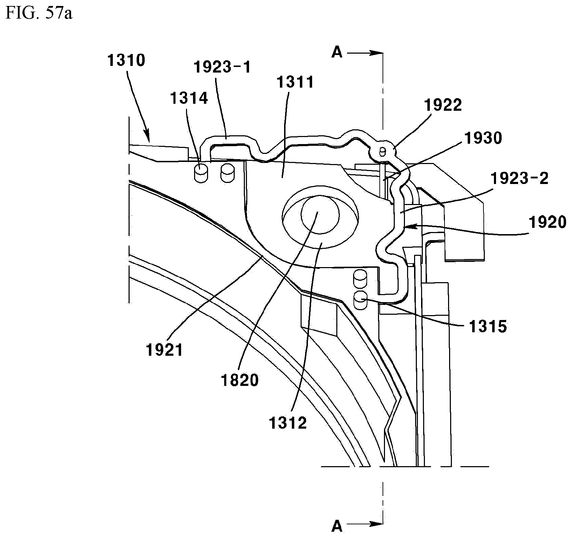

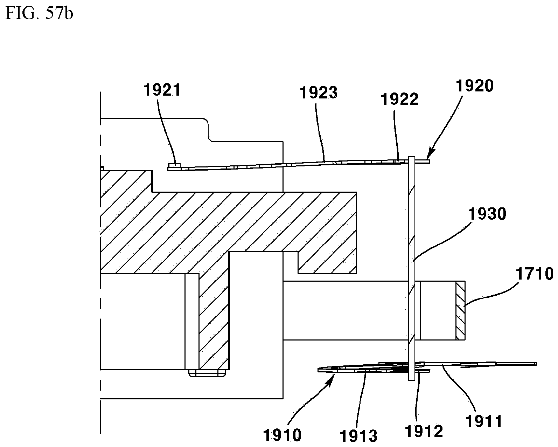

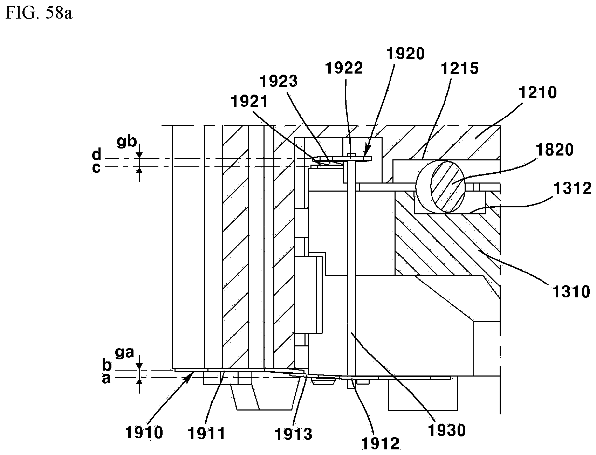

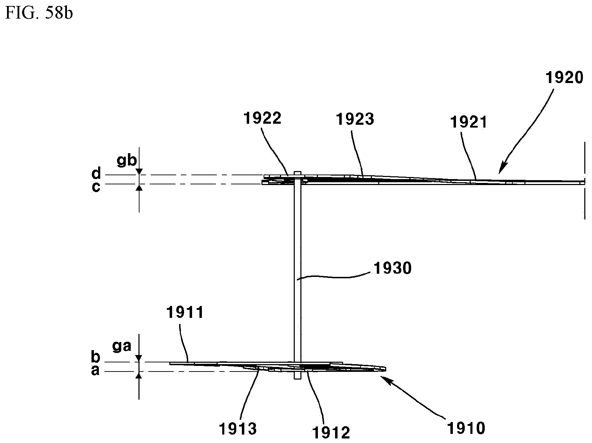

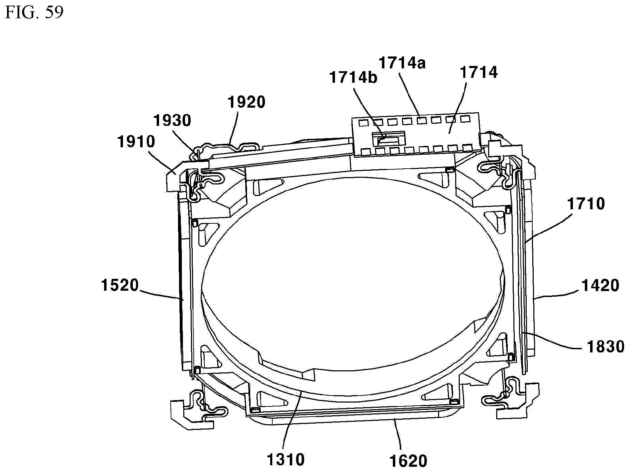

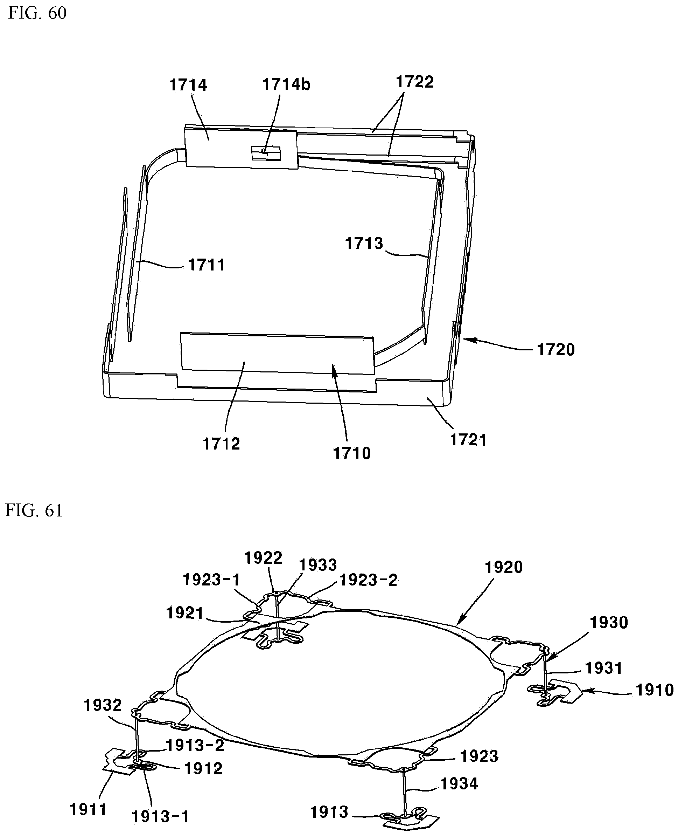

FIG. 37 is a conceptual diagram of a lens driving device according to a second embodiment of the present invention; FIG. 38 is a perspective view of a lens driving device according to a second embodiment of the present invention; FIG. 39 is a cross-sectional view taken along line A-A of FIG. 38; FIG. 40 is a cross-sectional view taken along line B-B of FIG. 38; FIG. 41 is a cross-sectional view taken along line C-C of FIG. 38; FIG. 42 is a cross-sectional view taken from above, cut perpendicular to the optical axis, of a lens driving device according to a second embodiment of the present invention; FIG. 43 is an exploded perspective view of a lens driving device according to a second embodiment of the present invention; FIG. 44 is a perspective view of a lens driving device according to a second embodiment of the present invention with the cover removed; FIG. 45 is an enlarged view illustrating a portion of FIG. 44; FIG. 46a is a perspective view of FIG. 44 viewed from another direction; FIG. 46b is a perspective view illustrating a state in which the metal member of the AF moving unit is omitted in FIG. 46; FIG. 47 is a perspective view illustrating a fixed unit and related components of a lens driving device according to a second embodiment of the present invention; FIG. 48 is a perspective view illustrating a moving unit and related components of a lens driving device according to a second embodiment of the present invention; FIG. 49 is a front view of FIG. 48 as seen from the front; FIG. 50 is a cross-sectional perspective view illustrating an AF guide ball and related component of a lens driving device according to a second embodiment of the present invention; FIG. 51 is a perspective view of FIG. 48 from a different direction; FIG. 52 is a perspective view of FIG. 51 with a cover removed; FIG. 53 is a bottom view of an AF moving unit and related components of a lens driving device according to a second embodiment of the present invention as viewed from below; FIG. 54 is a bottom perspective view of FIG. 53 as viewed from a different direction; FIG. 55 is an enlarged view illustrating a portion of FIG. 54 in an enlarged manner; FIG. 56 is a perspective view illustrating an OIS moving unit and related components of a lens driving device according to a second embodiment of the present invention; FIG. 57a is an enlarged view illustrating a portion of FIG. 56 in an enlarged manner; FIG. 57b is a cross-sectional view as viewed from A-A of FIG. 57a; FIG. 58a is a cross-sectional view illustrating a pressurizing structure of an OIS guide ball of a lens driving device according to a second embodiment of the present invention; FIG. 58b is a cross-sectional view illustrating a coupling structure of an elastic member and a wire of a lens driving device according to a second embodiment of the present invention; FIG. 59 is a bottom perspective view of FIG. 56 viewed from a different direction; FIG. 60 is a perspective view illustrating an inner substrate and an outer substrate of a lens driving device according to a second embodiment of the present invention; and FIG. 61 is a perspective view illustrating an elastic member and a wire of a lens driving device according to a second embodiment of the present invention.

The lens driving device **1010** may be a voice coil motor (VCM). The lens driving device **1010** may be a lens driving motor. The lens driving device **1010** may be a lens driving actuator. The lens driving device **1010** may comprise an AF module. The lens driving device **1010** may comprise an OIS module.

The lens driving device **1010** may comprise a fixed unit **1100.** The fixed unit **1100** may be a portion that is relatively fixed portion when the moving unit moves. The moving unit may move with respect to the fixed unit **1100.**

The lens driving device **1010** may comprise a base **1110.** The fixed unit **1100** may comprise a base **1110.** The base **1110** may be disposed below the AF holder **1210.** The base **1110** may be disposed below the OIS holder **1310.** The base **1110** may be coupled with the cover **1120.** The AF holder **1210** and the OIS holder **1310** may be disposed on the base **1110.** The AF holder **1210** and the OIS holder **1310** may be disposed on a lower plate of the base **1110.** The AF holder **1210** and the OIS holder **1310** may be disposed inside the base **1110.** The AF holder **1210** and the OIS holder **1310** can be disposed inside the side plate of the base **1110.**

In a second embodiment of the present invention, all of the AF magnet **1410,** the OIS-x magnet **1510,** and the OIS-y magnet **1610** can be disposed in the base **1110.** All of the AF magnet **1410,** the OIS-x magnet **1510,** and the OIS-y magnet **1610** can be disposed in the fixed unit **1100.** That is, in the auto focus operation, all of the AF magnet **1410,** the OIS-x magnet **1510,** and the OIS-y magnet **1610** can be maintained in a fixed state. In addition, in the shake correction operation, all of the AF magnet **1410,** the OIS-x magnet **1510,** and the OIS-y magnet **1610** can be maintained in a fixed state. In the auto focus operation, the AF magnet **1410** is fixed and the AF coil **1420** can move. In the image stabilization operation, the OIS-x and OIS-y magnets **1510** and **1610** are fixed and the OIS-x and OIS-y coils **1520** and **1620** can move.

The base **1110** may comprise a lower plate. The base **1110** may comprise a side plate. The side plate may be a 'side portion'. The side plate of the base **1110** may be extended from an upper surface of the lower plate.

The side plate of the base **1110** may comprise a plurality of side plates. The side plate of the base **1110** may comprise four side plates. However, one or more of the four side plates of the base **1110** may be omitted. The side plate of the base **1110** may comprise first to fourth side plates **1111, 1112, 1113,** and **1114.** The base **1110** may comprise a first side plate **1111** and a second side plate **1113** being disposed opposite to each other, and a third side plate **1112** and a fourth side plate **1114** being disposed opposite to each other.

The side portion of the base **1110** may comprise a plurality of side portions. The side portion of the base **1110** may comprise four side portions. However, one or more of the four side portions of the base **1110** may be omitted. The side portion of the base **1110** may comprise first to fourth side portions. The base **1110** may comprise a first side portion and a second side portion being disposed opposite to each other, and a third side portion and a fourth side portion being disposed opposite to each other.

The AF magnet **1410** may be disposed on the first side plate **1111** of the base **1110.** The OIS-x magnet **1510** may be disposed in the second side plate **1113** of the base **1110.** The OIS-y magnet **1610** may be disposed in the third side plate **1112** of the base **1110.**

The first side plate **1111** of the base **1110** may comprise a groove **1111a.** The groove **1111a** may be an 'AF guide ball accommodating groove'. An AF guide ball **1810** may be disposed in the groove **1111a.** The groove **1111a** may be in direct contact with the AF guide ball **1810.** The groove **1111a** may be disposed in an optical axis direction. The groove **1111a** may comprise a plurality of grooves. The groove **1111a** may comprise two grooves. The two grooves may be disposed parallel to each other. The groove **1111a** may comprise a first groove that comes into contact with the AF guide ball **1810** at two points, and a second groove that comes into contact with the AF guide ball **1810** at one point. In a modified embodiment, both the first groove and the second groove can come into contact with the AF guide ball **1810** at two points.

The second side plate **1113** of the base **1110** may comprise a protruded portion. The protruded portion may be protruded outwardly. An extended portion **1722** of an outer substrate **1720** may be disposed above and below the protruded portion. A groove may be formed in the protruded portion so as not to interfere even when the extended portion **1722** of the outer substrate **1720** moves.

The base **1110** may comprise a step **1115.** The step **1115** may be formed at a lower portion of the outer surface of the base **1110.** The step **1115** may be protruded from an outer surface of the base **1110.** A side plate **1122** of the cover **1120** may be disposed on the step **1115** of the base **1110.**

The lens driving device **1010** may comprise a cover **1120.** The fixed unit **1100** may comprise a cover **1120.** The cover **1120** may be disposed in the base **1110.** The cover **1120** may be coupled to the base **1110.** The cover **1120** may be fixed to the base **1110.** The cover **1120** may accommodate an AF holder **1210** therein. The cover **1120** may accommodate an OIS holder **1310** therein. The cover **1120** may be a shield member. The cover **1120** may be a shield can.

The cover **1120** may comprise an upper plate **1141.** The upper plate **1141** may be disposed on a moving unit. The upward movement of the moving unit may be limited as the moving unit is in contact with the upper plate **1141.** The upper plate **1141** may comprise a hole through which light passes.

The cover **1120** may comprise a side plate **1142.** The side plate **1142** may be extended from the upper plate **1141.** The side plate **1142** may be disposed in the base **1110.** The side plate **1142** may be disposed in a step portion being protruded from a lower portion of the outer surface of the base **1110.** The side plate **1142** may comprise a plurality of side plates. The side plate **1142** may comprise four side plates. The side plate **1142** may comprise a first side plate and a second side plate being disposed opposite to each other, and a third side plate and a fourth side plate disposed opposite to each other.

The lens driving device **1010** may comprise a moving unit. The moving unit may be disposed in the fixed unit **1100.** The moving unit may be disposed inside the fixed unit **1100.** The moving unit may be disposed on the fixed unit **1100.** The moving unit may be movably disposed in the fixed unit **1100.** The moving unit may be moved with respect to the fixed unit **1100** by the driving unit. The moving unit may be moved during AF driving. The moving unit may be moved during OIS driving. A lens may be coupled to the moving unit.

The lens driving device **1010** may comprise an AF moving unit **1200.** The AF moving unit **1200** may be disposed in the fixed unit **1100.** The AF moving unit **1200** may be disposed inside the fixed unit **1100.** The AF moving unit **1200** may be disposed on the fixed unit **1100.** The AF moving unit **1200** may be disposed between the fixed unit **1100** and the OIS moving unit **1300.** The AF moving unit **1200** may be movably disposed in the fixed unit **1100.** The AF moving unit **1200** may be moved in an optical axis direction against the fixed unit **1100** by the AF driving unit **1400.** The AF moving unit **1200** may be moved during AF driving.

The lens driving device **1010** may comprise an AF holder **1210.** The AF moving unit **1200** may comprise an AF holder **1210.** The AF holder **1210** may be an 'AF carrier'. The AF holder **1210** may be disposed in the base **1110.** The AF holder **1210** may be disposed on the base **1110.** The AF holder **1210** may be disposed inside the cover **1120.** The AF holder **1210** may be disposed between the base **1110** and the OIS holder **1310.** The AF holder **1210** may be movably disposed in an optical axis direction.

The AF holder **1210** may comprise a protrusion. The protrusion may be coupled with the lower elastic member **1910.** The lower elastic member **1910** may comprise a hole being coupled with the protrusion of the AF holder **1210.** In a modified embodiment, the AF holder **1210** may comprise a groove for accommodating an adhesive instead of the protrusion. In this case, the lower elastic member **1910** may comprise a hole disposed in the groove of the AF holder **1210.** The protrusion of the AF holder **1210** may be formed on a lower surface of the AF holder **1210.** The protrusion of the AF holder **1210** may be protruded from a lower surface of the AF holder **1210.**

The protrusion of the AF holder **1210** may comprise a plurality of protrusions. The protrusion of the AF holder **1210** may comprise a first protrusion **1211** and a second protrusion **1212.** The outer portion **1911** of the lower elastic member **1910** may comprise a first region being coupled with the first protrusion **1211** and a second region **1212** being coupled with the first protrusion **1212.** The wire **1930** may comprise a first wire **1931** disposed at a first corner region of the fixed unit **1100.** The coupling portion **1912** of the lower elastic member **1910** may comprise a first coupling portion being coupled with the first wire **1931.** The connecting portion **1913** of the lower elastic member **1910** may comprise a first connecting portion **1913-1** and a second connecting portion **1913-2** connecting the outer portion **1911** of the lower elastic member **1910** and the first coupling portion of the lower elastic member **1910.** The connecting portion **1913** of the lower elastic member **1910** may comprise a first connecting portion **1913-1** connecting the first region of the outer portion **1911** and the first coupling portion, and a second connecting portion **1913-2** connecting the second region of the outer portion **1911** and the first coupling portion. That is, the connecting portion **1913** of the lower elastic member **1910** may be provided with two strands of connecting portions to connect one outer portion **1911** and one coupling portion **1912.**

When viewed from below, the first and second connecting portions **1913-1** and **1913-2** of the lower elastic member **1910** may be symmetrical with respect to an imaginary straight line connecting the optical axis and the first corner region of the fixed unit **1100.**

The wire **1930** may comprise a second wire **1933** disposed in a second corner region of the fixed unit **1100.** The coupling portion **1912** of the lower elastic member **1910** may comprise a second coupling portion being coupled with the second wire **1933.** The wire **1930** may comprise a third wire **1932** being disposed in a third corner region of the fixed unit **1100.** The coupling portion **1912** of the lower elastic member **1910** may comprise a third coupling portion being coupled with the third wire **1932.** The wire **1930** may comprise a fourth wire **1934** being disposed in a fourth corner region of the fixed unit **1100.** The coupling portion **1912** of the lower elastic member **1910** may comprise a fourth coupling portion being coupled to the fourth wire **1934.** The first corner region of the fixed unit **1100** may be disposed to be diagonally opposite to the second corner region, and the third corner region may be disposed to be diagonally opposite to the fourth corner region.

The AF holder **1210** may comprise a protruded portion **1213.** The protruded portion **1213** may be formed on an outer surface of the AF holder **1210.** The protruded portion **1213** may be protruded outwardly from the AF holder **1210.** An extended portion **1722** of an outer substrate **1720** may be disposed on an upper surface and a lower surface of the protruded portion **1213.**

The AF holder **1210** may comprise a groove **1214.** The groove **1214** may be an 'AF guide ball accommodating groove'. An AF guide ball **1810** may be disposed in the groove **1214.** The groove **1214** may be in direct contact with the AF guide ball **1810.** The groove **1214** may be disposed in an optical axis direction. The groove **1214** may comprise a plurality of grooves. The groove **1214** may comprise two grooves. The two grooves may be disposed parallel to each other. The groove **1214** may comprise a first groove that comes into contact with the AF guide ball **1810** at two points, and a second groove that comes into contact with the AF guide ball **1810** at one point. In a modified embodiment, both the first groove and the second groove may come into contact with the AF guide ball **1810** at two points.

The AF holder **1210** may comprise a protrusion **1215a.** The protrusion **1215a** may be protruded from a lower surface of an upper plate of the AF holder **1210.** An OIS guide ball **1820** may be disposed on a lower surface of the protrusion **1215a.** The protrusion **1215a** may comprise a plurality of protrusions. The protrusion **1215a** may comprise four protrusions.

The AF holder **1210** may comprise a groove **1215.** The groove **1215** may be an 'OIS guide ball accommodating groove'. The groove **1215** may be formed in the protrusion **1215a.** The groove **1215** may be formed on a lower surface of the protrusion **1215a.** The groove **1215** may be concavely formed on a lower surface of the protrusion **1215a.** An OIS guide ball **1820** may be disposed in the groove **1215.** The groove **1215** may be in direct contact with the OIS guide ball **1820.**

The AF holder **1210** may comprise a metal member **1216.** The metal member **1216** may be insert-molded into the AF holder **1210.** At least a portion of the metal member **1216** may be disposed on an upper surface of the AF holder **1210.** The metal member **1216** may be disposed to reinforce the strength of the AF holder **1210.**

The AF holder **1210** may comprise a groove **1217.** The groove **1217** may be a "metal member accommodating groove." The groove **1217** may be formed on an upper surface of the AF holder **1210.** The groove **1217** may be formed concavely on an upper surface of the AF holder **1210.** A metal member **1216** may be disposed in the groove **1217.** The groove **1217** may be formed in a shape corresponding to the metal member **1216.**

The lens driving device **1010** may comprise a cover **1220.** The AF moving unit **1200** may comprise a cover **1220.** The cover **1220** may be coupled with the AF holder **1210.** The cover **1220** may be coupled to a lower surface of the AF holder **1210.** The cover **1220** may be coupled to the AF holder **1210** from the lower side. The cover **1220** may comprise a hook **1221.** The hook **1221** of the cover **1220** may be coupled to the AF holder **1210.** The hook **1221** of the cover **1220** may be protruded upward and coupled to a side surface of the AF holder **1210.**

The lens driving device **1010** may comprise an OIS moving unit **1300.** The OIS moving unit **1300** may be disposed in the fixed unit **1100.** The OIS moving unit **1300** may be disposed inside the fixed unit **1100.** The OIS moving unit **1300** may be disposed in the fixed unit **1100.** The OIS moving unit **1300** may be disposed inside the AF moving unit **1200.** The OIS moving unit **1300** may be movably disposed. The OIS moving unit **1300** may move in an x-axis direction perpendicular to the optical axis against the fixed unit **1100** and the AF moving unit **1200** by the OIS-x driving unit **1500.** The OIS moving unit **1300** can move in a y-axis direction perpendicular to the optical axis against the fixed unit **1100** and the AF moving unit **1200** by the OIS-y driving unit **1600.** The OIS moving unit **1300** can move during OIS driving.

The lens driving device **1010** may comprise an OIS holder **1310.** The OIS moving unit **1300** may comprise an OIS holder **1310.** The OIS holder **1310** may be an 'OIS carrier'. The OIS holder **1310** may be disposed inside the AF holder **1210.** The OIS holder **1310** may be disposed inside the base **1110.** The OIS holder **1310** may be disposed on the base **1110.** The OIS holder **1310** may be disposed inside the cover **1120.** The OIS holder **1310** may be movably disposed in a direction perpendicular to the optical axis.

The OIS holder **1310** may comprise an outer surface. The OIS holder **1310** may comprise a plurality of side surfaces. The OIS holder **1310** may comprise a first side surface and a second side surface being disposed opposite to each other, and a third side surface and a fourth side surface being disposed opposite to each other. The AF coil **1420** may be disposed between the first side surface of the OIS holder **1310** and the AF magnet **1410.** The OIS-x coil **1520** may be disposed between the second side surface of the OIS holder **1310** and the OIS-x magnet **1510.** The OIS-y coil **1620** may be disposed between the third side surface of the OIS holder **1310** and the OIS-y magnet **1610.** The AF coil **1420** may be disposed on a first side surface of the OIS holder **1310.** The OIS-x coil **1520** can be disposed on a second side surface of the OIS holder **1310.** The OIS-y coil **1620** can be disposed on a third side surface of the OIS holder **1310.**

The OIS holder **1310** may comprise a groove **1311.** The groove **1311** may be an 'upper elastic member interference prevention groove'. The groove **1311** may be formed on an upper surface of the OIS holder **1310.** The groove **1311** may be formed concavely on an upper surface of the OIS holder **1310.** The groove **1311** may be disposed at a position corresponding to the upper elastic member **1920** to prevent interference between the OIS holder **1310** and the upper elastic member **1920.**

The OIS holder **1310** may comprise a groove **1312.** The groove **1312** may be an 'OIS guide ball accommodating groove'. An OIS guide ball **1820** may be disposed in the groove **1312.** The groove **1312** may be in direct contact with the OIS guide ball **1820.** The groove **1312** may be disposed in a direction perpendicular to an optical axis. The groove **1312** may be recessed in an optical axis direction. The groove **1312** may comprise a plurality of grooves. The groove **1312** may comprise four grooves. The groove **1312** may be in contact with the OIS guide ball **1820** at one point. Or, the groove **1312** may be in contact with the OIS guide ball **1820** at two points. The number of contact points between the OIS holder **1310** and the OIS guide ball **1820** may vary depending on the movement of the OIS guide ball **1820.** The groove **1312** may be formed in the groove **1311.** The groove **1312** may be additionally recessed from the groove **1311.**

One of the grooves **1311** and **1312** of the OIS holder **1310** is referred to as a 'first groove' and the other may be referred to as a 'second groove'.

The OIS holder **1310** may comprise a lateral stopper. The lateral stopper may limit a lateral stroke of the OIS holder **1310.** That is, when the OIS holder **1310** moves to the maximum, the lateral stopper of the lower surface OIS holder **1310** may be in contact with at least one of the AF holder **1210** and the base **1110.** The lateral stopper may be formed on an outer surface of the OIS holder **1310.** The lateral stopper may be protruded outwardly from a side surface of the OIS holder **1310.**

The OIS holder **1310** may comprise a protrusion. The protrusion may be coupled with the upper elastic member **1920.** The upper elastic member **1920** may comprise a hole being coupled with the protrusion of the OIS holder **1310.** In a modified embodiment, the OIS holder **1310** may comprise a groove for accommodating an adhesive instead of the protrusion. In this case, the upper elastic member **1920** may comprise a hole being disposed in the groove of the OIS holder **1310.** The protrusion of the OIS holder **1310** may be formed on an upper surface of the OIS holder **1310.** The protrusion of the OIS holder **1310** may be protruded from an upper surface of the OIS holder **1310.**

The protrusion of the OIS holder **1310** may comprise a plurality of protrusions. The protrusion of the OIS holder **1310** may comprise a first protrusion **1314** and a second protrusion **1315.** The inner portion **1921** of the upper elastic member **1920** may comprise a first region being coupled with the first protrusion **1314** and a second region **1212** being coupled with the second protrusion **1315.** The wire **1930** may comprise a first wire **1931** being disposed at a first corner region of the fixed unit **1100.** The coupling portion **1922** of the upper elastic member **1920** may comprise a first coupling portion being coupled with the first wire **1931.** The connecting portion **1923** of the upper elastic member **1920** may comprise a first connecting portion **1923-1** and a second connecting portion **1923-2** connecting the inner portion **1921** of the upper elastic member **1920** and the first coupling portion of the upper elastic member **1920.** The connecting portion **1923** of the upper elastic member **1920** may comprise a first connecting portion **1923-1** connecting the first region of the inner portion **1921** and the first coupling portion, and a second connecting portion **1923-2** connecting the second region of the inner portion **1921** and the first coupling portion. That is, the connecting portion **1923** of the upper elastic member **1920** may be provided with two strands of connecting portions to connect one inner portion **1921** and one coupling portion **1922.**

When viewed from below, the first and second connecting portions **1923-1** and **1923-2** of the upper elastic member **1920** may be symmetrical with respect to an imaginary straight line connecting the optical axis and the first corner region of the fixed unit **1100.**

The coupling portion **1922** of the upper elastic member **1920** may comprise a second coupling portion being coupled with a second wire **1933.** The coupling portion **1922** of the upper elastic member **1920** may comprise a third coupling portion being coupled with a third wire **1932.** The coupling portion **1922** of the upper elastic member **1920** may comprise a fourth coupling portion being coupled with a fourth wire **1934.**

The lens driving device **1010** may comprise a driving unit. The driving unit may move a moving unit against the fixed unit **1100.** The driving unit may comprise an AF driving unit **1400.** The driving unit may comprise an OIS driving unit **1500** and **1600.** The driving unit may comprise a coil and a magnet.

The lens driving device **1010** may comprise an AF driving unit **1400.** The AF driving unit **1400** may move the AF moving unit **1200** in an optical axis direction. The AF driving unit **1400** may move the AF holder **1210** in an optical axis direction. The AF driving unit **1400** may move the AF holder **1210** in an optical axis direction through electromagnetic force. The AF driving unit **1400** may comprise a coil and a magnet.

In a second embodiment of the present invention, the AF holder **1210** and the OIS holder **1310** can move in an optical axis direction by the interaction between the AF coil **1420** and the AF magnet **1410.** The AF coil **1420,** the AF holder **1210,** and the OIS holder **1310** can move in an optical axis direction as one unit.

The lens driving device **1010** may comprise an AF magnet **1410.** The AF driving unit **1400** may comprise an AF magnet **1410.** The AF magnet **1410** may be disposed in the fixed unit **1100.** The AF magnet **1410** may be disposed in the base **1110.** The AF magnet **1410** may be disposed in the cover **1120.** The AF magnet **1410** may be disposed in the side plate **1122** of the cover **1120.** The AF magnet **1410** may be disposed on an outer surface of the base **1110.** The AF magnet **1410** may be disposed on an inner side surface of the base **1110.** The AF magnet **1410** may be fixed to the base **1110.** The AF magnet **1410** may be coupled to the base **1110.** The AF magnet **1410** may be attached to the base **1110** with an adhesive. The AF magnet **1410** may be disposed inside the cover **1120.** The AF magnet **1410** may interact with the AF coil **1420.** The AF magnet **1410** may electromagnetically interact with the AF coil **1420.** The AF magnet **1410** may be disposed at a position corresponding to the AF coil **1420.** The AF magnet **1410** may face the AF coil **1420.** The AF magnet **1410** and the AF coil **1420** may face each other. The AF magnet **1410** may be overlapped with the AF coil **1420** in a direction perpendicular to the optical axis.

The AF magnet **1410** may be a four-pole magnet. The AF magnet **1410** may comprise a four-pole magnetizing magnet. The AF magnet **1410** may comprise a first magnet portion comprising an N pole and an S pole, and a second magnet portion comprising an N pole and an S pole. The first magnet portion and the second magnet portion may be disposed in a vertical direction. The first magnet portion and the second magnet portion may be spaced apart from each other in a vertical direction, and a neutral portion may be disposed between the first magnet portion and the second magnet portion.

The lens driving device **1010** may comprise an AF coil **1420.** The AF driving unit **1400** may comprise an AF coil **1420.** The AF coil **1420** may interact with an AF magnet **1410.** The AF coil **1420** may move in an optical axis direction. The AF coil **1420** may move in an optical axis direction through interaction with the AF magnet **1410.** The AF coil **1420** may face the AF magnet **1410.** The AF coil **1420** may be disposed at a position corresponding to the AF magnet **1410.** The AF coil **1420** may be overlapped with the AF magnet **1410** in a direction perpendicular to the optical axis. The AF coil **1420** may be disposed in the inner substrate **1710.** The AF coil **1420** may be disposed in the first portion **1711** of the inner substrate **1710.** The AF coil **1420** may be disposed in the AF holder **1210.** The AF coil **1420** may be disposed in the AF moving unit **1200.**

In a modified embodiment, the AF magnet **1410** may be disposed in the AF moving unit **1200** and the AF coil **1420** may be disposed in the fixed unit **1100.** The AF magnet **1410** may be disposed in the AF holder **1210.** The AF coil **1420** may be disposed in the base **1110** through the substrate.

The lens driving device **1010** may comprise an AF sensor **1430.** The AF driving unit **1400** may comprise an AF sensor **1430.** The AF sensor **1430** may be a Hall sensor. The AF sensor **1430** may be disposed in the substrate **1740.** The AF sensor **1430** may be disposed in the first portion **1711** of the substrate **1740.** The AF sensor **1430** may detect the AF magnet **1410.** The AF sensor **1430** may detect movement of the AF magnet **1410.** The movement amount or position of the AF magnet **1410** detected by the AF sensor **1430** may be used for feedback of auto focus driving.

The AF sensor **1430** may be a driver IC. The driver IC may comprise a sensing unit. The sensing unit may comprise a Hall element (Hall IC). The driver IC may be electrically connected to the AF coil **1420.** The driver IC may supply current to the AF coil **1420.**

The AF sensor **1430** may be disposed inside the AF coil **1420.** The AF sensor **1430** may be overlapped with the neutral portion of the AF magnet **1410** in a direction perpendicular to the optical axis. In a modified embodiment, the AF sensor **1430** may be disposed in the outside of the AF coil **1420.**

The lens driving device **1010** may comprise an OIS-x driving unit **1500.** The OIS-x driving unit **1500** may move the OIS moving unit **1300** in an x-axis direction perpendicular to the optical axis direction. The OIS-x driving unit **1500** may move the OIS holder **1310** in an x-axis direction perpendicular to the optical axis. The OIS-x driving unit **1500** may move the OIS holder **1310** in an x-axis direction perpendicular to the optical axis using electromagnetic force. The OIS-x driving unit **1500** may comprise a coil and a magnet.

In a second embodiment of the present invention, the OIS holder **1310** can move in an x-axis direction perpendicular to the optical axis direction by the interaction between the OIS-x coil **1520** and the OIS-x magnet **1510.** The OIS-x coil **1520** and the OIS holder **1310** can move in an x-axis direction as one unit.

The lens driving device **1010** may comprise an OIS-x magnet **1510.** The OIS-x driving unit **1500** may comprise an OIS-x magnet **1510.** The OIS-x magnet **1510** may be disposed in the fixed unit **1100.** The OIS-x magnet **1510** may be disposed in the base **1110.** The OIS-x magnet **1510** may be disposed on an outer surface of the base **1110.** The OIS-x magnet **1510** may be disposed on an inner surface of the base **1110.** The OIS-x magnet **1510** may be fixed to the base **1110.** The OIS-x magnet **1510** may be coupled to the base **1110.** The OIS-x magnet **1510** may be attached to the base **1110** with an adhesive. The OIS-x magnet **1510** can be disposed inside the cover **1120.** The OIS-x magnet **1510** can interact with the OIS-x coil **1520.** The OIS-x magnet **1510** can electromagnetically interact with the OIS-x coil **1520.** The OIS-x magnet **1510** can be disposed at a position corresponding to the OIS-x coil **1520.** The OIS-x magnet **1510** can face the OIS-x coil **1520.** The OIS-x magnet **1510** and the OIS-x coil **1520** can face each other. The OIS-x magnet **1510** can be overlapped with the OIS-x coil **1520** in a direction perpendicular to the optical axis.

The second magnet **1610** may be a two-pole magnet. The OIS-x magnet **1510** may comprise a two-pole magnetizing magnet. The OIS-x magnet **1510** may comprise an N pole and an S pole. The inner surface of the OIS-x magnet **1510** is an N pole and the outer surface may be an S pole.

The lens driving device **1010** may comprise an OIS-x coil **1520.** The OIS-x driving unit **1500** may comprise an OIS-x coil **1520.** The OIS-x coil **1520** may interact with the OIS-x magnet **1510.** The OIS-x coil **1520** may move in an x-axis direction perpendicular to the optical axis. The OIS-x coil **1520** may move in an x-axis direction through interaction with the OIS-x magnet **1510.** The OIS-x coil **1520** may face the OIS-x magnet **1510.** The OIS-x coil **1520** and the OIS-x magnet **1510** may face each other. The OIS-x coil **1520** may be disposed at a position corresponding to the OIS-x magnet **1510.** The OIS-x coil **1520** may be overlapped with the OIS-x magnet **1510** in a direction perpendicular to the optical axis. The OIS-x coil **1520** may be disposed on the inner substrate **1710.** The OIS-x coil **1520** may be disposed in the second portion **1713** of the inner substrate **1710.** The OIS-x coil **1520** may be disposed in the OIS holder **1310.** The OIS-x coil **1520** may be disposed in the OIS moving unit **1300.**

The lens driving device **1010** may comprise an OIS-x sensor **1530.** The OIS-x driving unit **1500** may comprise an OIS-x sensor **1530.** The OIS-x sensor **1530** may be disposed in an inner substrate **1710.** The OIS-x sensor **1530** may be disposed in a second portion **1713** of the inner substrate **1710.** The OIS-x sensor **1530** may comprise a Hall sensor. The OIS-x sensor **1530** may detect an OIS-x magnet **1510.** The OIS-x sensor **1530** may detect a magnetic force of the OIS-x magnet **1510.** The OIS-x sensor **1530** may be disposed in an OIS-x coil **1520.** The OIS-x sensor **1530** may be overlapped with the OIS-x coil **1520** in an optical axis direction. The OIS-x sensor **1530** may face the OIS-x magnet **1510.** The OIS-x sensor **1530** may be disposed at a position corresponding to the OIS-x magnet **1510.** The OIS-x sensor **1530** may detect the movement of the OIS-x magnet **1510.** The amount of movement or position of the OIS-x magnet **1510** detected by the OIS-x sensor **1530** may be used for feedback of the shake correction driving in an x-axis direction.

The lens driving device **1010** may comprise an OIS-y driving unit **1600.** The OIS-y driving unit **1600** may move the OIS moving unit **1300** in a y-axis direction perpendicular to the optical axis direction and the x-axis direction. The OIS-y driving unit **1600** may move the OIS holder **1310** in a y-axis direction perpendicular to both the optical axis and the x-axis direction. The OIS-y driving unit **1600** may move the OIS holder **1310** in a y-axis direction perpendicular to both the optical axis and the x-axis direction through electromagnetic force. The OIS-y driving unit **1600** may comprise a coil and a magnet.

In a second embodiment of the present invention, the OIS holder **1310** can move in a y-axis direction perpendicular to both the optical axis direction and the x-axis direction by the interaction between the OIS-y coil **1620** and the OIS-y magnet **1610.** The OIS-y coil **1620** and the OIS holder **1310** can move in a y-axis direction as one unit.

The lens driving device **1010** may comprise an OIS-y magnet **1610.** The OIS-y driving unit **1600** may comprise an OIS-y magnet **1610.** The OIS-y magnet **1610** may be disposed in the fixed unit **1100.** The OIS-y magnet **1610** may be disposed in the base **1110.** The OIS-y magnet **1610** may be disposed on an outer surface of the base **1110.** The OIS-y magnet **1610** may be disposed on an inner surface of the base **1110.** The OIS-y magnet **1610** may be fixed to the base **1110.** The OIS-y magnet **1610** may be coupled to the base **1110.** The OIS-y magnet **1610** may be attached to the base **1110** with an adhesive. The OIS-y magnet **1610** may be disposed inside the cover **1120.** The OIS-y magnet **1610** may interact with the OIS-y coil **1620.** The OIS-y magnet **1610** may electromagnetically interact with the OIS-y coil **1620.** The OIS-y magnet **1610** may be disposed at a position corresponding to the OIS-y coil **1620.** The OIS-y magnet **1610** may face the OIS-y coil **1620.** The OIS-y magnet **1610** and the OIS-y coil **1620** may face each other. The OIS-y magnet **1610** may be overlapped with the OIS-y coil **1620** in a direction perpendicular to the optical axis.

The OIS-y magnet **1610** may be a two-pole magnet. The OIS-y magnet **1610** may comprise a two-pole magnetizing magnet. The OIS-y magnet **1610** may comprise an N pole and an S pole. The inner surface of the OIS-y magnet **1610** may be an N pole and the outer surface may be an S pole.

The lens driving device **1010** may comprise an OIS-y coil **1620.** The OIS-y driving unit **1600** may comprise an OIS-y coil **1620.** The OIS-y coil **1620** may interact with an OIS-y magnet **1610.** The OIS-y coil **1620** may be disposed on the opposite side of the AF coil **1420** with respect to the optical axis. The OIS-y coil **1620** may move in a y-axis direction perpendicular to both the optical axis and the x-axis. The OIS-y coil **1620** may move in a y-axis direction through interaction with the OIS-y magnet **1610.** The OIS-y coil **1620** may face the OIS-y magnet **1610.** The OIS-y coil **1620** and the OIS-y magnet **1610** may face each other. The OIS-y coil **1620** may be disposed at a position corresponding to the OIS-y magnet **1610.** The OIS-y coil **1620** may be overlapped with the OIS-y magnet **1610** in a direction perpendicular to the optical axis. The OIS-y coil **1620** may be disposed in the inner substrate **1710.** The OIS-y coil **1620** may be disposed in the third portion **1712** of the inner substrate **1710.** The OIS-y coil **1620** may be disposed in the OIS holder **1310.** The OIS-y coil **1620** may be disposed in the OIS moving unit **1300.**

The lens driving device **1010** may comprise an OIS-y sensor **1630.** The OIS-y driving unit **1600** may comprise an OIS-y sensor **1630.** The OIS-y sensor **1630** may be disposed in the inner substrate **1710.** The OIS-y sensor **1630** may be disposed in a third portion **1712** of the inner substrate **1710.** The OIS-y sensor **1630** may comprise a Hall sensor. The OIS-y sensor **1630** may detect an OIS-y magnet **1610.** The OIS-y sensor **1630** may detect a magnetic force of the OIS-y magnet **1610.** The OIS-y sensor **1630** may be disposed in an OIS-y coil **1620.** The OIS-y sensor **1630** may be overlapped with the OIS-y coil **1620** in an optical axis direction. The OIS-y sensor **1630** may face the OIS-y magnet **1610.** The OIS-y sensor **1630** may be disposed at a position corresponding to the OIS-y magnet **1610.** The OIS-y sensor **1630** may detect movement of the OIS-y magnet **1610.** The amount of movement or position of the OIS-y magnet **1610** detected by the OIS-y sensor **1630** may be used for feedback of the shake correction driving in a y-axis direction.

The lens driving device **1010** may comprise a substrate. The substrate may comprise a flexible substrate. The substrate may be electrically connected to the coil. The substrate may be electrically connected to the sensor. The substrate may be formed to be flexible. The substrate may be a circuit board. The substrate may be a printed circuit board.

The lens driving device **1010** may comprise an inner substrate **1710.** The inner substrate **1710** may be electrically connected to coils **1420, 1520,** and **1620.** The inner substrate **1710** may be electrically connected to sensors **1430, 1530,** and **1630.** The inner substrate **1710** may connect the AF holder **1210** and the OIS holder **1310.** The inner substrate **1710** may elastically connect the AF holder **1210** and the OIS holder **1310.** The inner substrate **1710** may movably support the OIS holder **1310** against the AF holder **1210.** The inner substrate **1710** can guide the OIS holder **1310** to move in a direction perpendicular to the optical axis against the AF holder **1210.** The inner substrate **1710** can comprise a flexible substrate. The inner substrate **1710** can comprise a flexible printed circuit board (FPCB). The inner substrate **1710** can comprise an elastic portion. The inner substrate **1710** can comprise an elastic member.

The inner substrate **1710** may comprise a first portion **1711.** The first portion **1711** may be disposed in an AF moving unit **1200.** The first portion **1711** may be disposed in an AF holder **1210.** An AF coil **1420** may be disposed in the first portion **1711** of the inner substrate **1710.** An AF sensor **1430** may be disposed in the first portion **1711** of the inner substrate **1710.** A yoke **1830** may be disposed in the first portion **1711** of the inner substrate **1710.**

The inner substrate **1710** may comprise a second portion **1713.** The second portion **1713** may be disposed in the OIS holder **1310.** The second portion **1713** may be disposed on a second side surface of the OIS holder **1310.** The OIS-x coil **1520** may be disposed in the second portion **1713** of the inner substrate **1710.** The OIS-x sensor **1530** may be disposed in the second portion **1713** of the inner substrate **1710.**

The inner substrate **1710** may comprise a third portion **1712.** The third portion **1712** may be disposed in the OIS holder **1310.** The third portion **1712** may be disposed on a third side surface of the OIS holder **1310.** The OIS-y coil **1620** may be disposed in the third portion **1712** of the inner substrate **1710.** The OIS-y sensor **1630** may be disposed in the third portion **1712** of the inner substrate **1710.**

The inner substrate **1710** may comprise a fourth portion **1714.** The fourth portion **1714** may be disposed between the OIS holder **1310** and the AF holder **1210.** The fourth portion **1714** may be disposed between the fourth side surface of the OIS holder **1310** and the AF holder **1210.**

However, in the 'first to fourth side surfaces' of the OIS holder **1310** described in the present specification, 'first to fourth' are only for distinguishing the side surfaces from one another, and may be referred to differently as needed. For example, the 'second side surface' is referred to as a 'first side surface' and the 'third side surface' may be referred to as a 'second side surface'.

The inner substrate **1710** may comprise a terminal **1714a.** The fourth portion **1714** of the inner substrate **1710** may comprise a terminal **1714a.** The terminal **1714a** may be electrically connected to coils **1420, 1520,** and **1620.** The terminal **1714a** may be electrically connected to sensors **1430, 1530,** and **1630.**

The inner substrate **1710** may comprise a hole **1714b.** The fourth portion **1714** of the inner substrate **1710** may comprise a hole **1714b.** The hole **1714b** may be formed to penetrate the fourth portion **1714** of the inner substrate **1710.** The hole **1714b** may be disposed at a position corresponding to a lateral stopper of the OIS holder **1310.** Due to the hole **1714b,** the inner substrate **1710** may not interfere with the lateral stopper of the OIS holder **1310.**

The lens driving device **1010** may comprise an outer substrate **1720.** The outer substrate **1720** may be disposed in a base **1110.** The outer substrate **1720** may be electrically connected to coils **1420, 1520,** and **1620.** The outer substrate **1720** may be electrically connected to sensors **1430, 1530,** and **1630.** The outer substrate **1720** may connect the AF holder **1210** and the base **1110.** The outer substrate **1720** may elastically connect the AF holder **1210** and the base **1110.** The outer substrate **1720** may movably support the AF holder **1210** against the base **1110.** The outer substrate **1720** can guide the AF holder **1210** to move in an optical axis direction against the base **1110.** The outer substrate **1720** can comprise a flexible substrate. The outer substrate **1720** can comprise a flexible printed circuit board (FPCB). The outer substrate **1720** can comprise an elastic portion. The outer substrate **1720** can comprise an elastic member.

The outer substrate **1720** may comprise a body portion **1721.** The body portion **1721** may be disposed in the fixed unit **1100.** The body portion **1721** may be disposed in the base **1110.** The body portion **1721** may be formed to surround a side surface of the base **1110.** The body portion **1721** may be disposed on three side surfaces of the base **1110.** The body portion **1721** may comprise two terminal portions. The two terminal portions may be disposed on opposite sides with respect to an optical axis. The terminal portion may comprise a terminal **1721a.**

The outer substrate **1720** may comprise a terminal **1721a.** The body portion **1721** of the outer substrate **1720** may comprise a terminal **1721a.** The terminal **1721a** may be electrically connected to the terminal **1722a.** The terminal **1721a** may be disposed at a lower end of the base **1110.** The terminal **1721a** may be coupled to a printed circuit board **1050.** The terminal **1721a** may be coupled to a terminal of the printed circuit board **1050** with a solder. The terminal **1721a** may be coupled to a terminal of the printed circuit board **1050** with a conductive member. The terminal **1721a** may be connected to a terminal of the printed circuit board **1050.** The terminal **1721a** can be electrically connected to a terminal of the printed circuit board **1050.**

The outer substrate **1720** may comprise an extended portion **1722.** The extended portion **1722** may be a 'leg portion'. The extended portion **1722** may be extended from the body portion **1721.** At least a portion of the extended portion **1722** may move together with the AF moving unit **1200.** At least a portion of the extended portion **1722** may move together with the AF holder **1210.** The extended portion may be extended from the body portion **1721.** The extended portion **1722** may comprise a plurality of leg portions. The extended portion **1722** may comprise a first leg portion and a second leg portion. The second leg portion may be disposed below the first leg portion.

The outer substrate **1720** may comprise a terminal **1722a.** The extended portion **1722** of the outer substrate **1720** may comprise a terminal **1722a.** The terminal **1722a** may be coupled to a terminal **1714a** of the inner substrate **1710.** The terminal **1722a** may be coupled to the terminal **1714a** of the inner substrate **1710** with a solder. The terminal **1722a** may be coupled to the terminal **1714a** of the inner substrate **1710** with a conductive member. The terminal **1722a** may be connected to the terminal **1714a** of the inner substrate **1710.** The terminal **1722a** may be electrically connected to the terminal **1714a** of the inner substrate **1710.**

The lens driving device **1010** may comprise a guide member. The guide member may comprise a ball. The guide member may comprise a pin. The guide member may comprise a cylindrical member. The guide member may guide movement of the moving unit against the fixed unit **1100** in a specific direction.

The lens driving device **1010** may comprise an AF guide ball **1810.** The AF guide ball **1810** may guide movement of the AF holder **1210** against the base **1110** in an optical axis direction. The AF guide ball **1810** may be disposed between the base **1110** and the AF holder **1210.** The AF guide ball **1810** may be disposed between the base **1110** and the AF holder **1210** in an x-axis direction. The AF guide ball **1810** may be disposed in a groove **1111a** of the base **1110.** The AF guide ball **1810** may be disposed in the first groove **1214** of the AF holder **1210.** The AF guide ball **1810** may comprise a first-first ball being in contacts with the base **1110** and the AF holder **1210** at four points, and a first-second ball being in contact with the base **1110** and the AF holder **1210** at three points. The AF guide ball **1810** may have a spherical shape. The AF guide ball **1810** may be formed of metal. Grease may be applied to the surface of the AF guide ball **1810.**

The AF guide ball **1810** may comprise a plurality of balls. The AF guide ball **1810** may comprise eight balls. Four AF guide balls **1810** may be disposed on one side of the AF magnet **1410,** and the remaining four AF guide balls **1810** may be disposed on the other side of the AF magnet **1410.**

The lens driving device **1010** may comprise an OIS guide ball **1820.** The OIS guide ball **1820** may guide movement of the OIS holder **1310** against the AF holder **1210** in a direction perpendicular to the optical axis. The OIS guide ball **1820** may be disposed between the AF holder **1210** and the OIS holder **1310.** The OIS guide ball **1820** may be disposed between the AF holder **1210** and the OIS holder **1310** in an optical axis direction. The OIS guide ball **1820** may be overlapped with the AF moving unit **1200** and the OIS moving unit **1300** in an optical axis direction. The OIS guide ball **1820** may be disposed between the AF moving unit **1200** and the OIS moving unit **1300** in an optical axis direction.

The OIS guide ball **1820** can be disposed between the AF holder **1210** and the OIS holder **1310.** The OIS guide ball **1820** can be pressed between the AF holder **1210** and the OIS holder **1310** by the pressing force of the elastic member.

The OIS guide ball **1820** can guide the OIS holder **1310** to move in an x-axis direction and a y-axis direction perpendicular to the optical axis direction with respect to the AF holder **1210.** That is, the OIS guide ball **1820** can guide the OIS holder **1310** to move in an x-axis direction and a y-axis direction. In other words, the OIS guide ball **1820** can guide movement in both the x-axis direction and the y-axis direction. For reference, in a second embodiment of the present invention in which the ball guiding an x-axis direction and the ball guiding a y-axis direction are provided integrally, the size of the lens driving device **1010** can be minimized when compared to a comparative example in which a ball guiding an x-axis direction and a ball guiding a y-axis direction are provided separately. In particular, the height of the lens driving device **1010** in an optical axis direction can be reduced. Through this, the height being protruded from the smartphone, that is, the shoulder height can be minimized. The OIS guide ball **1820** may comprise multiple balls. The OIS guide ball **1820** may comprise four balls.

When viewed from above, the OIS guide ball **1820** can be disposed inside a space being formed by the inner portion **1921,** the coupling portion **1922,** and the connecting portion **1923** of the upper elastic member **1920.** When viewed from above, the inner portion **1921,** the coupling portion **1922,** and the connecting portion **1923** of the upper elastic member **1920** can form a closed curve. At this time, the OIS guide ball **1820** can be disposed inside a space within the closed curve formed by the inner portion **1921,** the coupling portion **1922,** and the connecting portion **1923** of the upper elastic member **1920.**

The lens driving device **1010** may comprise a yoke **1830.** The yoke **1830** may be disposed in a first portion **1711** of the inner substrate **1710.** An attractive force may be generated between the yoke **1830** and the AF magnet **1410.** The yoke **1830** may be disposed at a position corresponding to the AF magnet **1410.** The yoke **1830** may be formed of metal. The AF guide ball **1810** may be pressed between the base **1110** and the AF holder **1210** by the attractive force between the yoke **1830** and the AF magnet **1410.** That is, the contact state of the AF guide ball 1810 with the base **1110** and the AF holder **1210** may be maintained by the attractive force between the yoke **1830** and the AF magnet **1410.**

The lens driving device **1010** may comprise an elastic member. The elastic member may be formed to pressurize the OIS guide ball **1820.** The elastic member may be formed to guide both the OIS-x-axis driving and the OIS-y-axis driving with only the OIS guide ball **1820.** The elastic member may comprise a leaf spring. The elastic member may comprise a wire. The elastic member may have elasticity. The elastic member may be formed of metal.

The lens driving device **1010** may comprise a lower elastic member **1910.** The lower elastic member **1910** may be a leaf spring. The lower elastic member **1910** may have elasticity. The lower elastic member **1910** may be disposed on a lower surface of the AF holder **1210.** The lower elastic member **1910** may be disposed in the AF holder **1210.** The lower elastic member **1910** may be disposed in a lower portion of the AF holder **1210.** The lower elastic member **1910** may be disposed below the AF holder **1210.** The lower elastic member **1910** may be disposed on a lower surface of the body portion **1721.** The lower elastic member **1910** may be coupled to a lower surface of the body portion **1721.** The lower elastic member **1910** may be disposed perpendicular to the optical axis.

The lower elastic member **1910** may comprise a plurality of elastic units spaced apart from one another. The lower elastic member **1910** may comprise first to fourth elastic units corresponding to the first to fourth wires **1931, 1932, 1933,** and **1934.** The first to fourth elastic units may be spaced apart from one another.

The lower elastic member **1910** may comprise an outer portion **1911.** The outer portion **1911** may be coupled with the AF moving unit **1200.** The lower elastic member **1910** may comprise a coupling portion **1912.** The coupling portion **1912** may be coupled with the wire **1930.** The lower elastic member **1910** may comprise a connecting portion **1913.** The connecting portion **1913** may connect the outer portion **1911** and the coupling portion **1912.** The coupling portion **1912** of the lower elastic member **1910** may be disposed lower than the outer portion **1911** of the lower elastic member **1910.**

Hereinafter, one among the outer portion **1911,** the coupling portion **1912,** and the connecting portion **1913** of the lower elastic member **1910** may be referred to as a "first portion", the other may be referred to as a "second portion", and yet the other may be referred to as a "third portion". Hereinafter, one among the outer portion **1911,** the coupling portion **1912,** and the connecting portion **1913** of the lower elastic member **1910** may be referred to as a "first region", the other may be referred to as a "second region", and yet the other may be referred to as a "third region".

The lens driving device **1010** may comprise an upper elastic member **1920.** The upper elastic member **1920** may be a leaf spring. The upper elastic member **1920** may have elasticity. The upper elastic member **1920** may be disposed on an upper surface of the OIS holder **1310.** The upper elastic member **1920** may be disposed on the OIS holder **1310.** The upper elastic member **1920** may be disposed on an upper portion of the OIS holder **1310.** The upper elastic member **1920** may be disposed above the OIS holder **1310.** The upper elastic member **1920** may be disposed perpendicular to the optical axis. The upper elastic member **1920** may be formed integrally.

The upper elastic member **1920** may comprise an inner portion **1921.** The inner portion **1921** may be coupled with the OIS moving unit **1300.** The upper elastic member **1920** may comprise a coupling portion **1922.** The coupling portion **1922** may be coupled with a wire **1930.** The upper elastic member **1920** may comprise a connecting portion **1923.** The connecting portion **1923** may connect the inner portion **1921** and the coupling portion **1922.** The coupling portion **1922** of the upper elastic member **1920** may be disposed higher than the inner portion **1921** of the upper elastic member **1920.**

Hereinafter, one among the inner portion **1921,** the coupling portion **1922,** and the connecting portion **1923** of the upper elastic member **1920** may be referred to as a "first portion", the other may be referred to as a "second portion", and yet the other may be referred to as a "third portion". Hereinafter, one among the inner portion **1921,** the coupling portion **1922,** and the connecting portion **1923** of the upper elastic member **1920** may be referred to as a "first region", the other may be referred to as a "second region", and yet the other may be referred to as a "third region".

The lower elastic member **1910** can connect the first region of the wire **1930** and the AF moving unit **1200.** The upper elastic member **1920** can connect the second region of the wire **1930** and the OIS moving unit **1300.** The second region of the wire **1930** can be disposed higher than the first region. That is, the first region of the wire **1930** can be disposed lower than the second region.

As illustrated in FIGS. 58a and 58b, in an optical axis direction, the distance between the first region **a** and the second region **d** of the wire **1930** may be longer than the distance between the outer portion **1911, b,** of the lower elastic member **1910** and the inner portion **1921, c,** of the upper elastic member **1920.** The first region a in the wire **1930** may be disposed lower than the outer portion **1911, b,** of the lower elastic member **1910.** A first gap **ga** may be formed in an optical axis direction between the first region **a** in the wire **1930** and the outer portion **1911, b,** of the lower elastic member **1910.** The second region **d** of the wire **1930** may be disposed higher than the inner portion **1921, c,** of the upper elastic member **1920.** A second gap **gb** can be formed in an optical axis direction between the second region d of the wire **1930** and the inner portion **1921, c,** of the upper elastic member **1920.**

Through this structure, the OIS guide ball **1820** can be pressed between the AF moving unit **1200** and the OIS moving unit **1300** by the lower elastic member **1910,** the upper elastic member **1920,** and the wire **1930.** That is, through this structure, the OIS guide ball **1820** can be pressed between the AF holder **1210** and the OIS holder **1310** by the lower elastic member **1910,** the upper elastic member **1920,** and the wire **1930.**

In a modified embodiment, in an optical axis direction, the distance between the first region **a** and the second region **d** in the wire **1930** may be equal to the distance between the outer portion **1911, b,** of the lower elastic member **1910** and the inner portion **1921, c,** of the upper elastic member **1920.**

In a modified embodiment, the first region **a** in the wire **1930** may be disposed at the same height as the outer portion **1911, b,** of the lower elastic member **1910.** Or, the second region **d** in the wire **1930** may be disposed at the same height as the inner portion **1921, c,** of the upper elastic member **1920.**

The lens driving device **1010** may comprise a wire **1930.** The wire **1930** may be a 'side portion elastic member'. The wire **1930** may be a wire spring. The wire **1930** may be a suspension wire. The wire **1930** may have elasticity. The wire **1930** may connect the upper elastic member **1920** and the lower elastic member **1910.** The wire **1930** may elastically connect the upper elastic member **1920** and the lower elastic member **1910.** The wire **1930** may be disposed parallel to the optical axis. The wire **1930** may be disposed parallel to the optical axis direction.

The wire **1930** may comprise a plurality of wires. The wire **1930** may comprise four wires. The wire **1930** may comprise first to fourth wires **1931, 1932, 1933,** and **1934.** The wire **1930** may comprise first to fourth wires **1931, 1932, 1933,** and **1934** respectively disposed in the first to fourth corner regions of the fixed unit **1100.**

Hereinafter, the auto focus AF driving of the lens driving device according to a second embodiment of the present invention will be described with reference to the drawings.

FIGS. 62 to 64 are diagrams for explaining an auto focus driving of a lens driving device according to a second embodiment of the present invention. FIG. 62 is a cross-sectional view illustrating an appearance of a moving unit in an initial state in which no current is applied to an AF coil. FIG. 63 is a cross-sectional view illustrating an appearance in which a moving unit moves upward in an optical axis direction when a forward current is applied to an AF coil. FIG. 64 is a cross-sectional view illustrating an appearance in which a moving unit moves downward in an optical axis direction when a reverse current is applied to an AF coil.

The moving unit may be disposed at a position spaced apart from both the upper plate **1121** of the cover **1120** and the base **1110** in an initial position where no current is applied to the AF coil **1420.** At this time, the moving unit may be an AF moving unit **1200.** In addition, the moving unit may comprise an AF moving unit **1200** and an OIS moving unit **1300.**

When a forward current is applied to the AF coil **1420,** the AF coil **1420** can move upward in an optical axis direction due to the electromagnetic interaction between the AF coil **1420** and the AF magnet **1410** (see **A** of FIG. 63). At this time, the AF holder **1210** can move upward in an optical axis direction together with the AF coil **1420.** Furthermore, the OIS holder **1310** and the lens can move upward in an optical axis direction together with the AF holder **1210.** Accordingly, the distance between the lens and the image sensor can be changed, and the focus of the image formed on the image sensor through the lens can be adjusted.

When a reverse current is applied to the AF coil **1420,** the AF coil **1420** can move downward in an optical axis direction due to the electromagnetic interaction between the AF coil **1420** and the AF magnet **1410** (see **B** of FIG. 64). At this time, the AF holder **1210** can move downward in an optical axis direction together with the AF coil **1420.** Furthermore, the OIS holder **1310** and the lens can move downward in an optical axis direction together with the AF holder **1210.** Accordingly, the distance between the lens and the image sensor can be changed, and the focus of the image being formed on the image sensor through the lens can be adjusted.

Meanwhile, during the movement process of the AF coil **1420,** the AF sensor **1430** moves together with the AF coil **1420** and detects the strength of the magnetic field of the AF magnet **1410** to detect the amount of movement or position of the lens in an optical axis direction. The amount of movement or position of the lens in an optical axis direction detected by the AF sensor **1430** can be used for auto focus feedback control.

Hereinafter, the optical image stabilization (OIS) operation of the lens driving device according to a second embodiment of the present invention will be described with reference to the drawings.

FIGS. 65 to 67 are drawings for explaining a hand shake correction driving of a lens driving device according to a second embodiment of the present invention. FIG. 65 is a cross-sectional view illustrating an appearance of a moving unit in an initial state in which no current is applied to an OIS-x coil and an OIS-y coil. FIG. 66 is a cross-sectional view illustrating an OIS moving unit moving in an x-axis direction perpendicular to an optical axis when a current is applied to an OIS-x coil. FIG. 67 is a cross-sectional view illustrating an OIS moving unit moving in a y-axis direction perpendicular to both an optical axis and an x-axis when a current is applied to an OIS-y coil.

As illustrated in FIG. 65, the moving unit may be disposed in an initial position where no current is applied to the OIS-x coil **1520** and the OIS-y coil **1620.** At this time, the moving unit may be an OIS moving unit **1300.**

When a current is applied to the OIS-x coil **1520,** the OIS-x coil **1520** can move in an x-axis direction perpendicular to the optical axis due to the electromagnetic interaction between the OIS-x coil **1520** and the OIS-x magnet **1510** (see a of FIG. 66). At this time, the OIS holder **1310** can move in an x-axis direction together with the OIS-x coil **1520.** Furthermore, the lens can move in an x-axis direction together with the OIS holder **1310.** In more detail, when a forward current is applied to the OIS-x coil **1520,** the OIS holder **1310,** and the lens can move in one direction along an x-axis. In addition, when a reverse current is applied to the OIS-x coil **1520,** the OIS-x coil **1520,** the OIS holder **1310,** and the lens can move in the other direction along an x-axis.

When a current is applied to the OIS-y coil **1620,** the OIS-y coil **1620** can move in a y-axis direction perpendicular to the optical axis due to the electromagnetic interaction between the OIS-y coil **1620** and the OIS-y magnet **1610** (see **b** of FIG. 67). At this time, the OIS holder **1310** can move in a y-axis direction together with the OIS-y coil **1620.** Furthermore, the lens can move in a y-axis direction together with the OIS holder **1310.** In more detail, when a positive current is applied to the OIS-y coil **1620,** the OIS holder **1310,** and the lens can move in one direction along a y-axis. In addition, when a reverse current is applied to the OIS-y coil **1620,** the OIS-y coil **1620,** the OIS holder **1310,** and the lens can move in the other direction along a y-axis.

Meanwhile, the OIS-x sensor **1530** can detect the amount of movement or position of the OIS-x coil **1520** by detecting the strength of the magnetic field of the OIS-x magnet **1510.** The amount of movement or position detected by the OIS-x sensor **1530** can be used for x-axis direction shake correction feedback control. The OIS-y sensor **1630** can detect the amount of movement or position of the OIS-y coil **1620** by detecting the strength of the magnetic field of the OIS-y magnet **1610.** The amount of movement or position detected by the OIS-y sensor **1630** can be used for y-axis direction shake correction feedback control.

Hereinafter, a camera device according to a second embodiment of the present invention will be described with reference to the drawings.

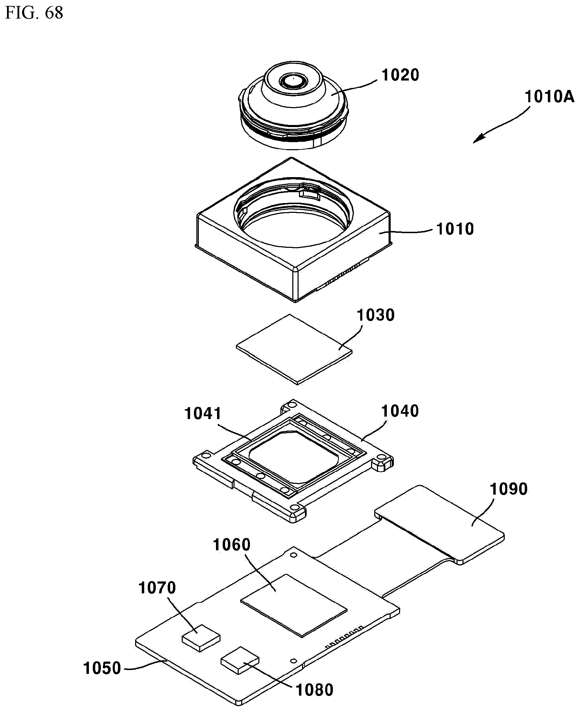

FIG. 68 is an exploded perspective view of a camera device according to a second embodiment of the present invention.

The camera device **1010A** may comprise a camera module.

The camera device **1010A** may comprise a lens module **1020.** The lens module **1020** may comprise at least one lens. The lens may be disposed at a position corresponding to the image sensor **1060.** The lens module **1020** may comprise a lens and a barrel. The lens module **1020** may be coupled to the OIS holder **1310** of a lens driving device **1010.** The lens module **1020** may be coupled to the OIS holder **1310** by screw coupling and/or an adhesive. The lens module **1020** may be moved integrally with the OIS holder **1310.**

The camera device **1010A** may comprise a filter **1030.** The filter **1030** may serve to block light of a specific frequency band passing through the lens module **1020** from being incident on the image sensor **1060.** The filter **1030** may be disposed parallel to an x-y plane. The filter **1030** may be disposed between the lens module **1020** and the image sensor **1060.** The filter **1030** may be disposed in the sensor base **1040.** In a modified embodiment, the filter **1030** may be disposed in the base **1110.** The filter **1030** may comprise an infrared filter. The infrared filter may block light of an infrared region from being incident on the image sensor **1060.**

The camera device **1010A** may comprise a sensor base **1040.** The sensor base **1040** may be disposed between the lens driving device **1010** and the printed circuit board **1050.** The sensor base **1040** may comprise a protruded portion **1041** in which a filter **1030** is disposed. An opening may be formed in a portion of the sensor base **1040** in which the filter **1030** is disposed so that light passing through the filter **1030** may be incident on the image sensor **1060.** The adhesive member may couple or attach the base **1310** of the lens driving device **1010** to the sensor base **1040.** The adhesive member may additionally serve to prevent foreign substances from entering inside the lens driving device **1010.** The adhesive member may comprise at least one among an epoxy, a thermosetting adhesive, and an ultraviolet-curable adhesive.

The camera device **1010A** may comprise a printed circuit board (PCB) **1050.** The printed circuit board **1050** may be a substrate or a circuit board. A lens driving device **1010** may be disposed on the printed circuit board **1050.** A sensor base **1040** may be disposed between the printed circuit board **1050** and the lens driving device **1010.** The printed circuit board **1050** may be electrically connected to the lens driving device **1010.** An image sensor **1060** may be disposed in the printed circuit board **1050.** Various circuits, components, control units, and the like may be provided in the printed circuit board **1050** to convert an image being formed on the image sensor **1060** into an electrical signal and transmit it to an external device.

The camera device **1010A** may comprise an image sensor **1060.** The image sensor **1060** may be configured such that light passing through a lens and a filter **1030** is incident thereon to form an image. The image sensor **1060** may be mounted on a printed circuit board **1050.** The image sensor **1060** may be electrically connected to the printed circuit board **1050.** For example, the image sensor **1060** may be coupled to the printed circuit board **1050** by surface mounting technology (SMT). As another example, the image sensor **1060** may be coupled to the printed circuit board **1050** by flip chip technology. The image sensor **1060** may be disposed such that the optical axis is aligned with the lens. That is, the optical axis of the image sensor **1060** and the optical axis of the lens can be aligned. The image sensor **1060** can convert light irradiated to the effective image area of the image sensor **1060** into an electrical signal. The image sensor **1060** can be any one among a charge coupled device (CCD), a metal oxide semi-conductor (MOS), a CPD, and a CID.

The camera device **1010A** may comprise a motion sensor **1070.** The motion sensor **1070** may be mounted on a printed circuit board **1050.** The motion sensor **1070** may be electrically connected to a control unit **1080** through a circuit pattern being provided in the printed circuit board **1050.** The motion sensor **1070** may output rotational velocity information due to the movement of the camera device **1010A.** The motion sensor **1070** may comprise a two-axis or three-axis gyro sensor or an angular velocity sensor.

The camera device **1010A** may comprise a control unit **1080.** The control unit **1080** may be disposed in a printed circuit board **1050.** The control unit **1080** may be electrically connected to a coil **1330** of a lens driving device **1010.** The control unit **1080** may individually control the direction, intensity, amplitude, and the like of current supplied to the coil **1330.** The control unit **1080** may control the lens driving device **1010** to perform an auto focus function and/or an image stabilization function. Furthermore, the control unit **1080** may perform auto focus feedback control and/or image stabilization feedback control for the lens driving device **1010.**

The camera device **1010A** may comprise a connector **1090.** The connector **1090** may be electrically connected to a printed circuit board **1050.** The connector **1090** may comprise a port for electrically connecting to an external device.

Hereinafter, an optical device according to a second embodiment of the present invention will be described with reference to the drawings.

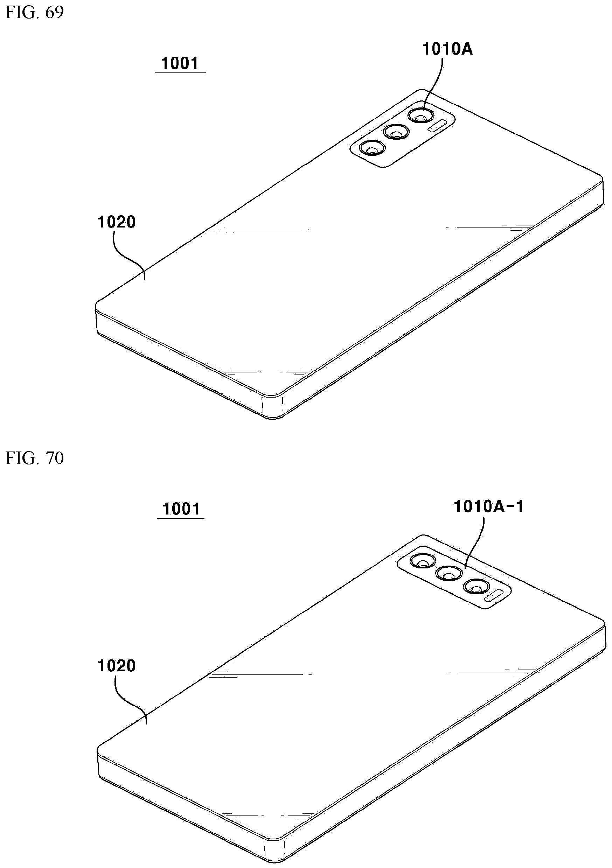

FIG. 69 is a perspective view of an optical device according to a second embodiment of the present invention.

The optical device **1001** may comprise at least one among a mobile phone, a cellular phone, a portable terminal, a mobile terminal, a smart phone, a smart pad, a portable smart device, a digital camera, a laptop computer, a digital broadcasting terminal, a personal digital assistant (PDA), a portable multimedia player (PMP), and a navigation device. The optical device **1001** may comprise any device for photographing videos or pictures.

The optical device **1001** may comprise a main body **1020.** The optical device **1001** may comprise a camera device **1010A.** The camera device **1010A** may be disposed in the main body **1020.** The camera device **1010A** may capture a subject. The optical device **1001** may comprise a display. The display may be disposed in the main body **1020.** The display may output one or more of an image and a video captured by the camera device **1010A.** The display may be disposed on a first surface of the main body **1020.** The camera device **1010A** may be disposed on one or more of the first surface of the main body **1020** and the second surface opposite to the first surface. As illustrated in FIG. 69, in the camera device **1010A,** a triple camera may be disposed in a vertical direction. As illustrated in FIG. 70, in the camera device **1010A-1,** a triple camera may be disposed in a horizontal direction.

Hereinafter, the configuration of a lens driving device according to a third embodiment of the present invention is described with reference to the drawings.

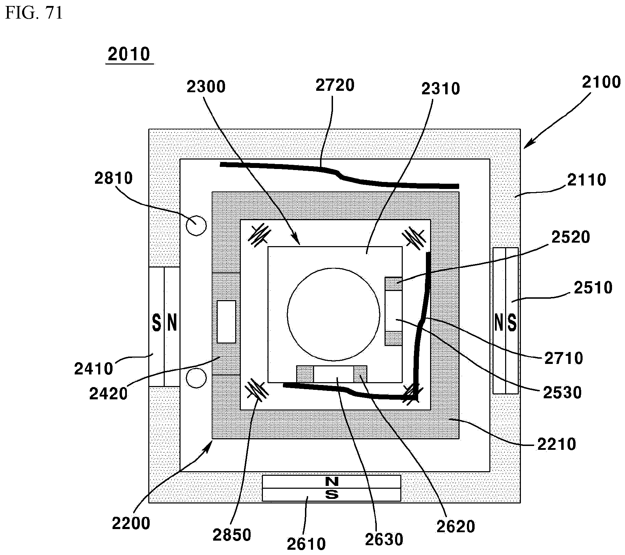

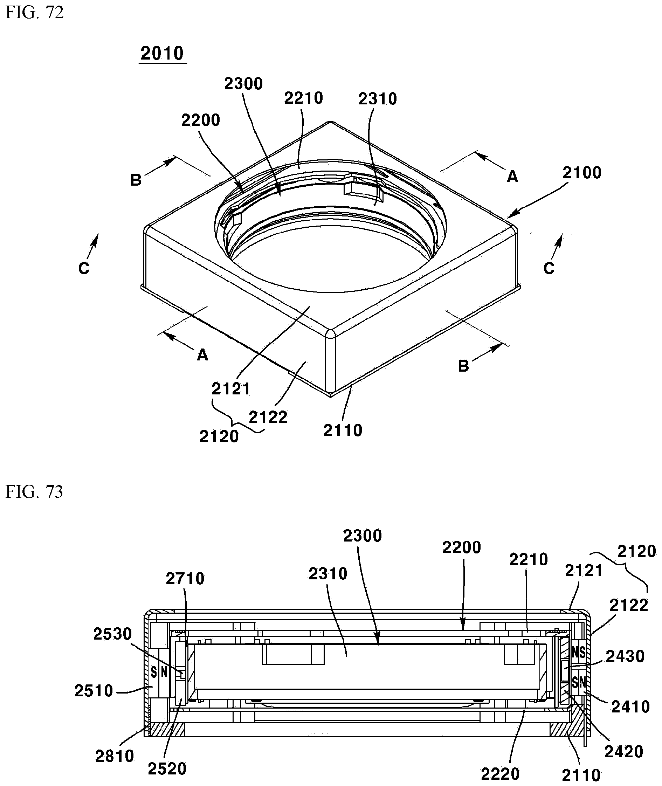

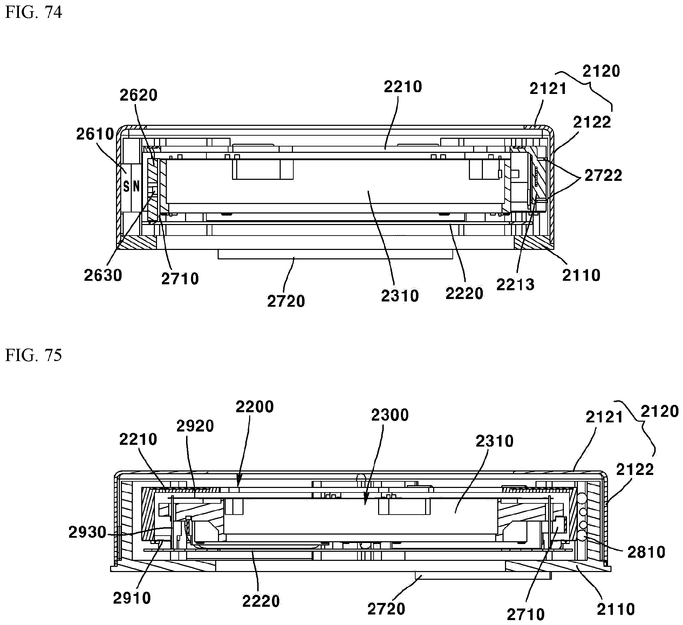

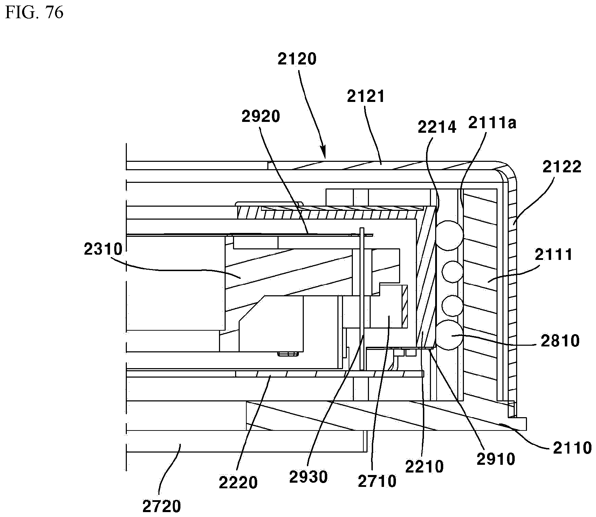

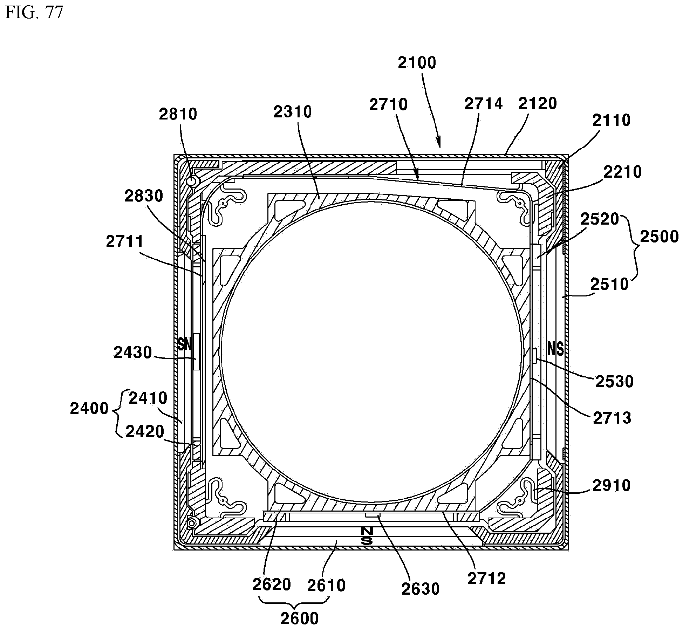

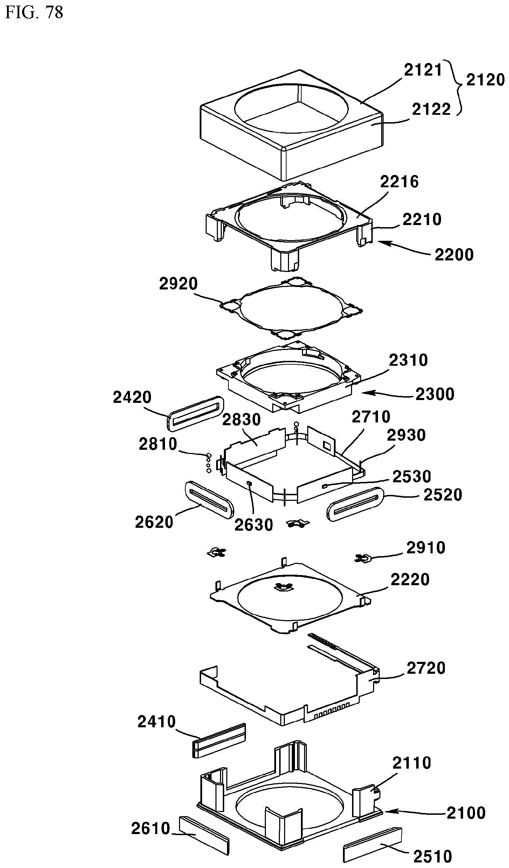

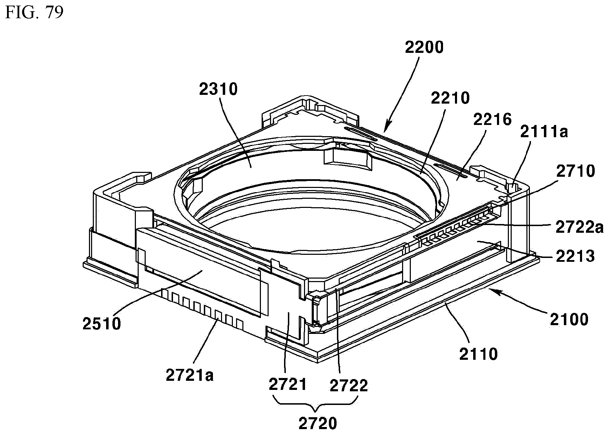

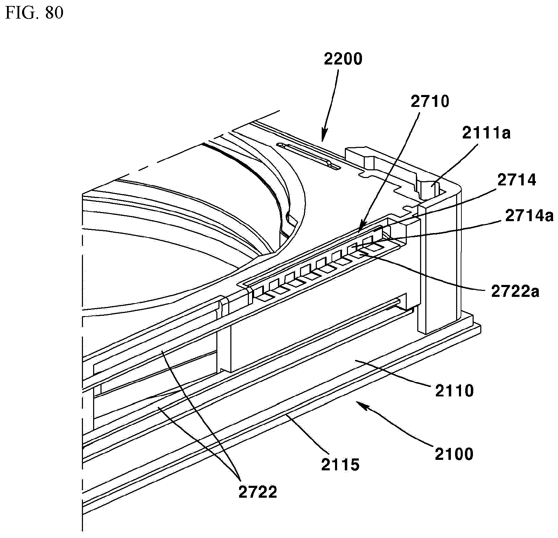

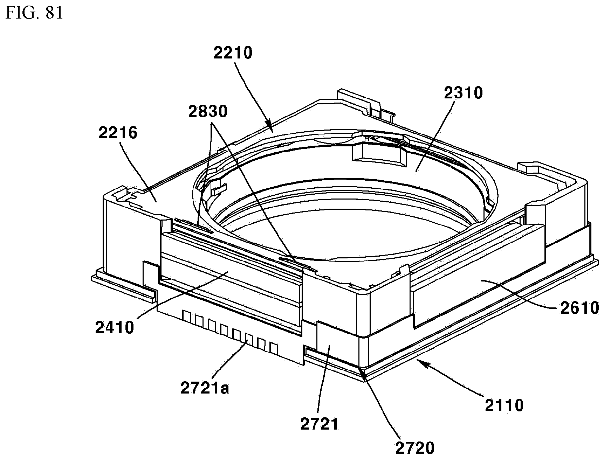

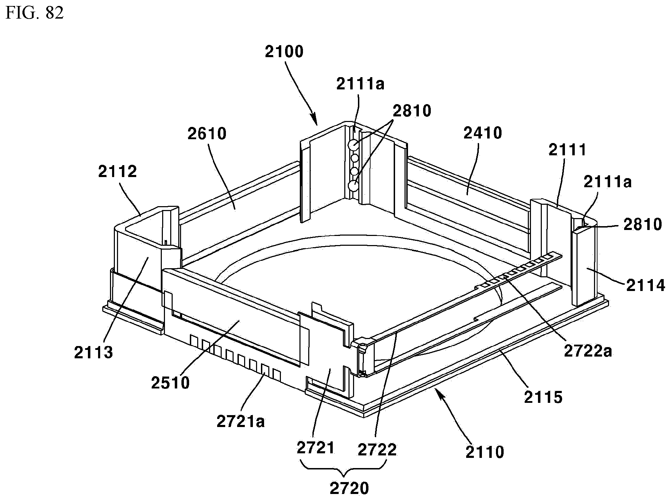

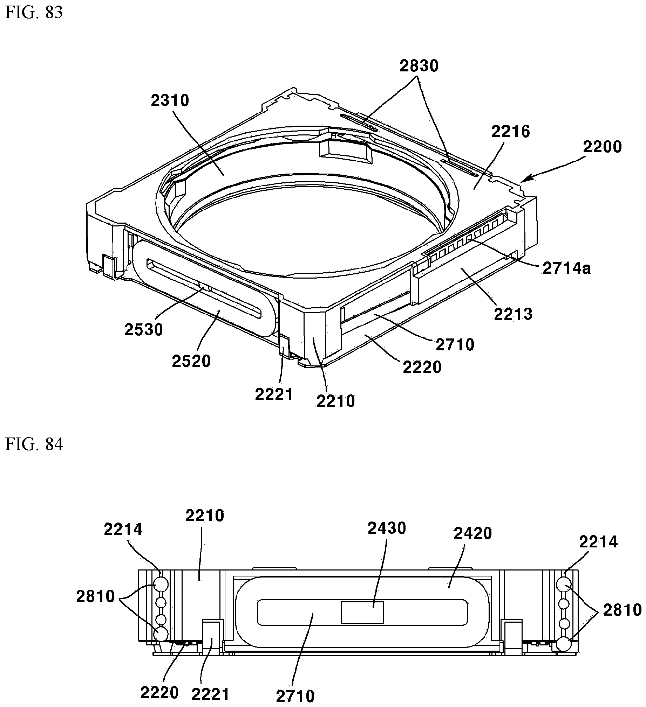

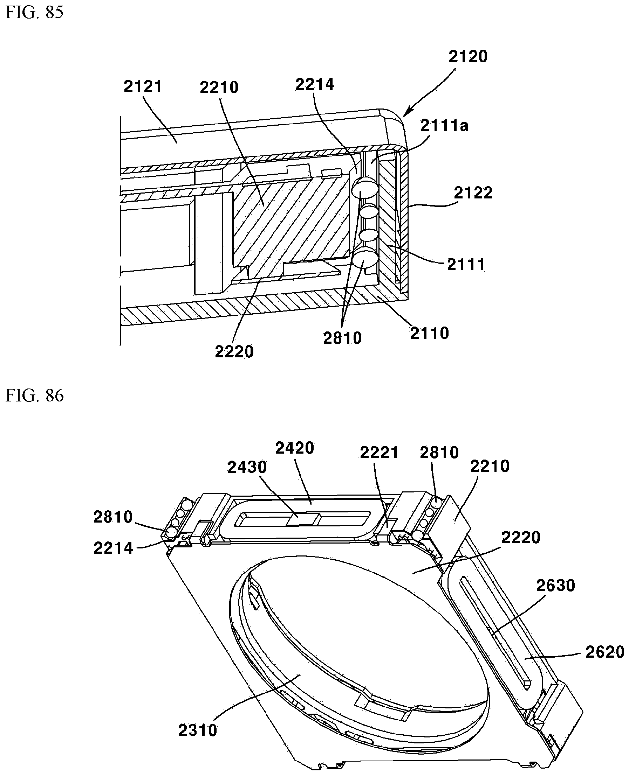

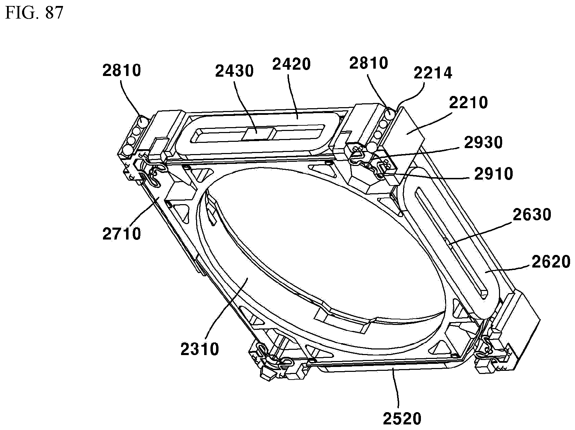

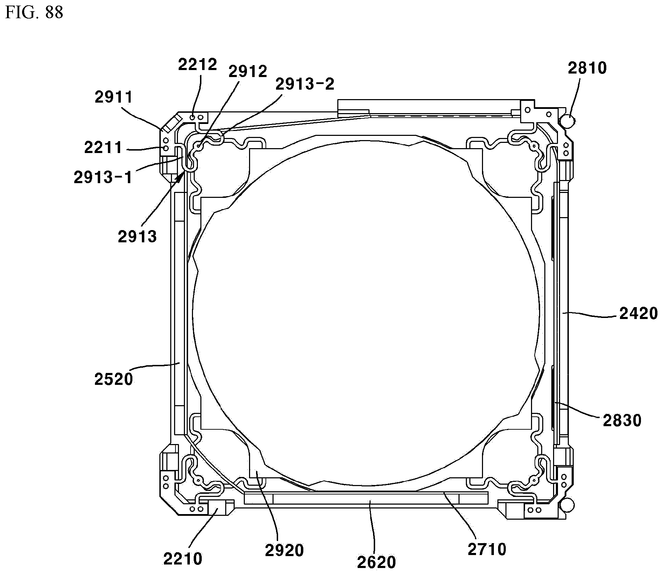

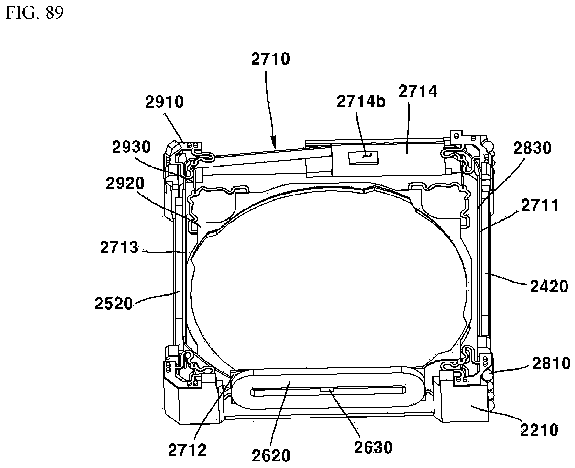

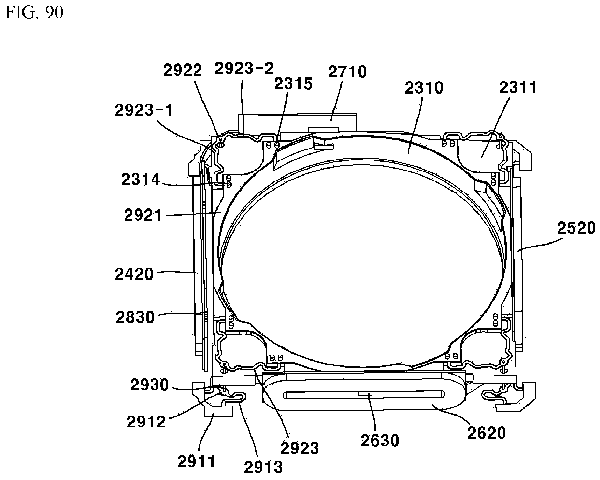

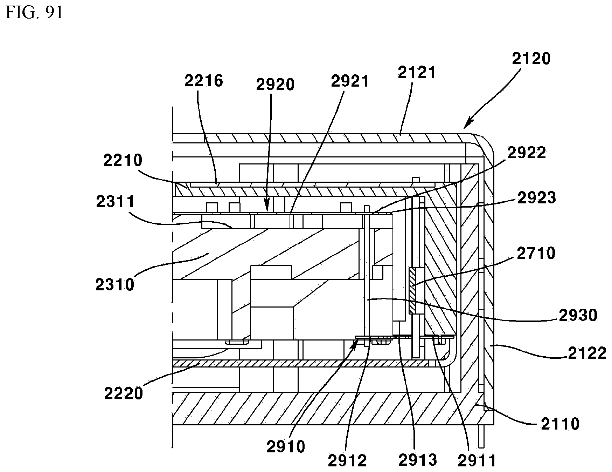

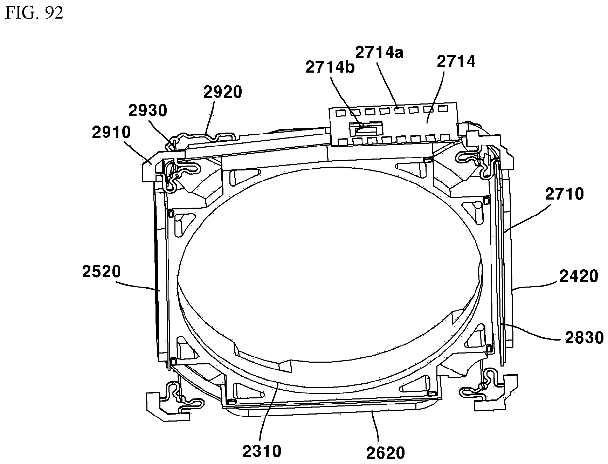

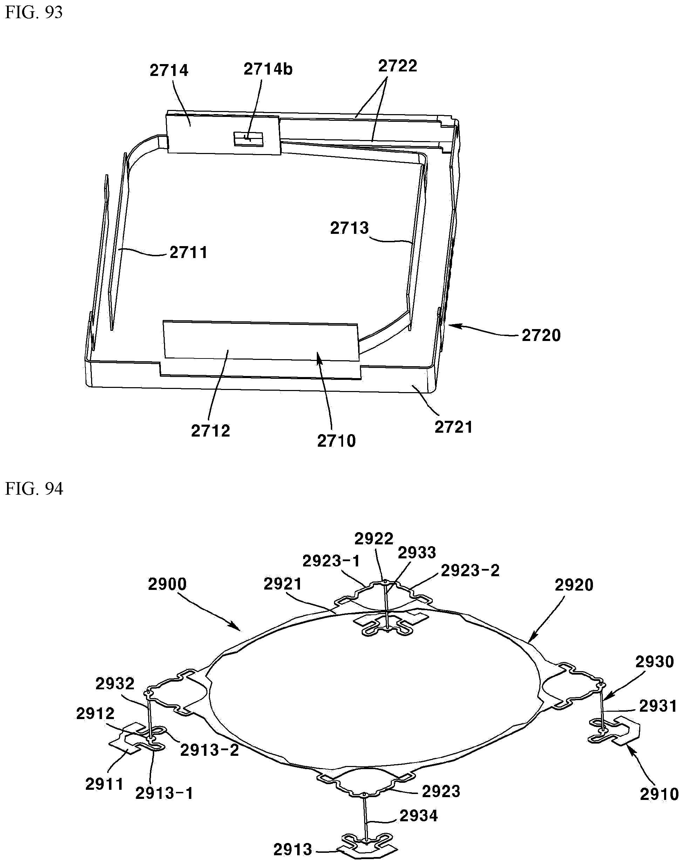

FIG. 71 is a conceptual diagram of a lens driving device according to a third embodiment of the present invention; FIG. 72 is a perspective view of a lens driving device according to a third embodiment of the present invention; FIG. 73 is a cross-sectional view taken along line A-A of FIG. 72; FIG. 74 is a cross-sectional view taken along line B-B of FIG. 72; FIG. 75 is a cross-sectional view taken along line C-C of FIG. 72; FIG. 76 is an enlarged view of a portion of FIG. 75; FIG. 77 is a cross-sectional view taken along line perpendicular to an optical axis of a lens driving device according to a third embodiment of the present invention as viewed from above; FIG. 78 is an exploded perspective view of a lens driving device according to a third embodiment of the present invention; FIG. 79 is a perspective view of a lens driving device according to a third embodiment of the present invention with a cover removed; FIG. 81 is a perspective view of FIG. 80 viewed from a different direction; FIG. 82 is a perspective view illustrating a fixed unit and related configuration of a lens driving device according to a third embodiment of the present invention; FIG. 83 is a perspective view illustrating a moving unit and related component of a lens driving device according to a third embodiment of the present invention; FIG. 84 is a front view of FIG. 83 viewed from front; FIG. 85 is a cross-sectional perspective view illustrating an AF guide ball and related component of a lens driving device according to a third embodiment of the present invention; FIG. 86 is a perspective view of FIG. 83 viewed from a different direction; FIG. 87 is a perspective view of FIG. 86 with the cover removed; FIG. 88 is a bottom view of an AF moving unit and related component of a lens driving device according to a third embodiment of the present invention viewed from below; FIG. 89 is a bottom perspective view of FIG. 88 viewed from a different direction; FIG. 90 is a perspective view illustrating an OIS moving unit and related component of a lens driving device according to a third embodiment of the present invention; FIG. 91 is a cross-sectional view illustrating an arrangement structure of an elastic member of a lens driving device according to a third embodiment of a present invention; FIG. 92 is a bottom perspective view of FIG. 90 seen from a different direction; FIG. 93 is a perspective view illustrating an inner substrate and an outer substrate of a lens driving device according to a third embodiment of the present invention; and FIG. 94 is a perspective view illustrating an elastic member and a wire of a lens driving device according to a third embodiment of the present invention.

The lens driving device **2010** may be a voice coil motor (VCM). The lens driving device **2010** may be a lens driving motor. The lens driving device **2010** may be a lens driving actuator. The lens driving device **2010** may comprise an AF module. The lens driving device **2010** may comprise an OIS module.

The lens driving device **2010** may comprise a fixed unit **2100.** The fixed unit **2100** may be a portion that is relatively fixed portion when the moving unit moves. The moving unit may move with respect to the fixed unit **2100.**

The lens driving device **2010** may comprise a base **2110.** The fixed unit **2100** may comprise a base **2110.** The base **2110** may be disposed below the AF holder **2210.** The base **2110** may be disposed below the OIS holder **2310.** The base **2110** may be coupled with the cover **2120.** The AF holder **2210** and the OIS holder **2310** may be disposed on the base **2110.** The AF holder **2210** and the OIS holder **2310** may be disposed on a lower plate of the base **2110.** The AF holder **2210** and the OIS holder **2310** may be disposed inside the base **2110.** The AF holder **2210** and the OIS holder **2310** can be disposed inside the side plate of the base **2110.**

In a third embodiment of the present invention, all of the AF magnet **2410,** the OIS-x magnet **2510,** and the OIS-y magnet **2610** can be disposed in the base **2110.** All of the AF magnet **2410,** the OIS-x magnet **2510,** and the OIS-y magnet **2610** can be disposed in the fixed unit **2100.** That is, in the auto focus operation, all of the AF magnet **2410,** the OIS-x magnet **2510,** and the OIS-y magnet **2610** can be maintained in a fixed state. In addition, in the shake correction operation, all of the AF magnet **2410,** the OIS-x magnet **2510,** and the OIS-y magnet **2610** can be maintained in a fixed state. In the auto focus operation, the AF magnet **2410** is fixed and the AF coil **2420** can move. In the image stabilization operation, the OIS-x and OIS-y magnets **2510** and **2610** are fixed and the OIS-x and OIS-y coils **2520** and **2620** can move.

The base **2110** may comprise a lower plate. The base **2110** may comprise a side plate. The side plate may be a 'side portion'. The side plate of the base **2110** may be extended from an upper surface of the lower plate.

The side plate of the base **2110** may comprise a plurality of side plates. The side plate of the base **2110** may comprise four side plates. However, one or more of the four side plates of the base **2110** may be omitted. The side plate of the base **2110** may comprise first to fourth side plates **2111, 2112, 2113,** and **2114.** The base **2110** may comprise a first side plate **2111** and a second side plate **2113** being disposed opposite to each other, and a third side plate **2112** and a fourth side plate **2114** being disposed opposite to each other.

The side portion of the base **2110** may comprise a plurality of side portions. The side portion of the base **2110** may comprise four side portions. However, one or more of the four side portions of the base **2110** may be omitted. The side portion of the base **2110** may comprise first to fourth side portions. The base **2110** may comprise a first side portion and a second side portion being disposed opposite to each other, and a third side portion and a fourth side portion being disposed opposite to each other.

The AF magnet **2410** may be disposed on the first side plate **2111** of the base **2110.** The OIS-x magnet **2510** may be disposed in the second side plate **2113** of the base **2110.** The OIS-y magnet **2610** may be disposed in the third side plate **2112** of the base **2110.**

The first side plate **2111** of the base **2110** may comprise a groove **2111a.** The groove **2111a** may be an 'AF guide ball accommodating groove'. An AF guide ball **2810** may be disposed in the groove **2111a.** The groove **2111a** may be in direct contact with the AF guide ball **2810.** The groove **2111a** may be disposed in an optical axis direction. The groove **2111a** may comprise a plurality of grooves. The groove **2111a** may comprise two grooves. The two grooves may be disposed parallel to each other. The groove **2111a** may comprise a first groove that comes into contact with the AF guide ball **2810** at two points, and a second groove that comes into contact with the AF guide ball **2810** at one point. In a modified embodiment, both the first groove and the second groove can come into contact with the AF guide ball **2810** at two points.

The second side plate **2113** of the base **2110** may comprise a protruded portion. The protruded portion may be protruded outwardly. An extended portion **2722** of an outer substrate **2720** may be disposed above and below the protruded portion. A groove may be formed in the protruded portion so as not to interfere even when the extended portion **2722** of the outer substrate **2720** moves.

The base **2110** may comprise a step **2115.** The step **2115** may be formed at a lower portion of the outer surface of the base **2110.** The step **2115** may be protruded from an outer surface of the base **2110.** A side plate **2122** of the cover **2120** may be disposed on the step **2115** of the base **2110.**

The lens driving device **2010** may comprise a cover **2120.** The fixed unit **2100** may comprise a cover **2120.** The cover **2120** may be disposed in the base **2110.** The cover **2120** may be coupled to the base **2110.** The cover **2120** may be fixed to the base **2110.** The cover **2120** may accommodate an AF holder **2210** therein. The cover **2120** may accommodate an OIS holder **2310** therein. The cover **2120** may be a shield member. The cover **2120** may be a shield can.

The cover **2120** may comprise an upper plate **2141.** The upper plate **2141** may be disposed on a moving unit. The upward movement of the moving unit may be limited as the moving unit is in contact with the upper plate **2141.** The upper plate **2141** may comprise a hole through which light passes.

The cover **2120** may comprise a side plate **2142.** The side plate **2142** may be extended from the upper plate **2141.** The side plate **2142** may be disposed in the base **2110.** The side plate **2142** may be disposed in a step portion being protruded from a lower portion of the outer surface of the base **2110.** The side plate **2142** may comprise a plurality of side plates. The side plate **2142** may comprise four side plates. The side plate **2142** may comprise a first side plate and a second side plate being disposed opposite to each other, and a third side plate and a fourth side plate disposed opposite to each other.

The lens driving device **2010** may comprise a moving unit. The moving unit may be disposed in the fixed unit **2100.** The moving unit may be disposed inside the fixed unit **2100.** The moving unit may be disposed on the fixed unit **2100.** The moving unit may be movably disposed in the fixed unit **2100.** The moving unit may be moved with respect to the fixed unit **2100** by the driving unit. The moving unit may be moved during AF driving. The moving unit may be moved during OIS driving. A lens may be coupled to the moving unit.

The lens driving device **2010** may comprise an AF moving unit **2200.** The AF moving unit **2200** may be disposed in the fixed unit **2100.** The AF moving unit **2200** may be disposed inside the fixed unit **2100.** The AF moving unit **2200** may be disposed on the fixed unit **2100.** The AF moving unit **2200** may be disposed between the fixed unit **2100** and the OIS moving unit **2300.** The AF moving unit **2200** may be movably disposed in the fixed unit **2100.** The AF moving unit **2200** may be moved in an optical axis direction against the fixed unit **2100** by the AF driving unit **2400.** The AF moving unit **2200** may be moved during AF driving.

The lens driving device **2010** may comprise an AF holder **2210.** The AF moving unit **2200** may comprise an AF holder **2210.** The AF holder **2210** may be an 'AF carrier'. The AF holder **2210** may be disposed in the base **2110.** The AF holder **2210** may be disposed on the base **2110.** The AF holder **2210** may be disposed inside the cover **2120.** The AF holder **2210** may be disposed between the base **2110** and the OIS holder **2310.** The AF holder **1210** may be movably disposed in an optical axis direction.

The AF holder **2210** may comprise a protrusion. The protrusion may be coupled with the lower elastic member **2910.** The lower elastic member **2910** may comprise a hole being coupled with the protrusion of the AF holder **2210.** In a modified embodiment, the AF holder **2210** may comprise a groove for accommodating an adhesive instead of the protrusion. In this case, the lower elastic member **2910** may comprise a hole disposed in the groove of the AF holder **2210.** The protrusion of the AF holder **2210** may be formed on a lower surface of the AF holder **2210.** The protrusion of the AF holder **2210** may be protruded from a lower surface of the AF holder **2210.**

The protrusion of the AF holder **2210** may comprise a plurality of protrusions. The protrusion of the AF holder **2210** may comprise a first protrusion **2211** and a second protrusion **2212.** The outer portion **2911** of the lower elastic member **2910** may comprise a first region being coupled with the first protrusion **2211** and a second region **2212** being coupled with the first protrusion **2212.** The wire **2930** may comprise a first wire **2931** disposed at a first corner region of the fixed unit **2100.** The coupling portion **2912** of the lower elastic member **2910** may comprise a first coupling portion being coupled with the first wire **2931.** The connecting portion **2913** of the lower elastic member **2910** may comprise a first connecting portion **2913-1** and a second connecting portion **2913-2** connecting the outer portion **2911** of the lower elastic member **2910** and the first coupling portion of the lower elastic member **2910.** The connecting portion **2913** of the lower elastic member **2910** may comprise a first connecting portion **2913-1** connecting the first region of the outer portion **2911** and the first coupling portion, and a second connecting portion **2913-2** connecting the second region of the outer portion **2911** and the first coupling portion. That is, the connecting portion **2913** of the lower elastic member **2910** may be provided with two strands of connecting portions to connect one outer portion **2911** and one coupling portion **2912.**

When viewed from below, the first and second connecting portions **2913-1** and **2913-2** of the lower elastic member **2910** may be symmetrical with respect to an imaginary straight line connecting the optical axis and the first corner region of the fixed unit **2100.**

The wire **2930** may comprise a second wire **2933** disposed in a second corner region of the fixed unit **2100.** The coupling portion **2912** of the lower elastic member **2910** may comprise a second coupling portion being coupled with the second wire **2933.** The wire **2930** may comprise a third wire **2932** being disposed in a third corner region of the fixed unit **2100.** The coupling portion **2912** of the lower elastic member **2910** may comprise a third coupling portion being coupled with the third wire **2932.** The wire **2930** may comprise a fourth wire **2934** being disposed in a fourth corner region of the fixed unit **2100.** The coupling portion **2912** of the lower elastic member **2910** may comprise a fourth coupling portion being coupled to the fourth wire **2934.** The first corner region of the fixed unit **2100** may be disposed to be diagonally opposite to the second corner region, and the third corner region may be disposed to be diagonally opposite to the fourth corner region.

The AF holder **2210** may comprise a protruded portion **2213.** The protruded portion **2213** may be formed on an outer surface of the AF holder **2210.** The protruded portion **2213** may be protruded outwardly from the AF holder **2210.** An extended portion **2722** of an outer substrate **2720** may be disposed on an upper surface and a lower surface of the protruded portion **2213.**

The AF holder **2210** may comprise a groove **2214.** The groove **2214** may be an 'AF guide ball accommodating groove'. An AF guide ball **2810** may be disposed in the groove **2214.** The groove **2214** may be in direct contact with the AF guide ball **2810.** The groove **2214** may be disposed in an optical axis direction. The groove **2214** may comprise a plurality of grooves. The groove **2214** may comprise two grooves. The two grooves may be disposed parallel to each other. The groove **2214** may comprise a first groove that comes into contact with the AF guide ball **2810** at two points, and a second groove that comes into contact with the AF guide ball **2810** at one point. In a modified embodiment, both the first groove and the second groove may come into contact with the AF guide ball **2810** at two points.

The AF holder **2210** may comprise a metal member **2216.** The metal member **2216** may be insert-molded into the AF holder **2210.** At least a portion of the metal member **2216** may be disposed on an upper surface of the AF holder **2210.** The metal member **2216** may be disposed to reinforce the strength of the AF holder **2210.**

The lens driving device **2010** may comprise a cover **2220.** The AF moving unit **2200** may comprise a cover **2220.** The cover **2220** may be coupled with the AF holder **2210.** The cover **2220** may be coupled to a lower surface of the AF holder **2210.** The cover **2220** may be coupled to the AF holder **2210** from the lower side. The cover **2220** may comprise a hook **2221.** The hook **2221** of the cover **2220** may be coupled to the AF holder **2210.** The hook **2221** of the cover **2220** may be protruded upward and coupled to a side surface of the AF holder **2210.**

The lens driving device **2010** may comprise an OIS moving unit **2300.** The OIS moving unit **2300** may be disposed in the fixed unit **2100.** The OIS moving unit **2300** may be disposed inside the fixed unit **2100.** The OIS moving unit **2300** may be disposed in the fixed unit **2100.** The OIS moving unit **2300** may be disposed inside the AF moving unit **2200.** The OIS moving unit **2300** may be movably disposed. The OIS moving unit **2300** may move in an x-axis direction perpendicular to the optical axis against the fixed unit **2100** and the AF moving unit **2200** by the OIS-x driving unit **2500.** The OIS moving unit **2300** can move in a y-axis direction perpendicular to the optical axis against the fixed unit **2100** and the AF moving unit **2200** by the OIS-y driving unit **2600.** The OIS moving unit **2300** can move during OIS driving.

The OIS moving unit **2300** can be spaced apart from the fixed unit **2100** and the AF moving unit **2200.** The OIS moving unit **2300** can be spaced apart from the fixed unit **2100** and the AF moving unit **2200** in an optical axis direction. The OIS moving unit **2300** can form a first gap with the fixed unit **2100** downward in an optical axis direction. In addition, the OIS moving unit **2300** can form a second gap with the AF moving unit **2200** upward in an optical axis direction. Through this, even when the OIS moving unit **2300** is tilted due to the influence of gravity due to the posture of the optical device, interference with the fixed unit **2100** and the AF moving unit **2200** can be prevented.

The lens driving device **2010** may comprise an OIS holder **2310.** The OIS moving unit **2300** may comprise an OIS holder **2310.** The OIS holder **2310** may be an 'OIS carrier'. The OIS holder **2310** may be disposed inside the AF holder **2210.** The OIS holder **2310** may be disposed inside the base **2110.** The OIS holder **2310** may be disposed on the base **2110.** The OIS holder **2310** may be disposed inside the cover **2120.** The OIS holder **2310** may be movably disposed in a direction perpendicular to the optical axis.

The OIS holder **2310** may comprise an outer surface. The OIS holder **2310** may comprise a plurality of side surfaces. The OIS holder **2310** may comprise a first side surface and a second side surface being disposed opposite to each other, and a third side surface and a fourth side surface being disposed opposite to each other. The AF coil **2420** may be disposed between the first side surface of the OIS holder **2310** and the AF magnet **2410.** The OIS-x coil **2520** may be disposed between the second side surface of the OIS holder **2310** and the OIS-x magnet **2510.** The OIS-y coil **2620** may be disposed between the third side surface of the OIS holder **2310** and the OIS-y magnet **2610.** The AF coil **2420** may be disposed on a first side surface of the OIS holder **2310.** The OIS-x coil **2520** can be disposed on a second side surface of the OIS holder **2310.** The OIS-y coil **2620** can be disposed on a third side surface of the OIS holder **2310.**

The OIS holder **2310** may comprise a groove **2311.** The groove **2311** may be an 'upper elastic member interference prevention groove'. The groove **2311** may be formed on an upper surface of the OIS holder **2310.** The groove **2311** may be formed concavely on an upper surface of the OIS holder **2310.** The groove **2311** may be disposed at a position corresponding to the upper elastic member **2920** to prevent interference between the OIS holder **2310** and the upper elastic member **2920.**

The OIS holder **2310** may comprise a lateral stopper. The lateral stopper may limit a lateral stroke of the OIS holder **2310.** That is, when the OIS holder **2310** moves to the maximum, the lateral stopper of the lower surface OIS holder **2310** may be in contact with at least one of the AF holder **2210** and the base **2110.** The lateral stopper may be formed on an outer surface of the OIS holder **2310.** The lateral stopper may be protruded outwardly from a side surface of the OIS holder **2310.**

The OIS holder **2310** may comprise a protrusion. The protrusion may be coupled with the upper elastic member **2920.** The upper elastic member **2920** may comprise a hole being coupled with the protrusion of the OIS holder **2310.** In a modified embodiment, the OIS holder **2310** may comprise a groove for accommodating an adhesive instead of the protrusion. In this case, the upper elastic member **2920** may comprise a hole being disposed in the groove of the OIS holder **2310.** The protrusion of the OIS holder **2310** may be formed on an upper surface of the OIS holder **2310.** The protrusion of the OIS holder **2310** may be protruded from an upper surface of the OIS holder **2310.**

The protrusion of the OIS holder **2310** may comprise a plurality of protrusions. The protrusion of the OIS holder **2310** may comprise a first protrusion **2314** and a second protrusion **2315.** The inner portion **2921** of the upper elastic member **2920** may comprise a first region being coupled with the first protrusion **2314** and a second region **2212** being coupled with the second protrusion **2315.** The wire **2930** may comprise a first wire **2931** being disposed at a first corner region of the fixed unit **2100.** The coupling portion **2922** of the upper elastic member **2920** may comprise a first coupling portion being coupled with the first wire **2931.** The connecting portion **2923** of the upper elastic member **2920** may comprise a first connecting portion **2923-1** and a second connecting portion **2923-2** connecting the inner portion **2921** of the upper elastic member **2920** and the first coupling portion of the upper elastic member **2920.** The connecting portion **2923** of the upper elastic member **2920** may comprise a first connecting portion **2923-1** connecting the first region of the inner portion **2921** and the first coupling portion, and a second connecting portion **2923-2** connecting the second region of the inner portion **2921** and the first coupling portion. That is, the connecting portion **2923** of the upper elastic member **2920** may be provided with two strands of connecting portions to connect one inner portion **2921** and one coupling portion **2922.**

When viewed from below, the first and second connecting portions **2923-1** and **2923-2** of the upper elastic member **2920** may be symmetrical with respect to an imaginary straight line connecting the optical axis and the first corner region of the fixed unit **2100.**

The coupling portion **2922** of the upper elastic member **2920** may comprise a second coupling portion being coupled with a second wire **2933.** The coupling portion **2922** of the upper elastic member **2920** may comprise a third coupling portion being coupled with a third wire **2932.** The coupling portion **2922** of the upper elastic member **2920** may comprise a fourth coupling portion being coupled with a fourth wire **2934.**

The lens driving device **2010** may comprise a driving unit. The driving unit may move a moving unit against the fixed unit **2100.** The driving unit may comprise an AF driving unit **2400.** The driving unit may comprise an OIS driving unit **2500** and **2600.** The driving unit may comprise a coil and a magnet.

The lens driving device **2010** may comprise an AF driving unit **2400.** The AF driving unit **2400** may move the AF moving unit **2200** in an optical axis direction. The AF driving unit **2400** may move the AF holder **2210** in an optical axis direction. The AF driving unit **2400** may move the AF holder **2210** in an optical axis direction through electromagnetic force. The AF driving unit **2400** may comprise a coil and a magnet.

In a third embodiment of the present invention, the AF holder **2210** and the OIS holder **2310** can move in an optical axis direction by the interaction between the AF coil **2420** and the AF magnet **2410.** The AF coil **2420,** the AF holder **2210,** and the OIS holder **2310** can move in an optical axis direction as one unit.

The lens driving device **2010** may comprise an AF magnet **2410.** The AF driving unit **2400** may comprise an AF magnet **2410.** The AF magnet **2410** may be disposed in the fixed unit **2100.** The AF magnet **2410** may be disposed in the base **2110.** The AF magnet **2410** may be disposed in the cover **2120.** The AF magnet **2410** may be disposed in the side plate **2122** of the cover **2120.** The AF magnet **2410** may be disposed on an outer surface of the base **2110.** The AF magnet **2410** may be disposed on an inner side surface of the base **2110.** The AF magnet **2410** may be fixed to the base **2110.** The AF magnet **2410** may be coupled to the base **2110.** The AF magnet **2410** may be attached to the base **2110** with an adhesive. The AF magnet **2410** may be disposed inside the cover **2120.** The AF magnet **2410** may interact with the AF coil **2420.** The AF magnet **2410** may electromagnetically interact with the AF coil **2420.** The AF magnet **2410** may be disposed at a position corresponding to the AF coil **2420.** The AF magnet **2410** may face the AF coil **2420.** The AF magnet **2410** and the AF coil **2420** may face each other. The AF magnet **2410** may be overlapped with the AF coil **2420** in a direction perpendicular to the optical axis.

The AF magnet **2410** may be a four-pole magnet. The AF magnet **2410** may comprise a four-pole magnetizing magnet. The AF magnet **2410** may comprise a first magnet portion comprising an N pole and an S pole, and a second magnet portion comprising an N pole and an S pole. The first magnet portion and the second magnet portion may be disposed in a vertical direction. The first magnet portion and the second magnet portion may be spaced apart from each other in a vertical direction, and a neutral portion may be disposed between the first magnet portion and the second magnet portion.

The lens driving device **2010** may comprise an AF coil **2420.** The AF driving unit **2400** may comprise an AF coil **2420.** The AF coil **2420** may interact with an AF magnet **2410.** The AF coil **2420** may move in an optical axis direction. The AF coil **2420** may move in an optical axis direction through interaction with the AF magnet **2410.** The AF coil **2420** may face the AF magnet **2410.** The AF coil **2420** may be disposed at a position corresponding to the AF magnet **2410.** The AF coil **2420** may be overlapped with the AF magnet **2410** in a direction perpendicular to the optical axis. The AF coil **2420** may be disposed in the inner substrate **2710.** The AF coil **2420** may be disposed in the first portion **2711** of the inner substrate **2710.** The AF coil **2420** may be disposed in the AF holder **2210.** The AF coil **2420** may be disposed in the AF moving unit **2200.**

In the above, the AF magnet **2410** is described as being disposed in the fixed unit **2100** and the AF coil **2420** is described as being disposed in the AF moving unit **2200,** but in a modified embodiment, they may be disposed in the opposite way. That is, in a modified embodiment, the AF magnet **2410** may be disposed in the AF moving unit **2200.** The AF coil **2420** may be disposed in the fixed unit **2100.**

The lens driving device **2010** may comprise an AF sensor **2430.** The AF driving unit **2400** may comprise an AF sensor **2430.** The AF sensor **2430** may be a Hall sensor. The AF sensor **2430** may be disposed in the substrate **2740.** The AF sensor **2430** may be disposed in the first portion **2711** of the substrate **2740.** The AF sensor **2430** may detect the AF magnet **2410.** The AF sensor **2430** may detect movement of the AF magnet **2410.** The movement amount or position of the AF magnet **2410** detected by the AF sensor **2430** may be used for feedback of auto focus driving.

The AF sensor **2430** may be a driver IC. The driver IC may comprise a sensing unit. The sensing unit may comprise a Hall element (Hall IC). The driver IC may be electrically connected to the AF coil **2420.** The driver IC may supply current to the AF coil **2420.**

The AF sensor **2430** may be disposed inside the AF coil **2420.** The AF sensor **2430** may be overlapped with the neutral portion of the AF magnet **2410** in a direction perpendicular to the optical axis. In a modified embodiment, the AF sensor **2430** may be disposed in the outside of the AF coil **2420.**

The lens driving device **2010** may comprise an OIS-x driving unit **2500.** The OIS-x driving unit **2500** may move the OIS moving unit **2300** in an x-axis direction perpendicular to the optical axis direction. The OIS-x driving unit **2500** may move the OIS holder **2310** in an x-axis direction perpendicular to the optical axis. The OIS-x driving unit **2500** may move the OIS holder **2310** in an x-axis direction perpendicular to the optical axis using electromagnetic force. The OIS-x driving unit **2500** may comprise a coil and a magnet.

In a third embodiment of the present invention, the OIS holder **1310** can move in an x-axis direction perpendicular to the optical axis direction by the interaction between the OIS-x coil **2520** and the OIS-x magnet **2510.** The OIS-x coil **2520** and the OIS holder **2310** can move in an x-axis direction as one unit.

The lens driving device **2010** may comprise an OIS-x magnet **2510.** The OIS-x driving unit **2500** may comprise an OIS-x magnet **2510.** The OIS-x magnet **2510** may be disposed in the fixed unit **2100.** The OIS-x magnet **2510** may be disposed in the base **2110.** The OIS-x magnet **2510** may be disposed on an outer surface of the base **2110.** The OIS-x magnet **2510** may be disposed on an inner surface of the base **2110.** The OIS-x magnet **2510** may be fixed to the base **2110.** The OIS-x magnet **2510** may be coupled to the base **2110.** The OIS-x magnet **2510** may be attached to the base **2110** with an adhesive. The OIS-x magnet **2510** can be disposed inside the cover **2120.** The OIS-x magnet **2510** can interact with the OIS-x coil **2520.** The OIS-x magnet **2510** can electromagnetically interact with the OIS-x coil **2520.** The OIS-x magnet **2510** can be disposed at a position corresponding to the OIS-x coil **2520.** The OIS-x magnet **2510** can face the OIS-x coil **2520.** The OIS-x magnet **2510** and the OIS-x coil **2520** can face each other. The OIS-x magnet **2510** can be overlapped with the OIS-x coil **2520** in a direction perpendicular to the optical axis.

The second magnet **2610** may be a two-pole magnet. The OIS-x magnet **2510** may comprise a two-pole magnetizing magnet. The OIS-x magnet **2510** may comprise an N pole and an S pole. The inner surface of the OIS-x magnet **2510** is an N pole and the outer surface may be an S pole.

The lens driving device **2010** may comprise an OIS-x coil **2520.** The OIS-x driving unit **2500** may comprise an OIS-x coil **2520.** The OIS-x coil **2520** may interact with the OIS-x magnet **2510.** The OIS-x coil **2520** may move in an x-axis direction perpendicular to the optical axis. The OIS-x coil **2520** may move in an x-axis direction through interaction with the OIS-x magnet **2510.** The OIS-x coil **2520** may face the OIS-x magnet **2510.** The OIS-x coil **2520** and the OIS-x magnet **2510** may face each other. The OIS-x coil **2520** may be disposed at a position corresponding to the OIS-x magnet **2510.** The OIS-x coil **2520** may be overlapped with the OIS-x magnet **2510** in a direction perpendicular to the optical axis. The OIS-x coil **2520** may be disposed on the inner substrate **2710.** The OIS-x coil **2520** may be disposed in the second portion **2713** of the inner substrate **2710.** The OIS-x coil **2520** may be disposed in the OIS holder **2310.** The OIS-x coil **2520** may be disposed in the OIS moving unit **2300.**

The lens driving device **2010** may comprise an OIS-x sensor **2530.** The OIS-x driving unit **2500** may comprise an OIS-x sensor **2530.** The OIS-x sensor **2530** may be disposed in an inner substrate **2710.** The OIS-x sensor **2530** may be disposed in a second portion **2713** of the inner substrate **2710.** The OIS-x sensor **2530** may comprise a Hall sensor. The OIS-x sensor **2530** may detect an OIS-x magnet **2510.** The OIS-x sensor **2530** may detect a magnetic force of the OIS-x magnet **2510.** The OIS-x sensor **2530** may be disposed in an OIS-x coil **2520.** The OIS-x sensor **2530** may be overlapped with the OIS-x coil **2520** in an optical axis direction. The OIS-x sensor **2530** may face the OIS-x magnet **2510.** The OIS-x sensor **2530** may be disposed at a position corresponding to the OIS-x magnet **2510.** The OIS-x sensor **2530** may detect the movement of the OIS-x magnet **2510.** The amount of movement or position of the OIS-x magnet **2510** detected by the OIS-x sensor **2530** may be used for feedback of the shake correction driving in an x-axis direction.

The lens driving device **2010** may comprise an OIS-y driving unit **2600.** The OIS-y driving unit **2600** may move the OIS moving unit **2300** in a y-axis direction perpendicular to the optical axis direction and the x-axis direction. The OIS-y driving unit **2600** may move the OIS holder **2310** in a y-axis direction perpendicular to both the optical axis and the x-axis direction. The OIS-y driving unit **2600** may move the OIS holder **2310** in a y-axis direction perpendicular to both the optical axis and the x-axis direction through electromagnetic force. The OIS-y driving unit **2600** may comprise a coil and a magnet.

In a third embodiment of the present invention, the OIS holder **2310** can move in a y-axis direction perpendicular to both the optical axis direction and the x-axis direction by the interaction between the OIS-y coil **2620** and the OIS-y magnet **2610.** The OIS-y coil **2620** and the OIS holder **2310** can move in a y-axis direction as one unit.

The lens driving device **2010** may comprise an OIS-y magnet **2610.** The OIS-y driving unit **2600** may comprise an OIS-y magnet **2610.** The OIS-y magnet **2610** may be disposed in the fixed unit **2100.** The OIS-y magnet **2610** may be disposed in the base **2110.** The OIS-y magnet **2610** may be disposed on an outer surface of the base **2110.** The OIS-y magnet **2610** may be disposed on an inner surface of the base **2110.** The OIS-y magnet **2610** may be fixed to the base **2110.** The OIS-y magnet **2610** may be coupled to the base **2110.** The OIS-y magnet **2610** may be attached to the base **2110** with an adhesive. The OIS-y magnet **2610** may be disposed inside the cover **2120.** The OIS-y magnet **2610** may interact with the OIS-y coil **2620.** The OIS-y magnet **2610** may electromagnetically interact with the OIS-y coil **2620.** The OIS-y magnet **2610** may be disposed at a position corresponding to the OIS-y coil **2620.** The OIS-y magnet **2610** may face the OIS-y coil **2620.** The OIS-y magnet **2610** and the OIS-y coil **2620** may face each other. The OIS-y magnet **2610** may be overlapped with the OIS-y coil **2620** in a direction perpendicular to the optical axis.

The OIS-y magnet **2610** may be a two-pole magnet. The OIS-y magnet **2610** may comprise a two-pole magnetizing magnet. The OIS-y magnet **2610** may comprise an N pole and an S pole. The inner surface of the OIS-y magnet **2610** may be an N pole and the outer surface may be an S pole.

The lens driving device **2010** may comprise an OIS-y coil **2620.** The OIS-y driving unit **2600** may comprise an OIS-y coil **2620.** The OIS-y coil **2620** may interact with an OIS-y magnet **2610.** The OIS-y coil **2620** may be disposed on the opposite side of the AF coil **2420** with respect to the optical axis. The OIS-y coil **2620** may move in a y-axis direction perpendicular to both the optical axis and the x-axis. The OIS-y coil **2620** may move in a y-axis direction through interaction with the OIS-y magnet **2610.** The OIS-y coil **2620** may face the OIS-y magnet **2610.** The OIS-y coil **2620** and the OIS-y magnet **2610** may face each other. The OIS-y coil **2620** may be disposed at a position corresponding to the OIS-y magnet **2610.** The OIS-y coil **2620** may be overlapped with the OIS-y magnet **2610** in a direction perpendicular to the optical axis. The OIS-y coil **2620** may be disposed in the inner substrate **2710.** The OIS-y coil **2620** may be disposed in the third portion **2712** of the inner substrate **2710.** The OIS-y coil **2620** may be disposed in the OIS holder **2310.** The OIS-y coil **2620** may be disposed in the OIS moving unit **2300.**

The lens driving device **2010** may comprise an OIS-y sensor **2630.** The OIS-y driving unit **2600** may comprise an OIS-y sensor **2630.** The OIS-y sensor **2630** may be disposed in the inner substrate **2710.** The OIS-y sensor **2630** may be disposed in a third portion **2712** of the inner substrate **2710.** The OIS-y sensor **2630** may comprise a Hall sensor. The OIS-y sensor **2630** may detect an OIS-y magnet **2610.** The OIS-y sensor **2630** may detect a magnetic force of the OIS-y magnet **2610.** The OIS-y sensor **2630** may be disposed in an OIS-y coil **2620.** The OIS-y sensor **2630** may be overlapped with the OIS-y coil **2620** in an optical axis direction. The OIS-y sensor **2630** may face the OIS-y magnet **2610.** The OIS-y sensor **2630** may be disposed at a position corresponding to the OIS-y magnet **2610.** The OIS-y sensor **2630** may detect movement of the OIS-y magnet **2610.** The amount of movement or position of the OIS-y magnet **2610** detected by the OIS-y sensor **2630** may be used for feedback of the shake correction driving in a y-axis direction.

The lens driving device **2010** may comprise a substrate. The substrate may comprise a flexible substrate. The substrate may be electrically connected to the coil. The substrate may be electrically connected to the sensor. The substrate may be formed to be flexible. The substrate may be a circuit board. The substrate may be a printed circuit board.

The lens driving device **2010** may comprise an inner substrate **2710.** The inner substrate **2710** may be electrically connected to coils **2420, 2520,** and **2620.** The inner substrate **2710** may be electrically connected to sensors **2430, 2530,** and **2630.** The inner substrate **2710** may connect the AF holder **2210** and the OIS holder **2310.** The inner substrate **2710** may elastically connect the AF holder **2210** and the OIS holder **2310.** The inner substrate **2710** may movably support the OIS holder **2310** against the AF holder **2210.** The inner substrate **2710** can guide the OIS holder **2310** to move in a direction perpendicular to the optical axis against the AF holder **2210.** The inner substrate **2710** can comprise a flexible substrate. The inner substrate **2710** can comprise a flexible printed circuit board (FPCB). The inner substrate **2710** can comprise an elastic portion. The inner substrate **2710** can comprise an elastic member.

The inner substrate **2710** may comprise a first portion **2711.** The first portion **2711** may be disposed in an AF moving unit **2200.** The first portion **2711** may be disposed in an AF holder **2210.** An AF coil **2420** may be disposed in the first portion **2711** of the inner substrate **1710.** An AF sensor **2430** may be disposed in the first portion **2711** of the inner substrate **2710.** A yoke **2830** may be disposed in the first portion **2711** of the inner substrate **2710.**

The inner substrate **2710** may comprise a second portion **2713.** The second portion **2713** may be disposed in the OIS holder **2310.** The second portion **2713** may be disposed on a second side surface of the OIS holder **2310.** The OIS-x coil **2520** may be disposed in the second portion **2713** of the inner substrate **2710.** The OIS-x sensor **2530** may be disposed in the second portion **2713** of the inner substrate **2710.**

The inner substrate **2710** may comprise a third portion **2712.** The third portion **2712** may be disposed in the OIS holder **2310.** The third portion **2712** may be disposed on a third side surface of the OIS holder **2310.** The OIS-y coil **2620** may be disposed in the third portion **2712** of the inner substrate **2710.** The OIS-y sensor **2630** may be disposed in the third portion **2712** of the inner substrate **2710.**

The inner substrate **2710** may comprise a fourth portion **2714.** The fourth portion **2714** may be disposed between the OIS holder **2310** and the AF holder **2210.** The fourth portion **2714** may be disposed between the fourth side surface of the OIS holder **2310** and the AF holder **2210.**

However, in the 'first to fourth side surfaces' of the OIS holder **2310** described in the present specification, 'first to fourth' are only for distinguishing the side surfaces from one another, and may be referred to differently as needed. For example, the 'second side surface' is referred to as a 'first side surface' and the 'third side surface' may be referred to as a 'second side surface'.

The inner substrate **2710** may comprise a terminal **2714a.** The fourth portion **2714** of the inner substrate **2710** may comprise a terminal **2714a.** The terminal **2714a** may be electrically connected to coils **2420, 2520,** and **2620.** The terminal **2714a** may be electrically connected to sensors **2430, 2530,** and **2630.**

The inner substrate **2710** may comprise a hole **2714b.** The fourth portion **2714** of the inner substrate **2710** may comprise a hole **2714b.** The hole **2714b** may be formed to penetrate the fourth portion **2714** of the inner substrate **2710.** The hole **2714b** may be disposed at a position corresponding to a lateral stopper of the OIS holder **2310.** Due to the hole **2714b,** the inner substrate **2710** may not interfere with the lateral stopper of the OIS holder **2310.**

The lens driving device **2010** may comprise an outer substrate **2720.** The outer substrate **2720** may be disposed in a base **2110.** The outer substrate **2720** may be electrically connected to coils **2420, 2520,** and **2620.** The outer substrate **2720** may be electrically connected to sensors **2430, 2530,** and **2630.** The outer substrate **2720** may connect the AF holder **2210** and the base **2110.** The outer substrate **2720** may elastically connect the AF holder **2210** and the base **2110.** The outer substrate **2720** may movably support the AF holder **2210** against the base **2110.** The outer substrate **2720** can guide the AF holder **2210** to move in an optical axis direction against the base **2110.** The outer substrate **2720** can comprise a flexible substrate. The outer substrate **2720** can comprise a flexible printed circuit board (FPCB). The outer substrate **2720** can comprise an elastic portion. The outer substrate **2720** can comprise an elastic member.

The outer substrate **2720** may comprise a body portion **2721.** The body portion **2721** may be disposed in the fixed unit **2100.** The body portion **2721** may be disposed in the base **2110.** The body portion **2721** may be formed to surround a side surface of the base **2110.** The body portion **2721** may be disposed on three side surfaces of the base **2110.** The body portion **2721** may comprise two terminal portions. The two terminal portions may be disposed on opposite sides with respect to an optical axis. The terminal portion may comprise a terminal **2721a.**

The outer substrate **2720** may comprise a terminal **2721a.** The body portion **2721** of the outer substrate **2720** may comprise a terminal **2721a.** The terminal **2721a** may be electrically connected to the terminal **2722a.** The terminal **2721a** may be disposed at a lower end of the base **2110.** The terminal **2721a** may be coupled to a printed circuit board **2050.** The terminal **2721a** may be coupled to a terminal of the printed circuit board **2050** with a solder. The terminal **2721a** may be coupled to a terminal of the printed circuit board **2050** with a conductive member. The terminal **2721a** may be connected to a terminal of the printed circuit board **2050.** The terminal **2721a** can be electrically connected to a terminal of the printed circuit board **2050.**

The outer substrate **2720** may comprise an extended portion **2722.** The extended portion **2722** may be a 'leg portion'. The extended portion **2722** may be extended from the body portion **2721.** At least a portion of the extended portion **2722** may move together with the AF moving unit **2200.** At least a portion of the extended portion **2722** may move together with the AF holder **2210.** The extended portion may be extended from the body portion **2721.** The extended portion **2722** may comprise a plurality of leg portions. The extended portion **2722** may comprise a first leg portion and a second leg portion. The second leg portion may be disposed below the first leg portion.

The outer substrate **2720** may comprise a terminal **2722a.** The extended portion **2722** of the outer substrate **2720** may comprise a terminal **2722a.** The terminal **2722a** may be coupled to a terminal **2714a** of the inner substrate **2710.** The terminal **2722a** may be coupled to the terminal **2714a** of the inner substrate **2710** with a solder. The terminal **2722a** may be coupled to the terminal **2714a** of the inner substrate **2710** with a conductive member. The terminal **2722a** may be connected to the terminal **2714a** of the inner substrate **2710.** The terminal **2722a** may be electrically connected to the terminal **2714a** of the inner substrate **2710.**

The lens driving device **2010** may comprise a guide member. The guide member may comprise a ball. The guide member may comprise a pin. The guide member may comprise a cylindrical member. The guide member may guide movement of the moving unit against the fixed unit **2100** in a specific direction.

The lens driving device **2010** may comprise a ball **2810.** The ball **2810** may be an 'AF guide ball'. The ball **2810** may be disposed between the fixed unit **2100** and the AF moving unit **2200.** The ball **2810** may guide movement of the AF moving unit **2200** in an optical axis direction. The ball **2810** may guide movement of the AF moving unit **2200** in an optical axis direction against the fixed unit **2100.** The ball **2810** may guide movement of the AF holder **2210** against the base **2110** in an optical axis direction. The ball **2810** may be disposed between the base **2110** and the AF holder **2210.** The ball **2810** may be disposed between the base **2110** and the AF holder **2210** in an x-axis direction. The ball **2810** may be disposed in the groove **2111a** of the base **2110.** The ball **2810** may not be overlapped with the OIS moving unit **2300** in an optical axis direction. The ball **2810** may be disposed in the first groove **2214** of the AF holder **2210.** The ball **2810** may comprise a first-first ball being in contact with the base **2110** and the AF holder **2210** at four points, and a first-second ball being in contact with the base **2110** and the AF holder **2210** at three points. The ball **2810** may have a spherical shape. The ball **2810** may be formed of metal. Grease may be applied to the surface of the ball **2810.**

The ball **2810** may comprise a plurality of balls. The ball **2810** may comprise eight balls. Four balls **2810** may be disposed on one side of the AF magnet **2410** and the remaining four balls **2810** may be disposed on the other side of the AF magnet **2410.**

The lens driving device **2010** may comprise a yoke **2830.** The yoke **2830** may be disposed in a first portion **2711** of the inner substrate **2710.** An attractive force may be generated between the yoke **2830** and the AF magnet **2410.** The yoke **2830** may be disposed at a position corresponding to the AF magnet **2410.** The yoke **2830** may be formed of metal. The AF guide ball **2810** may be pressed between the base **2110** and the AF holder **2210** by the attractive force between the yoke **2830** and the AF magnet **2410.** That is, the contact state of the AF guide ball 1810 with the base **2110** and the AF holder **2210** may be maintained by the attractive force between the yoke **2830** and the AF magnet **2410.**

The lens driving device **2010** may comprise an elastic member **2900.** The elastic member **2900** may connect with the AF moving unit **2200** and the OIS moving unit **2300.** The elastic member **2900** may elastically connect the AF moving unit **2200** and the OIS moving unit **2300.** The elastic member **2900** may movably support the OIS moving unit 2300 against the AF moving unit **2200.** The elastic member **2900** may guide the OIS driving. The elastic member **2900** may guide the OIS moving unit **2300** to move in a direction perpendicular to the optical axis. The elastic member **2900** may guide the OIS moving unit **2300** to move in an x-axis direction and a y-axis direction against AF moving unit **2200.** The elastic member **2900** may be formed to guide both the OIS-x-axis actuation and the OIS-y-axis actuation. The elastic member **2900** may comprise a leaf spring. The elastic member **2900** may comprise a wire. The elastic member **2900** may have elasticity. The elastic member **2900** may be formed of a metal. The first resonant frequency of the elastic member **2900** may be 40 to 60 Hz. The first resonant frequency of the elastic member **2900** may be 30 to 70 Hz.

The spring stiffness of the elastic member **2900** can be determined by the weight of the moving body. The spring stiffness of the elastic member **2900** can be determined by the target natural frequency [Hz] of the moving body. The spring stiffness of the elastic member **2900** can be determined by the electromagnetic force level. In summary, since the weight of the moving body and the electromagnetic force level vary greatly depending on the size of the lens, the spring stiffness can also vary greatly. However, in the case of the target natural frequency, considering the control characteristics, in the case of the spring type such as the third embodiment of the present invention, it can be set to a value of at least 40 Hz or more.

For the image sensor 1/I" OIS actuator, the x-axis spring constant Kx can be 104 N/m (240 Hz) to 228 N/m (260 Hz). In addition, the y-axis spring constant Ky can be 104 N/m (240 Hz) to 228 N/m (260 Hz). The x-axis spring constant and the y-axis spring constant can be the same. The z-axis spring constant Kz can be set to the maximum value that satisfies the Kx and Ky conditions.

The lens driving device **2010** may comprise a lower elastic member **2910.** The lower elastic member **2910** may be a leaf spring. The lower elastic member **2910** may have elasticity. The lower elastic member **2910** may be coupled to the AF moving unit **2200.** The lower elastic member **2910** may be coupled to the AF holder **2210.** The lower elastic member **2910** may be disposed on a lower surface of the AF holder **2210.** The lower elastic member **2910** may be disposed in the AF holder **2210.** The lower elastic member **2910** may be disposed on a lower portion of the AF holder **2210.** The lower elastic member **2910** may be disposed below the AF holder **2210.** The lower elastic member **2910** may be disposed on a lower surface of the body portion **2721.** The lower elastic member **2910** can be coupled to a lower surface of the body portion **2721.** The lower elastic member **2910** can be disposed perpendicular to the optical axis.

The lower elastic member **2910** may comprise a plurality of elastic units being spaced apart from one another. The lower elastic member **2910** may comprise first to fourth elastic units corresponding to the first to fourth wires **2931, 2932, 2933,** and **2934.** The first to fourth elastic units may be spaced apart from each other.

The lower elastic member **2910** may comprise an outer portion **2911.** The outer portion **2911** may be coupled with the AF moving unit **2200.** The lower elastic member **2910** may comprise a coupling portion **2912.** The coupling portion **2912** may be coupled with a wire **2930.** The lower elastic member **2910** may comprise a connecting portion **2913.** The connecting portion **2913** may connect the outer portion **2911** and the coupling portion **2912.** The outer portion **2911** of the lower elastic member **2910** and the coupling portion **2912** of the lower elastic member **2910** may be disposed at the same height. However, the OIS moving unit **2300** may be disposed in a state where it is tilted downward due to the weight of the lens in an UP posture where the lens is disposed above the image sensor. At this time, the coupling portion **2912** can be disposed at a lower position than the outer portion **2911.**

The lens driving device **2010** may comprise an upper elastic member **2920.** The upper elastic member **2920** may be a leaf spring. The upper elastic member **2920** may have elasticity. The upper elastic member **2920** may be coupled to the OIS moving unit **2300.** The upper elastic member **2920** may be coupled to the OIS holder **2310**. The upper elastic member **2920** may be disposed on an upper surface of the OIS holder **2310**. The upper elastic member **2920** may be disposed in the OIS holder **2310**. The upper elastic member **2920** may be disposed on an upper portion of the OIS holder **2310**. The upper elastic member **2920** may be disposed in the OIS holder **2310**. The upper elastic member **2920** may be disposed perpendicular to the optical axis. The upper elastic member **2920** can be formed integrally.

The upper elastic member **2920** may comprise an inner portion **2921**. The inner portion **2921** may be coupled with the OIS moving unit **2300**. The upper elastic member **2920** may comprise a coupling portion **2922**. The coupling portion **2922** may be coupled with a wire **2930.** The upper elastic member **2920** may comprise a connecting portion **2923**. The connecting portion **2923** may connect the inner portion **2921** and the coupling portion **2922**. The inner portion **2921** of the upper elastic member **2920** and the coupling portion **2922** of the lower elastic member **2910** may be disposed at the same height. However, the OIS moving unit **2300** may be disposed in a state where it is tilted downward due to the weight of the lens in an UP posture where the lens is disposed on an image sensor. At this time, the inner portion **2921** can be disposed at a lower position than the coupling portion **2922**.

The lens driving device **2010** may comprise a wire **2930**. The wire **2930** may be a 'side portion elastic member'. The wire **2930** may be a wire spring. The wire **2930** may be a suspension wire. The wire **2930** may have elasticity. The wire **2930** may connect the upper elastic member **2920** and the lower elastic member **2910**. The wire **2930** may elastically connect the upper elastic member **2920** and the lower elastic member **2910**. The wire **2930** may be disposed parallel to the optical axis. The wire **2930** may be disposed parallel to the optical axis direction.

The wire **2930** may comprise a plurality of wires. The wire **2930** may comprise four wires. The wire **2930** may comprise first to fourth wires **2931**, **2932**, **2933**, and **2934**. The wire **2930** may comprise first to fourth wires **2931**, **2932**, **2933**, and **2934** respectively being disposed in the first to fourth corner regions of the fixed unit **2100**.

Hereinafter, the auto focus (AF) driving of the lens driving device according to a third embodiment of the present invention will be described with reference to the drawings.

FIGS. 95 to 97 are drawings for explaining an auto focus driving of a lens driving device according to a third embodiment of the present invention. FIG. 95 is a cross-sectional view illustrating an appearance of a moving unit in an initial state where no current is applied to an AF coil. FIG. 96 is a cross-sectional view illustrating an appearance where a moving unit moves upward in an optical axis direction when a positive current is applied to an AF coil. FIG. 97 is a cross-sectional view illustrating a moving unit moving downward in an optical axis direction when reverse current is applied to an AF coil.

The moving unit may be disposed at a position spaced apart from both the upper plate **2121** of the cover **2120** and the base **2110** in an initial position where no current is applied to the AF coil **2420**. At this time, the moving unit may be an AF moving unit **2200**. In addition, the moving unit may comprise an AF moving unit **2200** and an OIS moving unit **2300**.

When a forward current is applied to the AF coil **2420**, the AF coil **2420** can move upward in an optical axis direction due to the electromagnetic interaction between the AF coil **2420** and the AF magnet **2410** (see A of FIG. 96). At this time, the AF holder **2210** can move upward in an optical axis direction together with the AF coil **2420**. Furthermore, the OIS holder **2310** and the lens can move upward in an optical axis direction together with the AF holder **2210**. Accordingly, the distance between the lens and the image sensor can be changed, and the focus of the image formed on the image sensor through the lens can be adjusted.

When a reverse current is applied to the AF coil **2420**, the AF coil **2420** can move downward in an optical axis direction due to the electromagnetic interaction between the AF coil **2420** and the AF magnet **2410** (see **B** of FIG. 97). At this time, the AF holder **2210** can move downward in an optical axis direction together with the AF coil **2420**. Furthermore, the OIS holder **2310** and the lens can move downward in an optical axis direction together with the AF holder **2210**. Accordingly, the distance between the lens and the image sensor can be changed, and the focus of the image being formed on the image sensor through the lens can be adjusted.

Meanwhile, during the movement process of the AF coil **2420**, the AF sensor **2430** moves together with the AF coil **2420** and detects the strength of the magnetic field of the AF magnet **2410** to detect the amount of movement or position of the lens in an optical axis direction. The amount of movement or position of the lens in an optical axis direction detected by the AF sensor **2430** can be used for auto focus feedback control.

Hereinafter, the optical image stabilization OIS operation of the lens driving device according to a third embodiment of the present invention will be described with reference to the drawings.

FIGS. 98 to 100 are drawings for explaining a shake correction drive of a lens driving device according to a third embodiment of the present invention. FIG. 98 is a cross-sectional view illustrating a moving unit in an initial state when no current is applied to an OIS-x coil and an OIS-y coil. FIG. 99 is a cross-sectional view illustrating an OIS moving unit moving in an x-axis direction perpendicular to an optical axis when current is applied to an OIS-x coil. FIG. 100 is a cross-sectional view illustrating an OIS moving unit moving in a y-axis direction perpendicular to both an optical axis and an x-axis when current is applied to an OIS-y coil.

As illustrated in FIG. 98, the moving unit may be disposed in an initial position where no current is applied to the OIS-x coil **2520** and the OIS-y coil **2620**. At this time, the moving unit may be an OIS moving unit **2300**.

When a current is applied to the OIS-x coil **2520,** the OIS-x coil **2520** can move in an x-axis direction perpendicular to the optical axis due to the electromagnetic interaction between the OIS-x coil **2520** and the OIS-x magnet **2510** (see A of FIG. 99). At this time, the OIS holder **2310** can move in an x-axis direction together with the OIS-x coil **2520**. Furthermore, the lens can move in an x-axis direction together with the OIS holder **2310**. In more detail, when a forward current is applied to the OIS-x coil **2520,** the OIS holder **2310**, and the lens can move in one direction along an x-axis. In addition, when a reverse current is applied to the OIS-x coil **2520,** the OIS-x coil **2520,** the OIS holder **2310**, and the lens can move in the other direction along an x-axis.

When a current is applied to the OIS-y coil **2620**, the OIS-y coil **2620** can move in a y-axis direction perpendicular to the optical axis due to the electromagnetic interaction between the OIS-y coil **2620** and the OIS-y magnet **2610** (see **B** of FIG. 100). At this time, the OIS holder **2310** can move in a y-axis direction together with the OIS-y coil **2620**. Furthermore, the lens can move in a y-axis direction together with the OIS holder **2310**. In more detail, when a positive current is applied to the OIS-y coil **2620**, the OIS holder **2310**, and the lens can move in one direction along a y-axis. In addition, when a reverse current is applied to the OIS-y coil **2620**, the OIS-y coil **2620**, the OIS holder **2310**, and the lens can move in the other direction along a y-axis.

Meanwhile, the OIS-x sensor **2530** can detect the amount of movement or position of the OIS-x coil **2520** by detecting the strength of the magnetic field of the OIS-x magnet **2510**. The amount of movement or position detected by the OIS-x sensor **2530** can be used for x-axis direction shake correction feedback control. The OIS-y sensor **2630** can detect the amount of movement or position of the OIS-y coil **2620** by detecting the strength of the magnetic field of the OIS-y magnet **2610**. The amount of movement or position detected by the OIS-y sensor **2630** can be used for y-axis direction shake correction feedback control.

Hereinafter, a camera device according to a third embodiment of the present invention will be described with reference to the drawings.

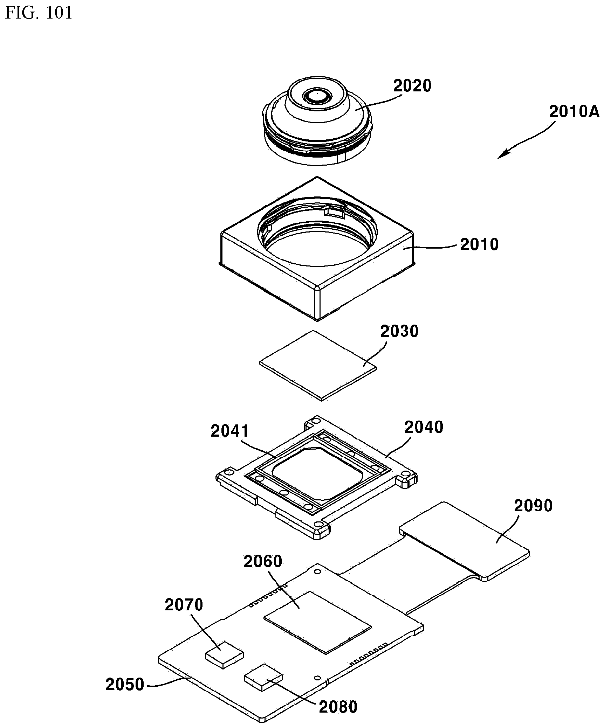

FIG. 101 is an exploded perspective view of a camera device according to a third embodiment of the present invention.

The camera device **2010A** may comprise a camera module.

The camera device **2010A** may comprise a lens module **2020**. The lens module **2020** may comprise at least one lens. The lens may be disposed at a position corresponding to the image sensor **2060**. The lens module **2020** may comprise a lens and a barrel. The lens module **2020** may be coupled to an OIS holder **2310** of the lens driving device **2010**. The lens module **2020** may be coupled to the OIS holder **2310** by screw coupling and/or an adhesive. The lens module **2020** may be moved integrally with the OIS holder **2310**.

The camera device **2010A** may comprise a filter **2030**. The filter **2030** may serve to block the light of a specific frequency band passing through the lens module **2020** from being incident on the image sensor **2060**. The filter **2030** may be disposed parallel to an x-y plane. The filter **2030** may be disposed between the lens module **2020** and the image sensor **2060**. The filter **2030** may be disposed in the sensor base **2040**. In a modified embodiment, the filter **2030** may be disposed in the base **2110**. The filter **2030** may comprise an infrared filter. The infrared filter may block light of an infrared region from being incident on the image sensor **2060**.

The camera device **2010A** may comprise a sensor base **2040**. The sensor base **2040** may be disposed between the lens driving device **2010** and the printed circuit board **2050**. The sensor base **2040** may comprise a protruded portion **2041** in which a filter **2030** is disposed. An opening may be formed in a portion of the sensor base **2040** in which the filter **2030** is disposed so that light passing through the filter **2030** may be incident on the image sensor **2060**. The adhesive member may couple or attach the base **2310** of the lens driving device **2010** to the sensor base **2040**. The adhesive member may additionally serve to prevent foreign substances from entering the interior of the lens driving device **2010**. The adhesive member may comprise at least one or more among an epoxy, a thermosetting adhesive, and an ultraviolet-curable adhesive.

The camera device **2010A** may comprise a printed circuit board (PCB) **2050**. The printed circuit board **2050** may be a substrate or a circuit board. A lens driving device **2010** may be disposed on the printed circuit board **205**0. A sensor base **2040** may be disposed between the printed circuit board **2050** and the lens driving device **2010**. The printed circuit board **2050** may be electrically connected to the lens driving device **2010**. An image sensor **2060** may be disposed on the printed circuit board **2050**. Various circuits, elements, control units, and the like may be provided on the printed circuit board **2050** to convert an image being formed on the image sensor **2060** into an electrical signal and transmit it to an external device.

The camera device **2010A** may comprise an image sensor **2060**. The image sensor **2060** may be a configuration in which a light passing through a lens and a filter **2030** is incident thereon to form an image. The image sensor **2060** may be mounted on a printed circuit board **2050**. The image sensor **2060** may be electrically connected to the printed circuit board **2050**. For example, the image sensor **2060** may be coupled to the printed circuit board **2050** by surface mounting technology (SMT). As another example, the image sensor **2060** may be coupled to the printed circuit board **2050** by flip chip technology. The image sensor **2060** may be disposed such that its optical axis is aligned with that of the lens. That is, the optical axis of the image sensor **2060** and the optical axis of the lens may be aligned. The image sensor **2060** can convert light irradiated to the effective image area of the image sensor **2060** into an electrical signal. The image sensor **2060** can be any one among a charge coupled device (CCD), a metal oxide semi-conductor (MOS), a CPD, and a CID.

The camera device **2010A** may comprise a motion sensor **2070**. The motion sensor **2070** may be mounted on a printed circuit board **2050**. The motion sensor **2070** may be electrically connected to the control unit **2080** through a circuit pattern being provided on the printed circuit board **2050**. The motion sensor **2070** may output rotational velocity information due to the movement of the camera device **2010A**. The motion sensor **2070** may comprise a two-axis or three-axis gyro sensor or an angular velocity sensor.

The camera device **2010A** may comprise a control unit **2080**. The control unit **2080** may be disposed on a printed circuit board **2050**. The control unit **2080** may be electrically connected to a coil **2330** of a lens driving device **2010**. The control unit **2080** may individually control the direction, intensity, amplitude, and the like of the current supplied to the coil **2330**. The control unit **2080** may control the lens driving device **2010** to perform an auto focus function and/or a shake correction function. Furthermore, the control unit **2080** may perform auto focus feedback control and/or shake correction feedback control for the lens driving device **2010**.

The camera device **2010A** may comprise a connector **2090**. The connector **2090** may be electrically connected to the printed circuit board **2050**. The connector **2090** may comprise a port for electrically connecting to an external device.

Hereinafter, an optical device according to a third embodiment of the present invention will be described with reference to the drawings.

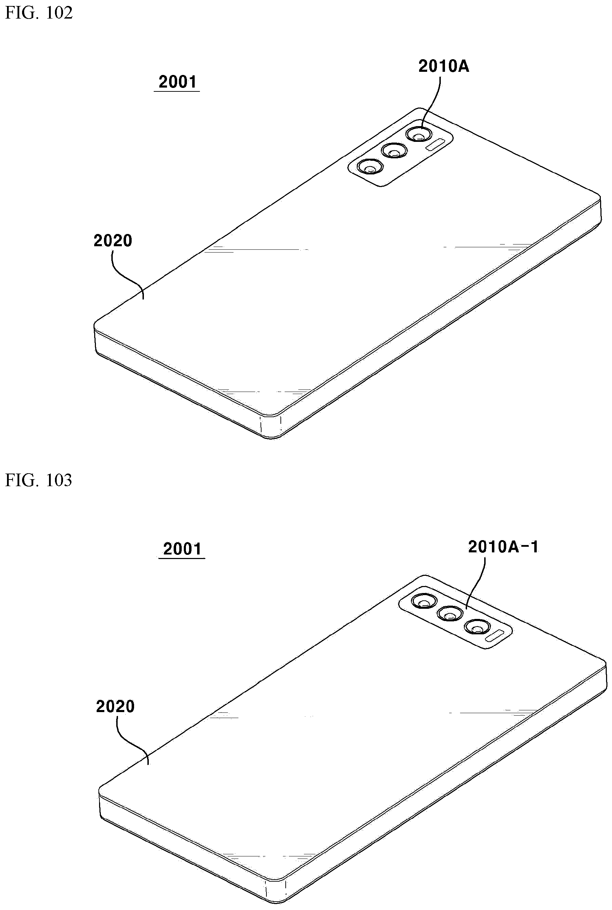

FIG. 102 is a perspective view of an optical device according to a third embodiment of the present invention; and FIG. 103 is a perspective view of an optical device according to a modified embodiment.

The optical device **1001** may comprise at least one among a mobile phone, a cellular phone, a portable terminal, a mobile terminal, a smart phone, a smart pad, a portable smart device, a digital camera, a laptop computer, a digital broadcasting terminal, a personal digital assistant (PDA), a portable multimedia player (PMP), and a navigation device. The optical device **1001** may comprise any device for photographing videos or pictures.

The optical device **2001** may comprise a main body **2020**. The optical device **2001** may comprise a camera device **2010A**. The camera device **2010A** may be disposed in the main body **2020**. The camera device **2010A** may capture a subject. The optical device **2001** may comprise a display. The display may be disposed in the main body **2020**. The display may output one or more of an image and a video captured by the camera device **2010A**. The display may be disposed on a first surface of the main body **2020**. The camera device **2010A** may be disposed on one or more of the first surface of the main body **2020** and the second surface opposite to the first surface. As illustrated in FIG. 102, in the camera device **2010A**, a triple camera may be disposed in a vertical direction. As illustrated in FIG. 103, in the camera device **2010A-1**, a triple camera may be disposed in a horizontal direction.

Although the first to third embodiments of the present invention have been described above separately, some of the components of the first to third embodiments may be replaced with each other. That is, some of the components of the first embodiment may be replaced with corresponding components of one or more of the second embodiment and third embodiment. Some of the components of the second embodiment may be replaced with corresponding components of one or more of the first embodiment and third embodiment. Some of the components of the third embodiment may be replaced with corresponding components of one or more of the first embodiment and second embodiment.

Although the embodiment of the present invention has been described above with reference to the accompanying drawings, those of ordinary skill in the art to which the present invention belongs will understand that the present invention may be embodied in other specific forms without changing the technical spirit or essential features thereof. Therefore, it should be understood that the embodiments described above are illustrative in all respects and not restrictive.

## Claims

1. A lens driving device comprising:
a base;
a first holder disposed in the base;
a second holder disposed in the first holder;
first to third magnets disposed on the base;
a first coil disposed on the first holder and configured to interact with the first magnet;
a second coil disposed on the second holder and configured to interact with the second magnet; and
a third coil disposed on the second holder and configured to interact with the third magnet.

2. The lens driving device of claim 1, wherein, by the interaction between the first coil and the first magnet, the first holder is configured to move in an optical axis direction,
wherein, by the interaction between the second coil and the second magnet, the second holder is configured to move in a first direction perpendicular to the optical axis direction, and
wherein, by the interaction between the third coil and the third magnet, the second holder is configured to move in a second direction perpendicular to both the optical axis direction and the first direction.

3. The lens driving device of claim 2, wherein the second holder is configure to move in the optical axis direction together with the first holder by the interaction between the first coil and the first magnet.

4. The lens driving device of claim 1, wherein the base comprises a first side portion and a second side portion disposed opposite to each other, and a third side portion and a fourth side portion disposed opposite to each other,
wherein the first magnet is disposed on the first side portion of the base,
wherein the second magnet is disposed on the second side portion of the base, and
wherein the third magnet is disposed on the third side portion of the base.

5. The lens driving device of claim 1, wherein the second holder comprises a first side surface and a second side surface disposed opposite to each other, and a third side surface and a fourth side surface disposed opposite to each other,
wherein the first coil is disposed between the first side surface of the second holder and the first magnet,
wherein the second coil is disposed between the second side surface of the second holder and the second magnet, and
wherein the third coil is disposed between the third side surface of the second holder and the third magnet.

6. The lens driving device of claim 5, comprising a first substrate comprising a first portion disposed on the first holder, a second portion disposed on the second side surface of the second holder, and a third portion disposed on the third side surface of the second holder,
wherein the first coil is disposed on the first portion of the first substrate,
wherein the second coil is disposed on the second portion of the first substrate, and
wherein the third coil is disposed on the third portion of the first substrate.

7. The lens driving device of claim 6, wherein the first substrate comprises a fourth portion disposed between the fourth side surface of the second holder and the first holder, and
wherein the fourth portion of the first substrate comprises a terminal.

8. The lens driving device of claim 7, comprising a second substrate disposed on the base,
wherein the second substrate comprises a body portion disposed on the base and an extended portion extending from the body portion,
wherein the extended portion comprises a first terminal coupled with the terminal of the first substrate,
wherein the body portion comprises a second terminal electrically connected with the first terminal, and
wherein at least a portion of the extended portion is configured to move together with the first holder.

9. The lens driving device of claim 1, comprising a first ball disposed between the base and the first holder.

10. The lens driving device of claim 6, comprising a yoke disposed on the first portion of the first substrate and configured to generate an attractive force with the first magnet.
